# EUROPÄISCHE PATENTSCHRIFT

(11) **EP 3 695 999 B1**
(45) Veröffentlichungstag und Bekanntmachung des Hinweises auf die Patenterteilung: **07.09.2022**
(21) Anmeldenummer: 19157537.2
(22) Anmeldetag: 15.02.2019
(51) Int. Cl.: B60H 1/00, B60P 3/20, B60H 1/32, B62D 33/04, F25D 17/00, F25D 17/06, F25D 19/00

(54) **KOFFERAUFBAU FÜR EIN NUTZFAHRZEUG**
LUGGAGE STRUCTURE FOR A COMMERCIAL VEHICLE
CAISSE POUR UN VÉHICULE UTILITAIRE

(43) Veröffentlichungstag der Anmeldung: 19.08.2020
(73) Patentinhaber: Schmitz Cargobull AG, 48341 Altenberge (DE)
(72) Erfinder: Lünenborg, Stefan, 46325 Borken (DE); Kuhn, Marco, 48691 Vreden (DE); Bulla, Stefan, 46325 Borken (DE)
(74) Vertreter: Cohausz & Florack

(56) Entgegenhaltungen:
- EP-A2- 0 282 051
- EP-B1- 1 122 191
- DE-A1- 2 809 123
- DE-A1-102006 057 599
- DE-B4-102006 057 599
- US-A- 3 792 595
- US-A1- 2009 320 514

## Beschreibung

Die Erfindung betrifft einen Kofferaufbau eines Nutzfahrzeugs. Ein solcher Kofferaufbau umfasst üblicherweise ein Dach, zwei das Dach tragende Seitenwände, die sich üblicherweise in Längsrichtung des Kofferaufbaus erstrecken und daher hier auch "Längsseitenwände" genannt werden, eine die Seitenwände in einem Stirnseitenbereich des Kofferaufbaus verbindende Stirnwand und eine die Seitenwände an einem Rückseitenbereich des Kofferaufbaus verbindende Rückwand. Mit seinem Dach, seinen Seitenwänden, seiner Stirnwand und seiner Rückwand umgrenzt der üblicherweise auf einem von einem Chassis getragenen Boden des Nutzfahrzeugs errichtete Kofferaufbau einen Laderaum, der das jeweilige Transportgut aufnimmt. Dabei ist an einem Kofferaufbau der hier in Rede stehenden Art eine Transportkältemaschine vorgesehen, die über eine Ausblasöffnung temperierte Luft in den Laderaum bläst. Gleichzeitig sind an der dem Laderaum zugeordneten Unterseite des Dachs mindestens zwei Luftleitkanäle angeordnet, deren Eintrittsöffnungen der Transportkältemaschine zugeordnet sind und deren Austrittsöffnungen in Längsrichtung des Laderaums in einem Abstand entfernt von der Transportkältemaschine angeordnet sind, um temperierte Luft in einen von der Ausblasöffnung der Transportkältemaschine entfernten Bereich des Laderaums zu leiten.

Bei Nutzfahrzeugen der hier in Rede stehenden Art handelt es sich um Lastkraftwagen, Anhänger oder Sattelauflieger und desgleichen, die unabhängig von ihrer Ausgestaltung für den Transport von Gütern im Straßenverkehr bestimmt sind. Nutzfahrzeuge mit Kofferaufbauten kommen dabei zum Einsatz, wenn das zu transportierende Gut in besonderer Weise gegenüber Einflüssen aus der Umgebung geschützt werden muss.

Der Kofferaufbau, der aus stabilen Dach-, Seitenwand-, Stirnwand- und Rückwandelementen zusammengesetzt ist, schirmt das Transportgut gegen Temperaturschwankungen, Feuchtigkeit oder sonstige äußere Gegebenheiten ab, durch die das Transportgut beschädigt oder in seiner Qualität beeinflusst werden könnte. Von besonderer Bedeutung sind dabei solche Kofferaufbauten, die mit einer Transportkältemaschine ausgestattet sind, um die im vom Kofferaufbau umgrenzten Laderaum vorhandene Atmosphäre auf einem bestimmten Temperaturniveau zu halten. So werden Kofferaufbauten, an denen eine Transportkältemaschine vorgesehen ist, beispielsweise zum Transport von Tiefkühlkost oder von Frischwaren eingesetzt, die während des Transports zwingend auf einem bestimmten niedrigen Temperaturniveau gehalten werden müssen. Genauso werden Kofferaufbauten mit einer Transportkältemaschine aber auch zum Transport von Waren verwendet, die zwar nicht speziell gekühlt, jedoch bei einer gleichmäßigen Temperatur gehalten werden müssen. In diesem Fall ist die Transportkältemaschine so eingerichtet, dass sie bedarfsweise nicht nur gekühlte, sondern auch erwärmte Luft in den Laderaum bläst.

Der von einem Nutzfahrzeug-Kofferaufbau umschlossene Laderaum weist in der Regel eine längliche, quaderförmige Gestalt auf, deren Stirnwand in normaler Vorwärtsfahrtrichtung des Fahrzeugs gesehen vorne und deren Rückwand am gegenüberliegenden rückwärtigen Ende des Fahrzeugs angeordnet ist. Üblicherweise ist dabei an der Rückwand eine Türanlage vorgesehen, über die die Beladung des Laderaums mit dem Transportgut erfolgt.

Um sicherzustellen, dass sich die in den Laderaum von der Transportkältemaschine eingeblasene Luft über das gesamte Volumen des Laderaums optimal verteilt, sind üblicherweise an dem Dach des Kofferaufbaus innerhalb des Laderaums Luftleitkanäle angeordnet, die den von der Transportkältemaschine temperierten Luftstrom auch in von der Ausblasöffnung der Transportkältemaschine entfernte Bereiche des Laderaums leiten. Diese Funktion ist insbesondere dann von besonderer Bedeutung, wenn, wie bei der überwiegenden Zahl von in der Praxis im Einsatz befindlichen Kofferaufbauten üblich, die Transportkältemaschine mit ihrer Ausblasöffnung an der Stirnwand des Kofferaufbaus angeordnet ist.

Kofferaufbauten, bei denen Luftführungseinrichtungen der voranstehend erläuterten Art vorgesehen sind, sind beispielsweise in der DE 10 2006 057 599 B4, der EP 1 122 191 B1 oder der WO 2014/115024 A1 beschrieben.

Um die aus der wenigstens einen Ausblasöffnung der Transportkältemaschine, hier auch "Kühlluftöffnung" genannt, ausströmende temperierte Luft, insbesondere temperierte Luft, von der Ausblasöffnung wegzuleiten, ist bei Kofferaufbauten, die für den Transport von temperierten Waren vorgesehen sind, neben der Transportkältemaschine häufig wenigstens eine in dem Laderaum angeordnete Luftführungseinrichtung vorgesehen. Diese Luftführungseinrichtung, auch Lufthutze genannt, dient in der Regel dazu, die aus der wenigstens einen Ausblasöffnung der Transportkältemaschine ausströmende temperierte Luft in einen oder mehrere, insbesondere sich entlang des Dachs des Kofferaufbaus erstreckende, Luftleitkanäle zu leiten, über die die temperierte Luft in von der Ausblasöffnung weiter entfernte Bereiche des Laderaums transportiert wird und so im gesamten Laderaum verteilt wird. Auf diese Weise können auch die Bereiche des Laderaums, die nicht in unmittelbarer Nähe zu der wenigstens einen Ausblasöffnung angeordnet sind, effektiv temperiert werden und es kann eine annähernd homogene Temperaturverteilung im Laderaum erreicht werden. Die Luftführungseinrichtung fungiert dann also als die wenigstens eine Ausblasöffnung der Transportkältemaschine und die Luftleitkanäle verbindendes Bindeglied. Unabhängig davon ist unter der Luftführungseinrichtung insbesondere eine solche zu verstehen, die sich höchstens über 50 %, vorzugsweise höchstens über 25 %, insbesondere höchstens über 10 %, der Länge des Kofferaufbaus erstreckt.

Häufig weist die Luftführungseinrichtung wenigstens einen Einlassabschnitt mit wenigstens einer Einlassöffnung und wenigstens einen Auslassabschnitt mit wenigstens einem hinteren Ende auf. Dann kann die aus der wenigstens einen Ausblasöffnung der Transportkältemaschine ausströmende temperierte Luft über die wenigstens eine Einlassöffnung in den wenigstens einen Einlassabschnitt einströmen und von dort zu dem wenigstens einen hinteren Ende des wenigstens einen Auslassabschnitts geleitet werden. Dabei ist mit dem wenigstens einen hinteren Ende des wenigstens einen Auslassabschnitts insbesondere das von der Einlassöffnung abgewandte Ende des Auslassabschnitts gemeint. Im unmontierten Zustand der Luftführungseinrichtung kann das wenigstens eine hintere Ende also ein freies Ende des wenigstens einen Auslassabschnitts darstellen. Unabhängig davon stellt das hintere Ende des wenigstens einen Auslassabschnitts häufig auch das hintere Ende der Luftführungseinrichtung dar, zwingend erforderlich ist dies jedoch nicht.

In dem Einlassabschnitt ist die Luftführungseinrichtung häufig als wenigstens im Wesentlichen umlaufend geschlossener Kanal ausgebildet und nicht nach oben durch das Dach begrenzt. Auf diese Weise kann vermieden werden, dass sich der Strömungsquerschnitt der Kühlluftströmung beim Austritt aus der Ausblasöffnung und Einströmen in den Einlassabschnitt plötzlich stark vergrößert, was zu erhöhten Druckverlusten in der Kühlluftströmung führt. So kann letztlich verhindert werden, dass es entlang des Einlassabschnitts zu signifikanten Volumenstromverlusten der Kühlluftströmung kommt. Eine entsprechende Luftführungseinrichtung, bei der nicht nur der Einlassabschnitt, sondern die Luftführungseinrichtung insgesamt als umlaufend geschlossener Kanal ausgebildet ist, ist beispielsweise aus der WO 2014/176044 A1 bekannt.

Um nicht nur die Strömung der aus der Transportkältemaschine ausströmenden temperierten Luft, sondern auch die Strömung der in die Transportkältemaschine einströmenden zu temperierende Luft in gewünschter Weise zu leiten, weisen die für den Warentransport eingesetzten Kofferaufbauten neben der wenigstens einen Luftführungseinrichtung und den Luftführungskanälen häufig eine sogenannte Zirkulationswand auf. Diese ist typischerweise in Richtung des Laderaums, also in Längsrichtung des Kofferaufbaus, von der Stirnwand beabstandet angeordnet. Dementsprechend bestimmt die Anordnung der Zirkulationswand im Laderaum, bis wohin der Laderaum nach vorne, also in Richtung Stirnwand, mit Gütern beladen werden kann. Aus diesem Grund kann die Ebene, die durch die dem Laderaum bzw. der Rückwand des Kofferaufbaus zugewandte Fläche der Zirkulationswand definiert ist, auch als Anfahrebene verstanden werden, bis an die heran die Ladung in Richtung der Stirnwand gefahren werden kann.

Die Zirkulationswand dient, insbesondere im Zusammenspiel mit den auslassseitig vorgesehenen Luftführungskomponenten, dazu, eine gewünschte Luftzirkulation in dem Laderaum zu erreichen, um so den gesamten Laderaum und somit die zu temperierenden Güter bzw. Ladung effizient kühlen zu können. Hinsichtlich der Luftzirkulation ist in der Regel vorgesehen, dass die aus der Transportkältemaschine als temperierte Luft ausgetretene Luft im Bereich des Dachs über die Ladung hinweg in unterschiedlich weit von der Transportkältemaschine beabstandete Bereiche des Laderaums strömt und sodann von dort unter Aufnahme von Wärme von den zu temperierenden Gütern in Richtung des Bodens und im Bereich des Bodens zur Stirnwand zurück strömt. Dabei kann die Luft im Bereich des Bodens etwa durch Palettenschächte der die Ladung bzw. Güter tragenden Paletten strömen. Im Bereich der Stirnwand wird die aufgewärmte und somit zu temperierende Luft dann typischerweise aus dem Laderaum über wenigstens einen zentralen Luftrückführkanal, der zwischen der Stirnwand und der durch die Zirkulationswand definierten Anfahrebene ausgebildet ist, zu der wenigstens einen Absaugöffnung geleitet, sodass sich ein geschlossener Luftkreislauf ergibt. Dabei erstreckt sich der wenigstens eine zentrale Luftrückführkanal meist wenigstens überwiegend, insbesondere wenigstens im Wesentlichen, in vertikaler Richtung, also einer Richtung senkrecht zu dem Dach bzw. dem Boden des Kofferaufbaus. Diese Ausrichtung des wenigstens einen zentralen Luftrückführkanals ist der typischen Montageposition der Transportkältemaschine und der entsprechenden Anordnung der wenigstens einen Absaugöffnung sowie der angestrebten Luftzirkulation im Laderaum geschuldet.

Zusätzlich zu dem wenigstens einen zentralen Luftrückführkanal ist zwischen der Stirnwand und der Anfahrebene einerseits sowie zwischen der wenigstens einen Seitenwand und wenigstens einer sich wenigstens überwiegend, insbesondere wenigstens im Wesentlichen, in vertikaler Richtung erstreckenden Begrenzung andererseits ein seitlicher Luftrückführkanal ausgebildet. Entsprechend der Ausrichtung der Seitenwand und der wenigstens einen Begrenzung erstreckt sich auch der wenigstens eine seitliche Luftrückführkanal wenigstens überwiegend, insbesondere wenigstens im Wesentlichen, in vertikaler Richtung. Unabhängig davon wird unter dem wenigstens einen seitlichen Luftrückführkanal insbesondere ein solcher verstanden, der eine Breite von wenigstens 5 cm, vorzugsweise wenigstens 10 cm, insbesondere wenigstens 20 cm, und/oder höchstens 100 cm, vorzugsweise höchstens 50 cm, insbesondere höchstens 30 cm aufweist. Dabei ist mit der Breite insbesondere die Erstreckung des wenigstens einen seitlichen Luftrückführkanals in Querrichtung des Kofferaufbaus, also einer Richtung wenigstens im Wesentlichen parallel zum Dach bzw. Boden gemeint.

Bei der wenigstens einen Begrenzung kann es sich insbesondere um eine Begrenzung des wenigstens einen zentralen Luftrückführkanals handeln, dann kann also die wenigstens eine Begrenzung den wenigstens einen zentralen Luftrückführkanal von dem wenigstens einen seitlichen Luftrückführkanal abgrenzen. Es kann sich jedoch auch um eine anderweitige Begrenzung handeln, die jedoch jedenfalls den wenigstens einen seitlichen Luftrückführkanal begrenzt. Unabhängig davon ist unter der wenigstens einen Begrenzung insbesondere eine solche zu verstehen, die sich von der Stirnwand in Richtung des Laderaums erstreckt und/oder wenigstens im Wesentlichen zwischen der Stirnwand und der Anfahrebene angeordnet ist.

Vor dem Hintergrund des Standes der Technik hat sich die Aufgabe gestellt, einen Kofferaufbau zu schaffen, bei dem auf kostengünstige Weise eine optimiert effizientere und kostengünstigere Temperierung des Kofferaufbaus ermöglicht wird und der gleichzeitig flexibel an die jeweiligen Anforderungen, die sich aus unterschiedlichen Aufbautypen oder Betriebsbedingungen ergeben, angepasst werden kann.

Die Erfindung hat diese Aufgabe durch einen Kofferaufbau gelöst, der mindestens die in Anspruch 1 angegebenen Merkmale besitzt.

Vorteilhafte Ausgestaltungen der Erfindung sind in den abhängigen Ansprüchen angegeben und werden wie der allgemeine Erfindungsgedanke nachfolgend im Einzelnen erläutert.

Bei einem erfindungsgemäßen Kofferaufbau eines Nutzfahrzeugs
- umgrenzt der Kofferaufbau somit mit einem Dach, mit zwei das Dach tragenden, sich in Längsrichtung des Kofferaufbaus erstreckenden Längsseitenwänden, mit einer die Längsseitenwände in einem Stirnseitenbereich des Kofferaufbaus verbindenden Stirnwand und mit einer die Längsseitenwände an einem Rückseitenbereich des Kofferaufbaus verbindenden Rückwand einen Laderaum,
- wobei an dem Kofferaufbau eine Transportkältemaschine vorgesehen ist, die über eine Ausblasöffnung temperierte Luft in den Laderaum bläst,
- wobei an der dem Laderaum zugeordneten Unterseite des Dachs mindestens ein Luftleitkanal vorgesehen ist, der sich längs des Dachs erstrecktund jeweils durch ein Hüllelement gebildet ist, das an dem Dach gehalten ist und eine der Ausblasöffnung der Transportkältemaschine zugeordnete Eintrittsöffnung sowie eine am anderen Ende des jeweiligen Luftleitkanals ausgebildete Austrittsöffnung besitzt,
   und
- wobei zwischen der Ausblasöffnung und den Eintrittsöffnungen der Luftleitkanäle eine Luftführungseinrichtung vorgesehen ist, die den von der Transportkältemaschine durch die Ausblasöffnung ausgeblasenen temperierten Luftstrom zu einem der Luftleitkanäle leitet, indem sie einen Einlassabschnitt, der an der Ausblasöffnung der Transportkältemaschine sitzt und über den der aus der Ausblasöffnung ausgeblasene temperierte Luftstrom in die Luftführungseinrichtung eintritt, und einen Verstellabschnitt umfasst, an dessen vom Einlassabschnitt abgewandten Ende ein Auslassabschnitt mit einer Auslassöffnung ausgebildet ist, an die die Eintrittsöffnung des jeweiligen Luftleitkanals angeschlossen ist, wobei der Verstellabschnitt zum Ausgleich eines Versatzes zwischen der Position der der Eintrittsöffnung des jeweiligen Luftleitkanals und der Position der Ausblasöffnung der Transportkältemaschine flexibel, gelenkig und/oder teleskopierbar ausgebildet ist, so dass nach der Befestigung des Einlassabschnitts der Luftführungseinrichtung an der Ausblasöffnung der Transportkältemaschine der Auslassabschnitt mit seiner Auslassöffnung an die Eintrittsöffnung des zugeordneten Luftleitkanals heranführbar ist.

Bei einem erfindungsgemäßen Kofferaufbau ist somit mindestens ein Luftleitkanal vorhanden, der in an sich bekannter Weise durch ein Hüllelement gebildet ist, das sich längs des Dachs des Kofferaufbaus erstreckt und dabei durch geeignete Mittel an dem Dach gehalten ist.

Vorzugsweise verlaufen dabei unter dem Dach eines erfindungsgemäßen Kofferaufbaus mindestens zwei separate Luftleitkanäle. Dies erlaubt es, die über die Luftleitkanäle in den Laderaum eingetragenen Luftströme gezielt in unterschiedliche Bereiche des Laderaums zu bringen, an denen sich im Laderaum eine für die optimale Flutung des Laderaums mit temperierter Luft am besten geeignete Luftströmung ergibt.

Dabei können die Hüllelemente, die den erfindungsgemäß jeweils vorgesehenen Luftleitkanal bzw. die erfindungsgemäß jeweils vorgesehenen Luftleitkanäle bilden, unter das Dach des Kofferaufbaus gespannt sein. Hierzu können die jeweils vorgesehenen Hüllelemente aus Planenmaterial oder einem anderen textilen Material gebildet sein. Dies erlaubt nicht nur eine kostengünstige Herstellung, sondern auch eine einfache bedarfsweise Montage und Demontage.

Für ihre Befestigung an der dem Laderaum zugeordneten Unterseite des Dachs können die den jeweils vorhandenen Luftleitkanal oder die jeweils vorhandenen Luftleitkanäle bildenden Hüllelemente in an sich bekannter Weise jeweils wenigstens zwei in Längsrichtung voneinander beabstandete Montageelemente zum Montieren des jeweiligen Luftführungskanals am Dach und wenigstens ein Abspannelement zum Halten an den wenigstens zwei Montageelementen umfassen.

Als besonders vorteilhaft erweist es sich dabei, wenn das wenigstens eine Abspannelement in Längsrichtung des Abspannelements zwischen den wenigstens zwei Montageelementen abgespannt gehalten ist und das wenigstens eine Hüllelement zwischen den wenigstens zwei Montageelementen von dem wenigstens einen Abspannelement entgegen der Schwerkraft gehalten ist.

Durch die bei dieser erfindungsgemäßen Ausgestaltung vorgesehene Verwendung des Abspannelements, das in Längsrichtung des Abspannelements und damit insbesondere wenigstens im Wesentlichen in der Längsrichtung des Luftleitkanals abgespannt ist, kann der Luftleitkanal über sehr wenige Montagestellen am Dach montiert werden. Das Hüllelement wird dann bedarfsweise zwischen den wenigstens zwei Montageelementen einzig von dem abgespannten Abspannelement gegenüber der Schwerkraft unter dem Dach gehalten. Dabei ist es grundsätzlich möglich, dass die wenigstens zwei Montageelemente als unterschiedliche Abschnitte einer gemeinsamen Montageeinrichtung ausgebildet sind. Da sich der wenigstens eine Luftleitkanal aber regelmäßig über eine nicht unerhebliche Länge in Längsrichtung des Kofferaufbaus erstrecken wird, kommen dann meist auch nur verhältnismäßig lange Montageeinrichtungen in Frage, die wegen ihres höheren Aufwands regelmäßig weniger bevorzugt sein dürften.

Zudem erlaubt das Halten des Hüllelements über das wenigstens eine Abspannelement und die wenigstens zwei Montageelemente die Verwendung eines Hüllelements aus einem sehr leichten und flexiblen Material, was nicht nur die Montage vereinfacht, sondern auch zu einer Kosteneinsparung führen kann. Dünne und flexible Materialien für das Hüllelement sind auch deshalb von Vorteil, weil so im Laderaum sogenannte Quertrennwände aufgerichtet werden können. Diese Quertrennwände dienen dem Unterteilen des Laderaums des Kofferaufbaus in der Längsrichtung in mehrere Teilladeräume. In diesen können unterschiedliche Temperaturen bereitgestellt werden, etwa für den Fall, dass temperaturempfindliche Güter und nicht temperaturempfindliche Güter gemeinsam transportiert werden sollen. Dann muss beispielsweise nur einer der Teilladeräume gekühlt werden oder es müssen unterschiedliche Teilladeräume gekühlt werden. In diesen Fällen temperiert die Transportkältemaschine bevorzugt nur den vorderen Teilladeraum. Ein hinterer Laderaum bleibt dagegen untemperiert oder wird separat durch eine separate Einrichtung, insbesondere durch einen sogenannten Deckenverdampfer, gekühlt.

Aus diesem Grunde ist es meist wünschenswert, wenn die Quertrennwände die angrenzenden Teilladeräume möglichst luftdicht gegeneinander abschließen. Dies ist aber nur dann möglich, wenn etwaige Luftleitkanäle am Dach eine luftdichte Anlage der Quertrennwand am Dach nicht behindern. Da vorliegend die Luftleitkanäle wenigstens abschnittsweise nur aus wenigstens einem Abspannelement und einem Hüllelement gebildet werden können, erfordert das Errichten einer Quertrennwand in diesem Bereich keine Demontage des Luftleitkanals. Dies ist noch umso mehr der Fall, wenn das wenigstens eine Abspannelement sehr dünn ausgeführt werden kann.

Nicht zuletzt kann die Montage des Hüllelements über das Abspannelement auch eine leichte Demontage des Hüllelements erlauben, was die Reinigung des Luftleitkanals erheblich erleichtern kann. Eine leichte Reinigung ist insbesondere für den Transport von Lebensmitteln von besonderer Bedeutung. Außerdem ist es günstig, wenn die Reinigung des Luftleitkanals einfach, problemlos und überall vom Fahrer selbst durchgeführt werden kann.

Unter einem Abspannen des Abspannelements wird vorliegend verstanden, dass das Abspannelement zwischen den wenigstens zwei Montageelementen gedehnt, also wenigstens geringfügig gelängt wird. So übt das wenigstens eine Abspannelement infolge der Dehnung eine Rückstellkraft auf die wenigstens zwei Montageelemente aus, die verhindern, dass sich das Abspannelement wieder vollständig zusammenzieht. Da regelmäßig nicht gewünscht sein wird, dass das Abspannelement zwischen den wenigstens zwei Abspannelementen nach unten durchhängt, wird es bevorzugt sein, ein Abspannelement zu verwenden, das sich auch unter sehr großen Zugkräften nur sehr wenig in seiner Länge dehnt.

Den Montageelementen kommt mithin eine doppelte Funktion zu, nämlich das Abspannen des Abspannelements und das Halten des Abspannelements zusammen mit dem Hüllelement. In diesem Zusammenhang ist es nicht unbedingt von Bedeutung, ob die Montageelemente als separate Bauteile ausgebildet werden. Die Montageelemente können auch Teil einer gemeinsamen Montageeinrichtung, etwa in Form einer Montageschiene, sein. Außerdem ist es auch denkbar, dass wenigstens ein Montageelement aus mehreren separaten Bauteilen besteht, die direkt miteinander verbunden sein können, aber nicht müssen. Es kann beispielsweise auch vorgesehen sein, dass die einzelnen Bauteile wenigstens eines Montageelements separat und bedarfsweise voneinander beabstandet am Dach festgelegt sind. Wenigstens ein Montageelement kann auch in ein weiteres Bauelement integriert sein, und zwar insbesondere in ein sich an den Luftleitkanal anschließendes Bauelement. So kann dem Luftleitkanal beispielsweise eine Luftleiteinrichtung zum Leiten von Luft in den Luftleitkanal vorgeschaltet sein, wobei dann bedarfsweise das Montageelement in die Luftleiteinrichtung integriert ist. Das Montageelement muss also nicht zwingend als separates Bauelement vorgesehen werden. Das Montageelement kann auch in ein anderes Bauelement integriert sein oder es bildet bedarfsweise das gesamte andere Bauelement das wenigstens eine Montageelement. Welcher dieser beiden genannten Fälle vorliegt, wird dabei insbesondere durch die Art und Weise bestimmt, in der das weitere Bauelement im Kofferaufbau montiert ist

Das vom wenigstens einen Abspannelement gehaltene Hüllelement dient der Begrenzung des Luftleitkanals, so dass die temperierte Luft entlang des Luftleitkanals in einen hinteren Bereich des Kofferaufbaus geleitet werden kann. Das Hüllelement kann dabei so ausgelegt sein, dass es den Luftleitkanal nur teilweise begrenzt, und zwar nach unten, also wenigstens überwiegend in den vom Dach abgewandten Richtungen. Hier ist es demnach nicht erforderlich, auf bestimmte Richtungen einzugehen bzw. bestimmte Richtungen exakt zu definieren. Dies gilt auch vor dem Hintergrund, dass bereichsweise Öffnungen in dem Hüllelement zum Austreten von temperierter Luft vorgesehen sein können. Grundsätzlich ist der Luftleitkanal jedoch durch das Hüllelement vom Dach in eine zum Ladeboden des Laderaums oder wenigstens nach unten gerichtete Blickrichtung gesehen begrenzt.

Bei einer ersten Ausgestaltung des Kofferaufbaus ist zugeordnet zu einander gegenüberliegenden Längsseite des Luftleitkanals jeweils wenigstens ein Abspannelement vorgesehen, das in Längsrichtung des jeweiligen Abspannelements zwischen jeweils wenigstens zwei Montageelementen abgespannt gehalten ist. So kann der Luftleitkanal an beiden Längsseiten einfach und vorteilhaft gehalten werden. Die zuvor beschriebenen Vorteile kommen mithin besonders zum Tragen. In diesem Zusammenhang bietet es sich demnach weiter an, wenn das wenigstens eine Hüllelement an einander gegenüberliegenden Längsseiten des Luftleitkanals von diesen Längsseiten zugeordneten Abspannelementen gegenüber der auf das Hüllelement einwirkenden Schwerkraft gehalten ist. Die entsprechenden Abspannelemente sind dann an den jeweiligen Längsseiten des Luftleitkanals jeweils zwischen wenigstens zwei Montageelementen entgegen der Schwerkraft gehalten. Hierdurch werden eine einfache Montage, ein leichtes Handling und eine flexible Nutzung erreicht.

Um eine möglichst zweckmäßige Verteilung der temperierten Luft zu erreichen, kann es sich anbieten, wenn sich das wenigstens eine Abspannelement zwischen den wenigstens zwei Montageelementen wenigstens im Wesentlichen durchgängig vom Dach beabstandet erstreckt. Auf diese Weise wird die Montage des Luftleitkanals in diesem Bereich unabhängig vom Dach. Es sind also wenigstens abschnittsweise keine zusätzlichen Montagevorrichtungen am Dach vorgesehen, welche das Errichten einer Quertrennwand behindern könnten. Wenn durch das Errichten einer Quertrennwand der Luftleitkanal im Bereich der Quertrennwand flach gegen das Dach gedrückt wird, kann die temperierte Luft dennoch vor der Quertrennwand bedarfsweise seitlich zwischen dem Luftleitkanal und dem Dach ausströmen. Dabei kann es für eine abschnittsweise vom Dach unabhängige Montage des Luftleitkanals grundsätzlich zweckmäßig sein, wenn der Abstand des wenigstens einen Abspannelements zwischen den wenigstens zwei Montageelementen vom Dach wenigstens im Wesentlichen durchgängig wenigstens 0,5 cm, vorzugsweise wenigstens 1 cm, insbesondere wenigstens 2 cm, beträgt und/oder wenigstens im Wesentlichen durchgängig höchstens 2,5 cm, vorzugsweise höchstens 3 cm, insbesondere höchstens 4 cm, beträgt. Diese Abstände verstehen sich dabei insbesondere in einer vertikalen Richtung. Der Luftleitkanal ist somit frei vom Dach und unabhängig vom Dach und/oder sehr nahe am Dach vorgesehen. Dies lässt eine sehr hohe Ladehöhe zu und erlaubt dennoch eine zweckmäßige Verteilung der temperierten Luft im Laderaum.

Für eine zuverlässige Montage eines in Längsrichtung des Luftleitkanals abschnittsweise nur geringfügig durchhängenden Luftleitkanals bietet es sich besonders an, wenn das wenigstens eine Abspannelement ein Seil, insbesondere ein Stahlseil, ein Band und/oder Gurt ist. Dieses Abspannelement kann zudem sehr dünn in vertikaler Richtung des Kofferaufbaus ausgeführt werden. Dies erleichtert das Errichten einer Quertrennwand ohne vorherige, wenigstens partielle, Demontage des Luftleitkanals. Um die Dehnung des Abspannelements beim Abspannen des Abspannelements zwischen den wenigstens zwei Montageelementen zu verringern und die Stabilität des Abspannelements zu erhöhen, ist es zudem zweckmäßig, wenn das Band und/oder der Gurt beispielsweise Drähte oder Drahtseile aufweist. Alternativ oder zusätzlich kann das Band und/oder der Gurt zu diesem Zweck auch geflochten und/oder gewebt sein.

Damit das Abspannelement einfach und zweckmäßig gespannt und/oder entspannt werden kann, bietet es sich an, wenn eine Spanneinrichtung zum Spannen und/oder Entspannen des wenigstens einen Abspannelements zwischen den wenigstens zwei Montageelementen vorgesehen ist. Die Möglichkeit, das Abspannelement spannen und/oder entspannen zu können, erlaubt eine Montage und/oder Demontage direkt im Kofferaufbau, was die Handhabung des Luftleitkanals vereinfacht. Insbesondere kann der Luftleitkanal bedarfsweise vom Fahrer selbst wenigstens teilweise demontiert und anschließend wieder montiert werden, um den Luftleitkanal von Zeit zu Zeit zu reinigen. Dabei ist es besonders zweckmäßig, wenn die Spanneinrichtung einem Montageelement zugeordnet ist, da das Abspannelement zwischen wenigstens zwei Montageelementen abgespannt wird. Besonders zweckmäßig kann es dabei sein, wenn die Spanneinrichtung in das Montageelement integriert ist oder umgekehrt. Es ist grundsätzlich aber auch möglich, die Spanneinrichtung und das Montageelement als separate Bauteile auszubilden und diese dann bedarfsweise separat voneinander sowie bedarfsweise beabstandet voneinander am Dach festzulegen.

Das Spannen und Entspannen des Abspannelements lässt sich einfach auch von ungeschulten Fahrern bewerkstelligen, wenn die wenigstens eine Spanneinrichtung eine, insbesondere ortsfeste, Spannschraube aufweist. Mit dieser kann dann direkt oder indirekt ein Spannschlitten kämmen, der bevorzugt in der Längsrichtung des Abspannelements verschiebbar an der Spanneinrichtung gehalten und mit dem wenigstens einen Abspannelement verbunden sein wird. So kann über das Drehen einer Spannschraube der Spannschlitten in der Längsrichtung des Abspannelements hin und her verstellt werden, um das Abspannelement zu spannen und/oder zu entspannen. Die entsprechende Ausgestaltung der Spanneinrichtung erlaubt zudem, die Längsachse der Spannschraube und die Längserstreckung des Abspannelements wenigstens im Wesentlichen parallel aber voneinander senkrecht zur Längserstreckung des Abspannelements zu beabstanden. Auf diese Weise kann die Zugänglichkeit der Spannschraube verbessert und das Handling der Spannschraube vereinfacht werden.

Um den Luftleitkanal und dessen Handhabung weiter zu vereinfachen, kann das ihn bildende Hüllelement, wie schon erwähnt, aus einem Tuch und/oder einer Plane gebildet sein. Dies kann sich zudem günstig auf die Herstellungskosten des Luftleitkanals auswirken. Alternativ oder zusätzlich bietet es sich aus denselben Gründen an, wenn das Hüllelement wenigstens im Wesentlichen aus einem textilen Material, insbesondere einem Gewebe, und/oder aus einem Kunststoff gebildet ist.

Damit das Hüllelement durch ein wiederholtes Spannen und Entspannen nicht nennenswert in Mitleidenschaft gezogen wird, wodurch sich die Langlebigkeit des Hüllelements steigern lässt, kann das wenigstens eine Abspannelement wenigstens abschnittsweise in einer Tasche aufgenommen sein. Die Tasche erstreckt sich zu diesem Zweck vorzugsweise wenigstens im Wesentlichen längs zum Luftleitkanal. Alternativ oder zusätzlich ist es zweckmäßig, wenn die wenigstens eine Tasche an gegenüberliegenden Längsenden offen ist, um an den Längsenden das Abspannelement in die Tasche eintreten bzw. austreten lassen zu können. So wird das Spannen und Entspannen des Abspannelements wenigstens im Wesentlichen von dem Hüllelement entkoppelt. In der Umfangsrichtung kann die Tasche jedoch wenigstens abschnittsweise vollständig geschlossen sein und das Abspannelement in diesem Abschnitt vollständig aufnehmen.

Der Luftleitkanal kann in Richtung des Dachs wenigstens abschnittsweise offen sein, was die Ausgestaltung und die Reinigung des Luftleitkanals vereinfachen kann. Alternativ oder zusätzlich kann der Luftleitkanal zusammen mit dem Dach wenigstens einen sich wenigstens abschnittsweise in Längsrichtung des Luftleitkanals erstreckenden Spalt zum seitlichen Ausströmen von temperierter Luft bilden. Der Luftleitkanal weist dann an wenigstens einer Längsseite eine Öffnung auf, die zusammen mit dem Dach einen Spalt bildet, durch den temperierte Luft seitlich aus dem Luftleitkanal austreten kann, um so eine möglichst gleichmäßige Temperaturverteilung im Laderaum zu erreichen. Dabei lassen sich die seitlich austretende temperierte Luftmenge und die Geschwindigkeit der seitlich austretenden temperierten Luft durch die Breite, also vorliegend die Höhe des Spalts zwischen dem Dach und dem Rand des Luftleitkanals, beeinflussen. Es hat sich dabei gezeigt, dass bei den zuvor beschriebenen, bevorzugten Abständen des wenigstens einen Abspannelements vom Dach eine zweckmäßige Kühlung des Laderaums über dessen gesamte Längserstreckung erreicht werden kann. Eine gleichmäßige Temperaturverteilung lässt sich grundsätzlich einfach erreichen, wenn der Luftleitkanal nach oben durch das Dach geschlossen wird. Nach unten kann der Luftleitkanal dann durch das Hüllelement geschlossen sein.

Alternativ oder zusätzlich kann der Luftleitkanal in Richtung des Dachs aber wenigstens abschnittsweise wenigstens im Wesentlichen geschlossen ausgebildet sein, und zwar bedarfsweise durch ein umlaufend vorgesehenes Hüllelement. Dann kann die Leitung der temperierten Luft wenigstens im Wesentlichen unabhängig von dem Dach erfolgen, wodurch ein unerwünschtes Erwärmen der temperierten Luft über das Dach vermieden werden kann. Es kann so auch sichergestellt werden, dass der Strömungsquerschnitt des Luftleitkanals für die temperierte Luft nicht nennenswert davon abhängt, ob der Luftleitkanal in dem vorbestimmten Abstand von dem Dach montiert ist oder nicht. Alternativ oder zusätzlich kann der Luftleitkanal entlang der Längserstreckung des Luftleitkanals seitliche Öffnungen aufweisen, um über diese Öffnungen temperierte Luft seitlich ausströmen zu lassen. Hierdurch kann eine gleichmäßige Temperaturverteilung im Laderaum sichergestellt werden.

Um den Druck der temperierten Luft beim Durchströmen des Luftleitkanals zu erhöhen oder zu vermeiden, dass der Luftleitkanal beim Beladen des Kofferaufbaus mit einem Fahrzeug oder der Ladung angefahren wird, was zu erheblichen Beschädigungen des Luftleitkanals führen kann, kann der freie Strömungsquerschnitt des Luftleitkanals dem hinteren freien Ende des Luftleitkanals zugeordnet, sich verjüngend ausgebildet sein. Dabei verjüngt sich der Strömungsquerschnitt des Luftleitkanals vorzugsweise so, dass der Luftleitkanal in Richtung des hinteren Endes breiter und flacher wird. Aus strömungsdynamischer Sicht ist es grundsätzlich bevorzugt, wenn sich der Strömungsquerschnitt des Luftleitkanals senkrecht zur Längserstreckung und damit senkrecht zur Strömungsrichtung der temperierten Luft verjüngt. Wenn das untere Ende des Luftleitkanals im Bereich des hinteren Endes des Luftleitkanals höher angeordnet ist als in einem vom hinteren Ende des Luftleitkanals beabstandeten vorderen oder mittleren Bereich, kann eine bevorzugte Strömung der temperierten Luft erreicht werden und es kann vermieden werden, dass der Luftleitkanal beim Be- und Entladen durch Kontakt mit Fahrzeugen oder Ladung beschädigt wird.

Damit auf einfache Weise ein flacheres und/oder sich verjüngendes Ende des Luftleitkanals bereitgestellt werden kann, kann das Hüllelement im Bereich des hinteren Endes des Luftleitkanals in wenigstens einem seitlichen Randbereich um einen Abstandshalter herumgeführt sein, der eine entsprechende Formgebung des Luftleitkanals erzwingt. Durch das Herumführen des Hüllelements um den Abstandshalter wird die Breite des Luftleitkanals oberhalb des Abstandshalters schmaler als wenigstens abschnittsweise im Bereich des wenigstens einen Abstandshalters, und zwar jeweils am Ende des Luftleitkanals, wo der Abstandshalter angeordnet ist. Alternativ oder zusätzlich wird das untere Ende des Luftleitkanals im Bereich des Abstandshalters, mithin insbesondere im Bereich des entsprechenden hinteren Endes des Luftleitkanals, wenigstens abschnittweise höher angeordnet sein als in einem vom wenigstens einen Abstandshalter in Längsrichtung des Luftleitkanals beabstandeten Bereich. Alternativ zu dem wenigstens einen Abstandshalter könnte auch die Breite des Hüllelements am hinteren Ende reduziert werden. Um die Herstellungskosten für das Hüllelement zu reduzieren, bietet es sich jedoch grundsätzlich an, wenn dieses über seine gesamte Längserstreckung wenigstens im Wesentlichen konstante Abmessungen aufweist. Die Abmessungen müssen jedoch nicht unbedingt völlig konstant sein. So kann es zum seitlichen Ausblasen von temperierter Luft oder zur Montage des Hüllelements zweckmäßig sein, wenn abschnittsweise Aussparungen an dem Hüllelement vorgenommen werden, die eine lokale Abweichung von den Abmessungen des Hüllelements darstellen.

Das hintere Ende des Luftleitkanals kann so weit verjüngt sein, dass am hinteren Ende des Luftleitkanals lediglich ein Spalt zwischen dem Hüllelement und dem Dach verbleibt, der in etwa so hoch ist wie der wenigstens eine Spalt an wenigstens einer Längsseite des Luftleitkanals zwischen dem Hüllelement und dem Dach. Das hintere Ende kann aber bedarfsweise auch vollkommen geschlossen sein, so dass die temperierte Luft ausschließlich an wenigstens einer Längsseite des Luftleitkanals ausströmt. Insbesondere im Falle eines vollständig geschlossenen hinteren Endes des Luftleitkanals kann auch auf eine Verjüngung des hinteren Abschnitts des Luftleitkanals verzichtet werden. Das hintere Ende ist bei einem wenigstens teilweisen Verschließen bedarfsweise nicht hauptsächlich für das Ausblasen von temperierter Luft verantwortlich.

Besonders einfach für die Montage des Luftleitkanals ist es, wenn der wenigstens eine Abstandshalter in das dem hinteren Ende des Luftleitkanals zugeordnete wenigstens eine Montageelement integriert ist. So müssen nicht mehrere separate Bauteile bedarfsweise separat voneinander am Dach montiert werden. Außerdem kann so die Montage des Hüllelements vereinfacht werden. Dies gilt insbesondere, wenn das wenigstens eine Montageelement im Bereich des Abstandshalters einen Halter für das Abspannelement aufweist. So wird das Hüllelement einfach und zuverlässig so montiert, dass der Abstandshalter seine Funktion erfüllen kann. Das Montageelement ist dabei vorzugsweise in einer gemeinsamen Ebene mit dem Abstandshalter senkrecht zur Längserstreckung des Luftleitkanals vorgesehen. Auf diese Weise lässt sich zuverlässig verhindern, dass sich das Hüllelement versehentlich von dem wenigstens einen Abstandshalter lösen kann.

Unabhängig davon kann das Abspannelement an wenigstens einem hinteren Montageelement wenigstens in der Längsrichtung des Abspannelements, in der Längsrichtung des Luftleitkanals, in der Schwerkraftrichtung und/oder zu wenigstens einer Längsseite des Luftleitkanals formschlüssig gehalten sein. Der Formschluss in der Längsrichtung des Luftleitkanals ermöglicht ein einfaches Abspannen des Abspannelements. Wenn der Formschluss zudem in der Schwerkraftrichtung und wenigstens im Wesentlichen senkrecht hierzu zur Seite vorgesehen ist, kann das Abspannelement zuverlässig in Position gehalten werden. Um das Abspannelement auch in einem mittleren Bereich zu halten und/oder zu stützen, kann das Abspannelement an wenigstens einem mittleren Montageelement in der Schwerkraftrichtung und/oder zu wenigstens einer Längsseite des Luftleitkanals formschlüssig gehalten sein. Wenn das Abspannelement in all diesen Richtungen von dem mittleren Montageelement gehalten ist, wird der Luftleitkanal zuverlässig in Position gehalten. Das Abspannelement kann alternativ oder zusätzlich an wenigstens einem vorderen Montageelement wenigstens in der Längsrichtung des Abspannelements, in der Längsrichtung des Luftleitkanals, in der Schwerkraftrichtung und/oder zu wenigstens einer Längsseite des Luftleitkanals formschlüssig gehalten sein. Hier ermöglicht der Formschluss in der Längsrichtung des Luftleitkanals analog zum hinteren Montageelement ein einfaches Abspannen des Abspannelements. Wenn der Formschluss zudem in der Schwerkraftrichtung und wenigstens im Wesentlichen senkrecht hierzu zur Seite vorgesehen ist, kann das Abspannelement in einem vorderen Bereich sehr zuverlässig in Position gehalten werden.

Kostengünstig und zweckmäßig hinsichtlich einer thermischen Isolierung wird es regelmäßig sein, wenn das wenigstens eine Montageelement aus Kunststoff gebildet ist. Das wenigstens eine Montageelement wird zudem bevorzugt am Dach verschraubt sein, weil dies die Montage des Luftleitkanals stark vereinfacht. Um eine Stützung und Positionierung des Abspannelements in einem mittleren Abschnitt des Luftleitkanals in zweckmäßiger Weise zu erreichen, kann ein mittleres Montageelement in der Längsrichtung des Abspannelements voneinander beabstandete und zu entgegengesetzten Längsseiten des Kanals hin geöffnete Hakenelemente aufweisen. Das Abspannelement kann dann in jedes der Hakenelemente von einer anderen Seite eingeführt und dennoch in jeder dieser entsprechenden Richtungen formschlüssig gehalten werden.

Wenn der Luftleitkanal mit seinem vorderen Ende mit einer Luftleiteinrichtung zum Leiten von temperierter Luft von der Transportkältemaschine zum wenigstens einen Luftleitkanal verbunden ist, kann eine bevorzugte Strömung der temperierten Luft in Längsrichtung des Kofferaufbaus bereitgestellt werden. Unnötige Druckverluste können auf diese Weise beispielsweise vermieden werden. Um weitere Synergien zu nutzen, bietet es sich grundsätzlich an, wenn das vordere Montageelement das vordere Ende des Luftleitkanals und zusätzlich noch das hintere Endes der Luftleiteinrichtung am Dach des Kofferaufbaus hält. Zusätzliche Montageelemente für die Montage des hinteren Endes der Luftleiteinrichtung sind so bedarfsweise entbehrlich. Das vordere Ende des Luftleitkanals und das hintere Ende der Luftleiteinrichtung können mithin über das gemeinsame Montageelement am Dach des Kofferaufbaus montiert sein.

Zusätzlich zu den durch die voranstehend erläuterten Merkmale und Ausgestaltungen eines erfindungsgemäßen Kofferaufbaus erzielten Vorteile lässt sich bei einem erfindungsgemäßen Kofferaufbau die Luftführung an die jeweiligen räumlichen Gegebenheiten und Leistungsanforderungen durch die erfindungsgemäß vorgesehene Luftführungseinrichtung mit ihren erfindungsgemäß hinsichtlich der Position seiner dem jeweiligen Luftleitkanal zugeordneten Austrittsöffnung variierbarem Verstellabschnitt anpassen.

Mittels des wenigstens einen erfindungsgemäß vorgesehenen Verstellabschnitts kann das wenigstens eine hintere mit der Anschlussöffnung für den Luftleitkanal versehene Ende des wenigstens einen Auslassabschnitts, das im Nachfolgenden kurz als das wenigstens eine hintere Ende bezeichnet wird, relativ zu der wenigstens einen Einlassöffnung verstellt werden, wenn sich die Luftführungseinrichtung in einem teilmontierten Zustand befindet. Das Verstellen des wenigstens einen hinteren Endes erfolgt dabei zwischen wenigstens zwei Leitstellungen, die jeweils das Leiten der temperierten Luft von der wenigstens einen Einlassöffnung zu dem wenigstens einen hinteren Ende ermöglichen, aber auf unterschiedlichem Wege oder auf unterschiedliche Weise. So kann bei der Montage der Luftführungseinrichtung in dem Laderaum die Relativstellung des wenigstens einen hinteren Endes zur wenigstens einen Einlassöffnung an die Position der wenigstens einen Ausblasöffnung und die Lage des Bereichs, zu dem die temperierte Luft mittels der Luftführungseinrichtung geleitet werden soll, angepasst werden. Die Anzahl der bei der Fertigung der Kofferaufbauten benötigten verschiedenen Arten an Luftführungseinrichtungen wird so verringert. Dies führt wiederum zur Reduzierung des bei der Herstellung des Kofferaufbaus entstehenden Logistikaufwands und zu verringerten Herstellungskosten.

Dabei kommt es hinsichtlich des Verstellens des wenigstens einen hinteren Endes zwischen den wenigstens zwei Leitstellungen auf eine Veränderung der absoluten Stellung des wenigstens einen hinteren Endes nicht an, sondern lediglich auf die Veränderung der relativen Stellung des wenigstens einen hinteren Endes gegenüber der wenigstens einen Einlassöffnung. Mithin kann ein Verstellen des wenigstens einen hinteren Endes gegenüber der wenigstens einen Einlassöffnung zwischen den wenigstens zwei Leitstellungen im Sinne der Erfindung auch erfolgen, indem bei nicht veränderter absoluter Stellung des wenigstens einen hinteren Endes im Laderaum lediglich die absolute Stellung der wenigstens einen Einlassöffnung im Laderaum verändert wird.

Um das Verstellen des wenigstens einen hinteren Endes gegenüber der wenigstens einen Einlassöffnung mittels des wenigstens einen Verstellabschnitts auf einfache und kostengünstige Weise zu ermöglichen, kann der wenigstens eine Verstellabschnitt flexibel ausgebildet sein. Die Flexibilität des Verstellabschnitts kann dann ein Krümmen bzw. Biegen, Strecken und/oder Stauchen des Verstellabschnitts erlauben. Damit der Verstellabschnitt eine entsprechende Flexibilität bereitstellen kann, bietet es sich an, wenn der wenigstens eine flexibel ausgebildete Verstellabschnitt wenigstens im Wesentlichen aus einem, insbesondere elastomeren, Kunststoff gebildet ist.

Alternativ oder zusätzlich zu einer flexiblen Ausgestaltung kann der wenigstens eine Verstellabschnitt gelenkig, beispielsweise als durchströmbares Kugelgelenk, ausgebildet sein. Dann kann mittels des Verstellabschnitts ein Verschwenken des hinteren Endes des wenigstens einen Auslassabschnitts gegenüber der wenigstens einen Einlassöffnung erfolgen. Dabei bietet es sich hinsichtlich einer hohen Lebensdauer des wenigstens einen gelenkig ausgebildeten Verstellabschnitts an, wenn dieser aus einem, insbesondere thermoplastischen, Kunststoff und/oder einem metallischen Werkstoff gebildet ist.

Schließlich kann der wenigstens eine Verstellabschnitt alternativ oder zusätzlich teleskopierbar ausgebildet sein, sodass der Verstellabschnitt ein Verschieben des hinteren Endes des wenigstens einen Auslassabschnitts gegenüber der wenigstens einen Einlassöffnung ermöglicht. Dabei kann die Teleskopfunktion des Verstellabschnitts realisiert werden, indem der wenigstens eine Verstellabschnitt zwei gegeneinander, insbesondere ineinander, verschiebbare Teile aufweist. Unabhängig davon kann eine hohe Lebensdauer des wenigstens einen teleskopierbar ausgebildeten Verstellabschnitts gewährleistet werden, wenn dieser aus einem, insbesondere thermoplastischen, Kunststoff und/oder einem metallischen Werkstoff gebildet ist.

Unter einem teilmontierten Zustand der Luftführungseinrichtung im Laderaum wird im Sinne der Erfindung insbesondere ein Zustand verstanden, in dem die Luftführungseinrichtung zwar wenigstens teilweise in dem Laderaum, insbesondere an dem Dach oder der Transportkältemaschine, befestigt ist, ein Verstellen des wenigstens einen hinteren Endes gegenüber der wenigstens einen Einlassöffnung zwischen den wenigstens zwei Leitstellungen aber dennoch möglich ist. Im montierten Zustand der Luftführungseinrichtung in dem Laderaum kann das Verstellen des wenigstens einen hinteren Endes zwischen den wenigstens zwei Leitstellungen, beispielsweise aufgrund zusätzlich gefügter Montageverbindungen, dann wenigstens teilweise blockiert sein. Zwingend erforderlich ist dies jedoch nicht.

Bei einer ersten besonders bevorzugten Ausgestaltung des Kofferaufbaus ist die Luftführungseinrichtung derart in dem Kofferaufbau montiert, dass die Projektion der wenigstens einen Einlassöffnung und die Projektion der wenigstens einen Ausblasöffnung jeweils in Längsrichtung des Kofferaufbaus auf eine gemeinsame Ebene quer zum Kofferaufbau einander wenigstens teilweise überdeckend angeordnet sind. So kann auf konstruktiv einfache Weise gewährleistet werden, dass wenigstens ein Teil der aus der wenigstens einen Ausblasöffnung ausströmenden temperierten Luft in die wenigstens eine Einlassöffnung einströmt.

Zusätzlich kann es sich dann anbieten, wenn wenigstens 50 % der Projektion der wenigstens einen Einlassöffnung in Längsrichtung des Kofferaufbaus innerhalb der Projektion der wenigstens einen Ausblasöffnung in Längsrichtung des Kofferaufbaus in einer Ebene quer zum Kofferaufbau angeordnet sind. Das bietet den Vorteil, dass der Querschnittssprung der Kühlluftströmung beim Einströmen in die Einlassöffnung verhältnismäßig klein ist, sodass die Druckverluste in der Kühlluftströmung reduziert werden können und der Kofferaufbau effizienter gekühlt werden kann. Dies gilt insbesondere, wenn die Projektion der wenigstens einen Einlassöffnung in Längsrichtung des Kofferaufbaus wenigstens zu 75 %, insbesondere wenigstens zu 90 %, innerhalb der Projektion der wenigstens einen Ausblasöffnung in Längsrichtung des Kofferaufbaus in einer Ebene quer zum Kofferaufbau angeordnet ist. Um unabhängig davon gewährleisten zu können, dass ein möglichst großer Anteil der aus der wenigstens einen Ausblasöffnung austretenden temperierten Luft in die wenigstens eine Einlassöffnung einströmt, können wenigstens 50 %, vorzugsweise wenigstens 75 %, insbesondere wenigstens 90 %, der Projektion der wenigstens einen Ausblasöffnung in Längsrichtung des Kofferaufbaus innerhalb der Projektion der wenigstens einen Einlassöffnung in Längsrichtung des Kofferaufbaus in einer Ebene quer zum Kofferaufbau angeordnet sein.

Um die Luftführungseinrichtung zweckmäßig an unterschiedliche Positionen der Ausblasöffnungen und die Lage des Bereichs, zu dem die temperierte Luft mittels der Luftführungseinrichtung geleitet werden soll, anpassen zu können, bietet es sich an, wenn wenigstens im teilmontierten Zustand der Luftführungseinrichtung das wenigstens eine hintere Ende wenigstens im Wesentlichen entlang der Längsrichtung der Luftführungseinrichtung gegenüber der wenigstens einen Einlassöffnung zwischen den wenigstens zwei Leitstellungen verstellt werden kann. Dabei ist mit der Längsrichtung der Luftführungseinrichtung insbesondere eine Richtung gemeint, die im montierten Zustand der Luftführungseinrichtung der Längsrichtung des Kofferaufbaus entspricht. Alternativ oder zusätzlich kann es hinsichtlich einer zweckmäßigen Anpassung der Luftführungseinrichtung an die Gegebenheiten des jeweiligen Kofferaufbaus auch vorteilhaft sein, wenn wenigstens im teilmontierten Zustand der Luftführungseinrichtung das hintere Ende wenigstens im Wesentlichen entlang einer Querrichtung der Luftführungseinrichtung gegenüber der wenigstens einen Einlassöffnung zwischen den wenigstens zwei Leitstellungen verstellbar ist. Mit einer Querrichtung der Luftführungseinrichtung ist insbesondere eine Richtung gemeint, die im montierten Zustand der Luftführungseinrichtung wenigstens im Wesentlichen senkrecht zur Längsrichtung des Kofferaufbaus und vorzugsweise vertikal und/oder horizontal zu dem eben ausgerichteten Kofferaufbau angeordnet ist.

Zusätzlich kann es vorteilhaft sein, wenn das wenigstens eine hintere Ende entlang der Längsrichtung und einer Querrichtung der Luftführungseinrichtungen oder entlang zweier senkrechter Querrichtungen der Luftführungseinrichtung zwischen den wenigstens zwei Leitstellungen verstellt werden kann, wenn sich die Luftführungseinrichtung im teilmontierten Zustand befindet. Dann kann das wenigstens eine hintere Ende also entlang zweier senkrechter Richtungen zwischen den wenigstens zwei Leitstellungen verstellt werden, was einen besonders flexiblen Einsatz der Luftführungseinrichtung ermöglicht. Dies gilt insbesondere, wenn wenigstens im teilmontierten Zustand der Luftführungseinrichtung das wenigstens eine hintere Ende entlang der Längsrichtung und zweier zueinander senkrechter Querrichtungen der Luftführungseinrichtung, also entlang dreier senkrechter Richtungen, zwischen den wenigstens zwei Leitstellungen verstellbar ist.

Alternativ oder zusätzlich kann vorgesehen sein, dass der Abstand zwischen den wenigstens zwei Leitstellungen wenigstens 2 cm beträgt, wobei mit dem Abstand zwischen den wenigstens zwei Leitstellungen nicht der absolute Abstand, sondern der Abstand zwischen den wenigstens zwei Leitstellungen bezogen auf die Einlassöffnung gemeint ist. So kann die Luftführungseinrichtung an stark voneinander abweichender Positionen der Ausblasöffnung und unterschiedliche Lagen des Bereichs, zu dem die temperierte Luft mittels der Ausblasöffnung geleitet werden soll, angepasst werden. Dies gilt insbesondere, wenn der Abstand zwischen den wenigstens zwei Leitstellungen wenigstens 10 cm, vorzugsweise wenigstens 20 cm, insbesondere wenigstens 30 cm, beträgt. Dabei kann es sich bei dem Abstand zwischen den wenigstens zwei Leitstellungen um deren Abstand in Längsrichtung oder in einer Querrichtung der Luftführungseinrichtung handeln. Bevorzugt ist es jedoch, wenn die wenigstens zwei Leitstellungen in Längsrichtung und in wenigstens einer Querrichtung der Luftführungseinrichtung oder in zwei zueinander senkrechten Querrichtungen der Luftführungseinrichtung, insbesondere in Längsrichtung und zwei zueinander senkrechten Querrichtungen, einen entsprechenden Abstand zueinander aufweisen.

Um eine verbesserte Verstellbarkeit des wenigstens einen hinteren Endes gegenüber der wenigstens einen Einlassöffnung zu ermöglichen, kann die wenigstens eine Luftführungseinrichtung wenigstens zwei, insbesondere voneinander beabstandete, Verstellabschnitte aufweisen, die jeweils flexibel und/oder gelenkig und/oder teleskopierbar ausgebildet sind. Dann kann jeder der wenigstens zwei Verstellabschnitte ein Verstellen des wenigstens einen hinteren Endes gegenüber der wenigstens einen Einlassöffnung zwischen den wenigstens zwei Leitstellungen ermöglichen, wenn sich die Luftführungseinrichtung im teilmontierten Zustand befindet. Bedarfsweise kann dabei vorgesehen sein, dass die wenigstens zwei Verstellabschnitte unterschiedlich, etwa wenigstens ein Verstellabschnitt flexibel und der wenigstens eine andere Verstellabschnitt teleskopierbar, ausgebildet sind. So können unterschiedliche Vorteile unterschiedlicher Ausgestaltungen kombiniert werden.

Alternativ oder zusätzlich zu einer Ausgestaltung der Luftführungseinrichtung mit wenigstens zwei Verstellabschnitten kann vorgesehen sein, dass sich der wenigstens eine Verstellabschnitt wenigstens über einen Großteil der Länge der Luftführungseinrichtung erstreckt. So kann, insbesondere wenn der wenigstens eine Verstellabschnitt flexibel und/oder teleskopierbar ausgebildet ist, auf einfache Weise ein großer Verstellbereich geschaffen werden, innerhalb dessen das hintere Ende gegenüber der Einlassöffnung verstellt werden kann. Dies ermöglicht einen flexiblen Einsatz der Luftführungseinrichtung. Dies gilt insbesondere, wenn sich der wenigstens eine Verstellabschnitt über wenigstens im Wesentlichen die gesamte Länge der Luftführungseinrichtung erstreckt. Dann kann der Einlassabschnitt und/oder der Auslassabschnitt ein Teil des wenigstens einen Verstellabschnitts darstellen. Dabei kann mit der Länge der Luftführungseinrichtung insbesondere die Länge von der wenigstens einen Einlassöffnung zu dem wenigstens einen hinteren Ende und/oder die Länge der größten Ausdehnung der Luftführungseinrichtung gemeint sein.

Der wenigstens eine flexibel ausgebildete Verstellabschnitt kann eine hohe Flexibilität aufweisen und somit eine einfache Verstellung des wenigstens einen hinteren Endes ermöglichen, wenn dieser wenigstens eine flexible Rippe aufweist, die das Biegen, Strecken und/oder Stauchen des zugehörigen Verstellabschnitts ermöglicht. Dabei kann unter einem Strecken bzw. Stauchen ein Verlängern bzw. Verkürzen des Verstellabschnitts entlang des Verstellabschnitts verstanden werden. Darüber hinaus kann die Flexibilität des Verstellabschnitts weiter erhöht werden, wenn der wenigstens eine flexibel ausgebildete Verstellabschnitt wenigstens zwei, vorzugsweise wenigstens vier, flexible Rippen aufweist, die entlang des entsprechenden Verstellabschnitts hintereinander angeordnet sind.

Auf konstruktiv einfache Weise kann erreicht werden, dass die wenigstens eine Rippe die gewünschte Verstellung des Verstellabschnitts ermöglicht, wenn sich die wenigstens eine flexible Rippe wenigstens überwiegend senkrecht zu dem zugehörigen Verstellabschnitt erstreckt. Dann erstreckt sich die wenigstens eine flexible Rippe also nicht längs des Verstellabschnitts, sondern wenigstens im Wesentlichen in einer Ebene, die wenigstens überwiegend senkrecht zu dem Verstellabschnitt angeordnet ist. Aus demselben Grund kann es alternativ oder zusätzlich vorteilhaft sein, wenn die wenigstens eine flexible Rippe als lokale Querschnittserweiterung der Luftführungseinrichtung und/oder lokale Querschnittsverjüngung der Luftführungseinrichtung ausgebildet ist. Dabei kann der Querschnitt der Luftführungseinrichtung im Bereich der wenigstens einen Rippe größer bzw. kleiner sein als in den daran angrenzenden Bereichen.

Hinsichtlich eines geringen Gewichts und geringer Herstellungskosten der Luftführungseinrichtung kann es auch vorteilhaft sein, wenn der wenigstens eine flexibel ausgebildete Verstellabschnitt wenigstens im Wesentlichen durch wenigstens eine Plane und wenigstens ein flexibel ausgebildetes Verstärkungselement gebildet wird, das sich wenigstens teilweise entlang des Verstellabschnitts erstreckt. Dabei kann es sich bei einer Plane grundsätzlich um eine dünne und/oder flächige Struktur handeln, die nicht formsteif ist, also unter ihrem Eigengewicht in sich zusammensackt. Alternativ oder zusätzlich ist die Plane bevorzugt aus einem Gewebe und/oder einem Kunststoff hergestellt. Das wenigstens eine Verstärkungselement weist zur Verstärkung der wenigstens einen Plane eine höhere Festigkeit und/oder Steifigkeit als die wenigstens eine Plane auf, ist aber dennoch so flexibel ausgebildet, dass es ein Krümmen bzw. Biegen, Stauchen und/oder Strecken des Verstellabschnitts ermöglicht.

Bei einem aus wenigstens einer Plane und wenigstens einem Verstärkungselement gebildeten Verstellabschnitt kann es sich anbieten, wenn die wenigstens eine Plane an dem wenigstens einen Verstärkungselement gehalten ist. So kann verhindert werden, dass die Plane bzw. der durch die Plane gebildete Verstellabschnitt ohne den durch die Kühlluftströmung auf die Plane ausgeübten Druck aufgrund des Eigengewichts in sich zusammensackt. Hinsichtlich einer einfachen und kostengünstigen Fertigung kann es alternativ oder zusätzlich vorteilhaft sein, wenn das wenigstens eine Verstärkungselement stabförmig und/oder plattenförmig ausgebildet ist. Wenn mehrere Verstärkungselemente vorgesehen sind, kann also ein Teil der Verstärkungselemente stabförmig und ein anderer Teil der Verstärkungselemente plattenförmig ausgebildet sein.

Alternativ oder zusätzlich kann es vorteilhaft sein, wenn das wenigstens eine hintere Ende über wenigstens eine Führung gegenüber der wenigstens einen Einlassöffnung zwischen einer Grundstellung und einer davon beabstandeten Ausweichstellung verstellbar, insbesondere teilweise kraftschlüssig, am Dach des Kofferaufbaus gehalten ist. Dann kann also das wenigstens eine hintere Ende nicht nur im teilmontierten, sondern auch im montierten Zustand der Luftleiteirichtung gegenüber der wenigstens einen Einlassöffnung verstellt werden, jedenfalls bei hinreichender Krafteinwirkung. So wird ermöglicht, dass eine Krafteinwirkung auf die Luftführungseinrichtung, beispielsweise hervorgerufen durch eine unbeabsichtigte Staplerabfahrt oder einen unbeabsichtigten Zusammenstoß mit Ladung beim Be- und/oder Entladen des Kofferaufbaus, lediglich ein Verstellen des wenigstens einen hinteren Endes relativ zu der wenigstens einen Einlassöffnung, jedoch keine Beschädigung der Luftführungseinrichtung oder der Montagemittel zur Montage der Luftführungseinrichtung am Dach, insbesondere der Führung, nach sich zieht. Es kann also ein sogenannter Anfahrschutz realisiert werden.

Die Grundstellung und die Ausweichstellung unterscheiden sich hierbei nicht zwingend von den wenigstens zwei Leitstellungen. Die Verstellbarkeit zwischen den Leitstellungen dient jedoch primär dem Anpassen der Luftführungseinrichtung an verschiedene Anforderungen oder Ausstattungen des Kofferaufbaus. Die Grundstellung und die Ausweichstellungen beschreiben dagegen eine eigentlich nicht gewünschte Verstellung der Luftführungseinrichtung, die jedoch zweckmäßig ist, wenn die Luftführungseinrichtung versehentlich angefahren wird. Ansonsten wird es regelmäßig so sein, dass die für einen bestimmten Kofferaufbau ausgewählte Leitstellung des hintern Endes der Luftführungseinrichtung der Grundstellung entspricht, bevor es zu einem Anfahren der Luftführungseinrichtung gekommen ist. Die Führung kann dabei bedarfsweise so ausgebildet sein, dass das hintere Ende der Luftführungseinrichtung nach einem solchen Anfahren sich selbstständig wieder von der Ausgleichsstellung in die Grundstellung zurückverstellt, und zwar beispielsweise infolge einer sich aus der Verformung der Luftführungseinrichtung beim Anfahren resultierenden Rückstellkraft.

Da der Kofferaufbau üblicherweise entlang der Längsrichtung des Kofferaufbaus be- und/oder entladen wird, kann ein besonders effektiver Anfahrschutz realisiert werden, wenn das Verstellen des wenigstens einen hinteren Endes zwischen der Grundstellung und der Ausweichstellung wenigstens teilweise, insbesondere wenigstens im Wesentlichen, in Längsrichtung des Kofferaufbaus erfolgen kann, ohne dass die Luftführungseinrichtung wenigstens teilweise demontiert werden muss. Alternativ oder zusätzlich kann es sich anbieten, wenn die wenigstens eine Führung als Schiene oder als Schienensystem ausgebildet ist. So kann auf konstruktiv einfache Weise ein definiertes Verstellen des wenigstens einen hinteren Endes von der Grundstellung in die Ausweichstellung und zurück realisiert werden.

Ein Anfahrschutz kann alternativ oder zusätzlich auch realisiert werden, wenn die Luftführungseinrichtung wenigstens abschnittsweise aus einem elastomeren Kunststoff gebildet ist. Dann kann sich die Luftführungseinrichtung bei einer äußeren Krafteinwirkung reversibel verformen, ohne dass es dabei zu einer Beschädigung der Luftführungseinrichtung und/oder der Transportkältemaschine kommt. Nach Wegfall der äußeren Krafteinwirkung kann die Luftführungseinrichtung dann aufgrund der elastischen Rückstellkraft wieder ihre ursprüngliche Form annehmen. Ein besonders effektiver Anfahrschutz ergibt sich zudem, wenn nicht nur ein Abschnitt der Luftführungseinrichtung, sondern wenigstens im Wesentlichen die gesamte Luftführungseinrichtung aus einem elastomeren Kunststoff gebildet ist.

Unabhängig davon, ob lediglich ein Abschnitt oder wenigstens im Wesentlichen die gesamte Luftführungseinrichtung aus einem elastomeren Kunststoff gebildet ist, bietet sich ein entsprechender Kunststoff an, um die Anfahrschutzfunktion wie gewünscht realisieren zu können. Alternativ oder zusätzlich kann es aus demselben Grund vorteilhaft sein, wenn der, insbesondere elastomere Kunststoff ein Biegemodul zwischen 50 MPa und 350 MPa, vorzugsweise zwischen 100 MPa und 300 MPa, insbesondere zwischen 120 MPa und 270 MPa, aufweist. Dabei wird das Biegemodul insbesondere gemäß der DIN EN ISO 178 (Kunststoffe - Bestimmung der Biegeeigenschaften, Stand September 2013) bestimmt. Bedarfsweise kann es aus Kostengesichtspunkten und/oder aus herstellungstechnischen Gründen bevorzugt sein, wenn ein Abschnitt oder wenigstens im Wesentlichen die gesamte Luftleiteinrichtung aus Polyethylen gebildet ist.

Bei der Montage der Luftführungseinrichtung in dem Laderaum kann eine einfache Ausrichtung der wenigstens einen Einlassöffnung relativ zu der wenigstens einen Ausblasöffnung ermöglicht werden, wenn der wenigstens eine Einlassabschnitt an der Stirnwand des Kofferaufbaus und/oder an der Transportkältemaschine befestigt ist. Alternativ oder zusätzlich kann es vorteilhaft sein, wenn die wenigstens eine Einlassöffnung wenigstens im Wesentlichen spaltfrei mit der wenigstens einen Ausblasöffnung verbunden ist, sodass wenigstens im Wesentlichen die gesamte aus der wenigstens einen Ausblasöffnung ausströmende temperierte Luft in die wenigstens eine Einlassöffnung einströmt. Dies kann zu einer effizienten und gleichmäßigen Kühlung des Laderaums beitragen.

Zu einer effizienten und gleichmäßigen Kühlung des Laderaums kann es ebenfalls beitragen, wenn die Luftführungseinrichtung wenigstens über 50 % ihrer Länge als wenigstens im Wesentlichen umlaufend geschlossener Kanal ausgebildet ist. So kann nämlich sicher vermieden werden, dass es entlang eines Großteils der Luftführungseinrichtung zu signifikanten Volumenstromverlusten der Kühlluftströmung kommt, was die von der Transportkältemaschine bereitgestellte Leistung zum Fördern der temperierten Luft vermindert. Vor diesem Hintergrund ist es besonders vorteilhaft, wenn die Luftführungseinrichtung wenigstens über 70 % der Länge, insbesondere wenigstens im Wesentlichen über die gesamte Länge, als wenigstens im Wesentlichen umlaufend geschlossener Kanal ausgebildet ist.

Alternativ oder zusätzlich kann es hinsichtlich einer effizienten Kühlung des Laderaums vorteilhaft sein, wenn sich der durch die Luftführungseinrichtung definierte Strömungsquerschnitt wenigstens über 50 % der Länge der Luftführungseinrichtung allenfalls wenigstens im Wesentlichen ausschließlich stetig ändert. Dann kann der Strömungsquerschnitt der Kühlluftströmung entlang wenigstens 50 % der Länge der Luftführungseinrichtung also konstant bleiben und/oder sich stetig ändern. So kann über einen Großteil der Länge der Luftführungseinrichtung vermieden werden, dass es zu Querschnittssprüngen in der Kühlluftströmung kommt, was zu erhöhten Druckverlusten in der Kühlluftströmung führt. Dementsprechend bietet es sich insbesondere an, wenn sich der durch die Luftführungseinrichtung definierte Strömungsquerschnitt wenigstens über 70 % der Länge, insbesondere wenigstens im Wesentlichen über die gesamte Länge, der Luftführungseinrichtung allenfalls ausschließlich stetig ändert.

Ebenfalls im Hinblick auf geringe Strömungsverluste in der Kühlluftströmung und somit eine effiziente Kühlung des Laderaums bietet es sich an, wenn das Verhältnis der Fläche des größten durch die Luftführungseinrichtung definierten Strömungsquerschnitts zu der Fläche des kleinsten durch die Luftführungseinrichtung definierten Strömungsquerschnitts höchstens 2 beträgt. Dann ist insbesondere der größte Strömungsquerschnitt der Kühlluftströmung entlang der Luftführungseinrichtung also höchstens doppelt so groß wie der kleinste Strömungsquerschnitt der Kühlluftströmung entlang der Luftführungseinrichtung. Je kleiner die Abweichungen der Flächen der Strömungsquerschnitte entlang der Luftführungseinrichtung sind, desto geringer sind die sich ergebenden Strömungsverluste. Deshalb bietet es sich insbesondere an, wenn das Flächenverhältnis des größten durch die Luftführungseinrichtung definierten Strömungsquerschnitts zu dem kleinsten durch die Luftführungseinrichtung definierten Strömungsquerschnitt höchstens 2, vorzugsweise höchstens 1,5, insbesondere höchstens 1,2, weiter insbesondere höchstens 1,0, beträgt.

Wie schon erwähnt, kann eine einfache und zweckdienliche Ausgestaltung der Luftleitkanäle erreicht werden, wenn diese jeweils durch das Dach des Kofferaufbaus und wenigstens ein sich wenigstens abschnittsweise entlang des Luftleitkanals erstreckendes Hüllelement gebildet wird, das den jeweiligen Luftleitkanal wenigstens überwiegend gegenüber dem Laderaum begrenzt. Dabei kann es hinsichtlich des Gewichts und der Herstellungskosten des Luftleitkanals vorteilhaft sein, wenn das wenigstens eine Hüllelement aus einer Plane gebildet ist.

Um die temperierte Luft effektiv in Richtung der Rückwand leiten zu können, bietet es sich an, wenn die Luftleitkanäle an seinem der wenigstens einen Luftführungseinrichtung abgewandten Ende, bei dem es sich insbesondere um ein Längsende der Luftleitkanäle handeln kann, wenigstens eine Luftleitkanalöffnung aufweist. Über diese Luftleitkanalöffnung kann die temperierte Luft dann aus dem Luftleitkanal heraus in den Laderaum strömen. Alternativ oder zusätzlich kann der Luftleitkanal auch zwischen dem der Luftführungseinrichtung abgewandten Ende, insbesondere Längsende, und dem der Luftführungseinrichtung zugewandten Ende, insbesondere Längsende, wenigstens eine Luftleitkanalöffnung aufweisen. So kann auch zwischen den beiden Enden, insbesondere Längsenden, des Luftleitkanals temperierte Luft aus dem Luftleitkanal in den Laderaum strömen, was zu einer homogeneren Temperaturverteilung in Längsrichtung des Laderaums beitragen kann.

Um die temperierte Luft auch effektiv zu den Seiten des Kofferaufbaus leiten zu können, bietet es sich dabei an, wenn die wenigstens eine Luftleitkanalöffnung, die zwischen dem der Luftführungseinrichtung zugewandten Ende und dem der Luftführungseinrichtung abgewandten Ende des Luftleitkanals angeordnet ist, seitlich am Luftleitkanal angeordnet ist, bedarfsweise wenigstens überwiegend in eine horizontale Richtung weist. Alternativ oder zusätzlich kann es vorteilhaft sein, wenn sich die wenigstens eine Luftleitkanalöffnung, die zwischen dem der Luftführungseinrichtung zugewandten Ende und dem der Luftführungseinrichtung abgewandten Ende des Luftleitkanals angeordnet ist, wenigstens teilweise entlang des Luftleitkanals, bedarfsweise wenigstens über 25 %, vorzugsweise wenigstens über 50 %, insbesondere wenigstens über 90 %, der Länge des Luftleitkanals, erstreckt. So kann über einen großen Teil der Länge des Luftleitkanals gezielt temperierte Luft aus dem Luftleitkanal in den Laderaum strömen, was eine homogene Temperaturverteilung im Laderaum fördert. Wenn dabei mehrere Luftleitkanalöffnungen, die zwischen dem der Luftführungseinrichtung zugewandten Ende und dem der Luftführungseinrichtung abgewandten Ende des Luftleitkanals angeordnet sind, vorgesehen sind, können diese, vorzugsweise gleichmäßig verteilt, hintereinander angeordnet sein und sich gemeinsam über einen entsprechenden Teil der Länge des Luftleitkanals erstrecken.

Hinsichtlich eines effektiven Anfahrschutzes für die Luftführungseinrichtung und/oder den Luftleitkanal bietet es sich an, wenn das wenigstens eine hintere Ende gegenüber dem wenigstens einen Luftleitkanal zwischen zwei voneinander beabstandeten Stellungen, bei denen es sich bedarfsweise um die Grundstellung und die Ausweichstellung handeln kann, verstellbar, insbesondere verschiebbar, ist. Dann ist also das wenigstens eine hintere Ende und der wenigstens eine Luftleitkanal in wenigstens einer Richtung derart unverbunden, dass wenigstens in dieser Richtung eine Relativbewegung zwischen dem hinteren Ende und dem Luftleitkanal ermöglicht wird. So kann verhindert werden, dass der wenigstens eine Luftleitkanal und/oder die wenigstens eine Luftführungseinrichtung beschädigt wird, wenn es zu einer unbeabsichtigten Krafteinwirkung auf die Luftführungseinrichtung kommt, die etwa aus einer Stapleranfahrt oder einem Zusammenstoß mit Ladung beim Be- und/oder Entladen des Kofferaufbaus resultieren kann. Dabei kann aufgrund der typischen Be- und Entladungsrichtung des Kofferaufbaus ein besonders effektiver Anfahrschutz realisiert werden, wenn das Verstellen und/oder das Verschieben des hinteren Endes zwischen den beiden Stellungen, insbesondere zwischen der Grundstellung und der Ausweichstellung, wenigstens teilweise, insbesondere wenigstens im Wesentlichen in Längsrichtung des Kofferaufbaus erfolgen kann. Alternativ oder zusätzlich kann vorgesehen sein, dass das wenigstens eine hintere Ende wenigstens in einer der beiden Stellungen, insbesondere wenigstens in der Grundstellung, in dem wenigstens einen Luftleitkanal angeordnet ist. So wird ermöglicht, dass wenigstens in der einen Stellung, insbesondere der Grundstellung, temperierte Luft von der Luftführungseinrichtung in den Luftleitkanal geleitet wird.

Gemäß einer hinsichtlich der Luftführung besonders effektiven Ausgestaltung der Erfindung weist bei einem erfindungsgemäßen Kofferaufbau, bei dem in der schon erwähnten Weise die Transportkältemaschine mit ihrer Ausblasöffnung an der Stirnseite des Kofferaufbaus angeordnet ist und bei der sich die Luftleitkanäle in Richtung der Rückwand des Kofferaufbaus längs von dessen Dach erstrecken, die Transportkältemaschine wenigstens eine in die Stirnwand eingeformte Absaugöffnung für aus dem Laderaum abzusaugende zu temperierende Luft auf, wobei eine von der Stirnwand in Richtung des Laderaums beabstandete, eine Anfahrebene definierende Zirkulationswand vorgesehen ist und zwischen der Stirnwand und der Anfahrebene ein sich in vertikaler Richtung erstreckender zentraler Luftrückführkanal zum Leiten der zu temperierenden Luft aus dem Laderaum zu der Absaugöffnung ausgebildet ist, wobei zwischen der Stirnwand und der Anfahrebene einerseits und mindestens einer der Seitenwände andererseits und einer sich in vertikaler Richtung erstreckenden Begrenzung ein seitlicher Luftrückführkanal ausgebildet ist, und wobei der Querschnitt des seitlichen Luftrückführkanals durch eine Kurzschlusssperre eingeschränkt oder verschlossen ist.

Diese Ausgestaltung der Erfindung geht von der Erkenntnis aus, dass bei herkömmlichen Kofferaufbauten ein nicht unwesentlicher Teil der temperierten Luft kurz nach dem Ausströmen aus der Transportkältemaschine über den wenigstens einen seitlichen Luftrückführkanal in den wenigstens einen zentralen Luftrückführkanal und von dort zu der wenigstens einen Absaugöffnung der Transportkältemaschine gesogen wird, sodass der entsprechende Teil der temperierten Luft dem Laderaum nur sehr wenig bis keine Wärme entziehen kann. Die so entstehende Kurzschlussströmung der temperierten Luft kann durch die wenigstens eine Kurzschlusssperre und die durch diese bewirkte Verkleinerung des freien Strömungsquerschnitts in dem wenigstens einen seitlichen Luftrückführkanal um wenigstens 50 % deutlich reduziert werden. Es wird also die Menge der temperierten Luft verringert, die von der Transportkältemaschine im Kreislauf geführt wird, jedoch nicht oder nur unwesentlich zur Kühlung des Laderaums bzw. der Ladung beiträgt. Auf diese Weise wird der Energieverbrauch der Transportkältemaschine gesenkt bzw. bei gleicher Kühlleistung eine effizientere und kostengünstigere Kühlung des Kofferaufbaus ermöglicht.

Bei einer ersten besonders bevorzugten Ausgestaltung des Kofferaufbaus sind wenigstens 75 % des Querschnitts des wenigstens einen seitlichen Luftrückführkanals durch die wenigstens eine Kurzschlusssperre verschlossen. Dies bietet sich hinsichtlich einer effizienten und kostengünstigen Kühlung des Laderaums an, da die Menge der über den wenigstens einen seitlichen Luftrückführkanal zu der wenigstens einen Absaugöffnung der Transportkältemaschine gelangenden temperierten Luft mit dem Anteil der freien Querschnittsfläche des wenigstens einen seitlichen Luftrückführkanals abnimmt. Dementsprechend bietet es sich insbesondere an, wenn die wenigstens eine Kurzschlusssperre wenigstens 85 %, vorzugsweise wenigstens 90 %, des Querschnitts, insbesondere wenigstens im Wesentlichen den gesamten Querschnitt, des wenigstens einen seitlichen Luftrückführkanals verschließt.

Alternativ oder zusätzlich dazu kann es vorteilhaft sein, wenn die wenigstens eine Kurzschlusssperre wenigstens im Wesentlichen zwischen der Stirnwand und der Anfahrebene angeordnet ist. Dann erstreckt sich die wenigstens eine Kurzschlusssperre in Richtung des Laderaums wenigstens im Wesentlichen nicht über die Zirkulationswand hinaus. Auf diese Weise werden zum einen eine Verringerung des zur Verfügung stehenden Laderaums und zum anderen eine Beschädigung der Ladung durch unbeabsichtigtes Zusammenstoßen mit der wenigstens einen Kurzschlusssperre vermieden. Dies kann besonders effektiv erfolgen, wenn die wenigstens eine Kurzschlusssperre ausschließlich zwischen der Stirnwand und der Anfahrebene angeordnet ist.

Um zu ermöglichen, dass unterhalb der wenigstens einen Kurzschlusssperre Luft, insbesondere zu temperierende Luft, in dem wenigstens einen seitlichen Luftrückführkanal strömen kann, bietet es sich an, wenn die wenigstens eine Kurzschlusssperre den wenigstens einen seitlichen Luftrückführkanal nach oben, also bedarfsweise in Richtung des Dachs, begrenzt. Dann kann sich der wenigstens eine seitliche Luftrückführkanal also unterhalb der wenigstens einen Kurzschlusssperre und nach oben bis zu dem durch die wenigstens eine Kurzschlusssperre verschlossenen Querschnitt erstrecken. So kann der wenigstens eine seitliche Luftrückführkanal etwa dazu beitragen, die zu temperierende Luft, insbesondere im Bereich des Bodens des Kofferaufbaus, zu dem wenigstens einen zentralen Luftrückführkanal zu leiten, und so die angestrebte Luftzirkulation im Laderaum fördern. Alternativ oder zusätzlich dazu kann vorgesehen sein, dass die wenigstens eine Kurzschlusssperre den wenigstens einen seitlichen Luftrückführkanal nach unten begrenzt. Dann kann sich der wenigstens eine seitliche Luftrückführkanal also oberhalb der wenigstens einen Kurzschlusssperre und nach unten bis zu dem durch die wenigstens eine Kurzschlusssperre verschlossenen Querschnitt erstrecken. So kann oberhalb der wenigstens einen Kurzschlusssperre Luft, insbesondere temperierte Luft, in dem wenigstens einen seitlichen Luftrückführkanal strömen, sodass der wenigstens eine seitliche Luftrückführkanal dazu beitragen kann, die temperierte Luft zu den zu temperierenden Gütern zu leiten, etwa um eine thermische Isolation zur Stirnwand zu ermöglichen. Dies kann sich ebenfalls positiv auf eine effektive und somit kostengünstige Kühlung des Laderaums auswirken.

Um die Vorteile der beiden vorstehend genannten Varianten zu kombinieren, ist es allerdings besonders bevorzugt, wenn die wenigstens eine Kurzschlusssperre einen unteren seitlichen Luftrückführkanal nach oben begrenzt und einen oberen seitlichen Luftrückführkanal nach unten begrenzt. Dann kann sich also oberhalb der wenigstens einen Kurzschlusssperre ein seitlicher Luftrückführkanal, insbesondere für temperierte Luft, und unterhalb der wenigstens einen Kurzschlusssperre ein seitlicher Luftrückführkanal, insbesondere für zu temperierende Luft, erstrecken, wobei die zwei seitlichen Luftrückführkanäle durch die wenigstens eine Kurzschlusssperre getrennt sind. Dies ermöglicht eine besonders effiziente und kostengünstige Kühlung des Laderaums bzw. der zu temperierenden Ladung.

Da der wenigstens eine seitliche Luftrückführkanal in Richtung des Laderaums in der Regel durch die angrenzend zur Zirkulationswand angeordnete Ladung verschlossen wird, bietet es sich hinsichtlich einer effektiven Verringerung eines Kühlluftkurzschlusses an, wenn die Kurzschlusssperre den Querschnitt des wenigstens einen seitlichen Luftrückführkanals unterhalb der wenigstens einen Auslassöffnung der Transportkältemaschine verschließt. Dann verschließt die wenigstens eine Kurzschlusssperre den Querschnitt des wenigstens einen seitlichen Luftrückführkanals also in einem Abstand zum Boden des Kofferaufbaus, der kleiner ist als der Abstand der wenigstens einen Auslassöffnung zum Boden. So kann verhindert werden, dass temperierte Luft oberhalb der Ladung, jedoch unterhalb der wenigstens einen Kurzschlusssperre über die Anfahrebene in den wenigstens einen seitlichen Luftrückführkanal eintritt und von dort im Wesentlichen ohne Aufnahme von Wärme aus dem Laderaum zu der wenigstens einen Absaugöffnung der Transportkältemaschine gesogen wird. Vor diesem Hintergrund kann es auch vorteilhaft sein, wenn die Kurzschlusssperre den Querschnitt des wenigstens einen seitlichen Luftrückführkanals unterhalb der wenigstens einen Absaugöffnung der Transportkältemaschine verschließt, also in einem Abstand zum Boden des Kofferaufbaus, der kleiner ist als der Abstand zwischen der wenigstens einen Absaugöffnung und dem Boden.

Ebenfalls um zu vermeiden, dass temperierte Luft oberhalb der Ladung und unterhalb der wenigstens einen Kurzschlusssperre in den wenigstens einen seitlichen Luftrückführkanal eintritt, bietet es sich an, wenn die Kurzschlusssperre den Querschnitt des wenigstens einen seitlichen Luftrückführkanals in einem Abstand zum Boden von höchstens 200 cm verschließt. Aus demselben Grund ist es besonders vorteilhaft, wenn der entsprechende Abstand zum Boden höchstens 150 cm, insbesondere höchstens 120 cm, beträgt. So kann auch bei verhältnismäßig niedriger Ladung verhindert werden, dass temperierte Luft oberhalb der Ladung und unterhalb der wenigstens einen Kurzschlusssperre in den wenigstens einen seitlichen Luftrückführkanal gelangt.

Hinsichtlich einer effektiven Verringerung der Kurzschlussströmung der temperierten Luft über den wenigstens einen seitlichen Luftrückführkanal kann es sich alternativ oder zusätzlich aber auch anbieten, wenn die wenigstens eine Kurzschlusssperre den Querschnitt des wenigstens einen seitlichen Luftrückführkanals in einem Abstand zum Boden des Kofferaufbaus von wenigstens 10 cm entsprechend verschließt. So wird verhindert, dass temperierte Luft aus dem wenigstens einen seitlichen Luftrückführkanal oberhalb der wenigstens einen Kurzschlusssperre, aber unterhalb der Ladung, etwa im Bereich der Palettenschächte der die Ladung tragenden Paletten, über die Anfahrebene aus dem wenigstens einen seitlichen Luftrückführkanal austritt und zu der wenigstens einen Absaugöffnung der Transportkältemaschine gesogen wird. Vor diesem Hintergrund bietet es sich insbesondere an, wenn der entsprechende Abstand zum Boden wenigstens 50 cm, insbesondere wenigstens 80 cm beträgt.

Im Hinblick auf die Verringerung eines Kühllufteintritts oberhalb der Ladung und unterhalb der wenigstens einen Kurzschlusssperre in den wenigstens einen seitlichen Luftrückführkanal kann es alternativ oder zusätzlich auch vorteilhaft sein, wenn die Kurzschlusssperre den Querschnitt des wenigstens einen seitlichen Luftrückführkanals in einem vertikalen Abstand zum unteren Rand der Zirkulationswand von wenigstens 20 cm, vorzugsweise wenigstens 40 cm, insbesondere wenigstens 60 cm, verschließt. Ebenso kann es hinsichtlich der Vermeidung eines Kühlluftaustritts aus dem wenigstens einen seitlichen Luftrückführkanals oberhalb der wenigstens einen Kurzschlusssperre, aber unterhalb der Ladung alternativ oder zusätzlich vorteilhaft sein, wenn die Kurzschlusssperre den wenigstens einen seitlichen Luftrückführkanal in einem vertikalen Abstand zum unteren Rand der Zirkulationswand von höchstens 100 cm, vorzugsweise höchstens 80 cm, insbesondere höchstens 70 cm, verschließt. Dabei ist mit dem vertikalen Abstand insbesondere der Abstand in einer Richtung gemeint, die zum Dach bzw. Boden des Kofferaufbaus senkrecht angeordnet ist.

Damit die zu temperierende Luft ungehindert aus dem Laderaum in den wenigstens einen zentralen Luftrückführkanal einströmen kann, bietet es sich an, wenn der wenigstens eine zentrale Luftrückführkanal wenigstens eine Einströmöffnung aufweist. Dabei kann es vorteilhaft sein, wenn die wenigstens eine Einströmöffnung zwischen der Zirkulationswand und der Stirnwand angeordnet ist. Dies erlaubt eine konstruktiv einfache Ausgestaltung der wenigstens einen Einströmöffnung und macht zudem ein zweckmäßiges Einströmen der zu temperierenden Luft in den wenigstens einen zentralen Luftrückführkanal möglich.

Um zu ermöglichen, dass das Einströmen in den wenigstens einen zentralen Luftrückführkanal im Bereich des Bodens erfolgen kann, kann die wenigstens eine Einströmöffnung alternativ oder zusätzlich zwischen dem unteren Rand der Zirkulationswand und der Stirnwand und/oder unterhalb des unteren Rands der Zirkulationswand und/oder im unteren Rand der Zirkulationswand angeordnet sein. Dies kann sich positiv auf die angestrebte Luftzirkulation im Laderaum auswirken und in der Folge eine effizientere und kostengünstigere Kühlung des Kofferaufbaus ermöglichen. Dabei kann die wenigstens eine zwischen dem unteren Rand der Zirkulationswand und der Stirnwand und/oder unterhalb des unteren Rands der Zirkulationswand und/oder im unteren Rand der Zirkulationswand angeordnete Einströmöffnung zudem ein Einströmen der zu temperierenden Luft in Längsrichtung des Kofferaufbaus und/oder in vertikaler Richtung, also einer Richtung senkrecht zum Dach bzw. Boden, ermöglichen.

Um hingegen zu ermöglichen, dass die zu temperierende Luft von der Seite in den wenigstens einen zentralen Luftrückführkanal einströmen kann, bietet es sich alternativ oder zusätzlich an, wenn die wenigstens eine Einströmöffnung des wenigstens einen zentralen Luftrückführkanals in der wenigstens einen Begrenzung des wenigstens einen seitlichen Luftrückführkanals angeordnet ist. Dann kann also die wenigstens eine Einströmöffnung den wenigstens einen zentralen Luftrückführkanal mit dem wenigstens einen, insbesondere nach oben durch die wenigstens eine Kurzschlusssperre begrenzten, seitlichen Luftrückführkanal verbinden. Dies hat den Vorteil, dass auch bei einer Blockade der Luftströmung im Bereich des Bodens des Laderaums, etwa infolge einer Versperrung der Palettenschächte der die Ladung tragenden Paletten durch beispielsweise Schrumpffolie, ausreichend Luft zu der wenigstens einen Absaugöffnung der Transportkältemaschine strömen und somit ein kritischer Anstieg des Staudrucks verhindert werden kann, was im ungünstigsten Fall zu einer Abschaltung des Kühlsystems führt. Dabei kann eine verhältnismäßig große Luftmasse durch die wenigstens eine in der wenigstens einen Begrenzung angeordnete Einströmöffnung strömen, wenn diese einen länglichen, insbesondere sich in Längsrichtung der zugehörigen Begrenzung erstreckenden, Öffnungsquerschnitt aufweist. Vor demselben Hintergrund können alternativ oder zusätzlich auch wenigstens zwei, insbesondere wenigstens drei, in der wenigstens einen Begrenzung angeordnete Einströmöffnungen, vorzugsweise je Begrenzung, vorgesehen sein.

Unabhängig davon bietet es sich insbesondere an, wenn wenigstens eine Einströmöffnung zwischen dem unteren Rand der Zirkulationswand und der Stirnwand, unterhalb des unteren Rands der Zirkulationswand und/oder im unteren Rand der Zirkulationswand angeordnet ist und wenigstens eine weitere Einströmöffnung in der wenigstens einen Begrenzung des wenigstens einen seitlichen Luftrückführkanals angeordnet ist. Dann weist der wenigstens eine zentrale Luftrückführkanal also wenigstens eine zwischen dem unteren Rand der Zirkulationswand und der Stirnwand, unterhalb des unteren Rands der Zirkulationswand und/oder im unteren Rand der Zirkulationswand angeordnete Einströmöffnung und wenigstens eine in der wenigstens einen Begrenzung angeordnete Einströmöffnung auf. So können die zuvor genannten Vorteile der unterschiedlichen Anordnungen der Einströmöffnung kombiniert werden und somit eine besonders gute Luftzirkulation in dem Laderaum erreicht werden.

Hinsichtlich der Verringerung einer Kurzschlussströmung der temperierten Luft über die wenigstens eine Einströmöffnung, kann es sich unabhängig von der Anordnung der wenigstens einen Einströmöffnung anbieten, wenn die wenigstens eine Kurzschlusssperre den Querschnitt des wenigstens einen seitlichen Luftrückführkanals oberhalb der wenigstens einen Einströmöffnung verschließt. Dann verschließt die Kurzschlusssperre den Querschnitt des wenigstens einen seitlichen Luftrückführkanals also in einem Abstand zum Dach des Kofferaufbaus, der kleiner ist als der Abstand zwischen der wenigstens einen Einströmöffnung und dem Dach. Dies gilt insbesondere, wenn wenigstens eine Einströmöffnung in der Begrenzung des wenigstens einen seitlichen Luftrückführkanals angeordnet ist und den wenigstens einen zentralen Luftrückführkanal mit dem wenigstens einen seitlichen Luftrückführkanal verbindet. Unabhängig davon kann es, sofern mehrere Einströmöffnungen vorgesehen sind, vorteilhaft sein, wenn die wenigstens eine Kurzschlusssperre den wenigstens einen seitlichen Luftrückführkanal oberhalb der am weitesten oben angeordneten Einströmöffnung verschließt.

Alternativ oder zusätzlich kann vorgesehen sein, dass die wenigstens eine Absaugöffnung der Transportkältemaschine oberhalb der wenigstens einen Einströmöffnung angeordnet ist, sodass der Abstand der Absaugöffnung zum Dach des Kofferaufbaus kleiner ist als der Abstand der Einströmöffnung zum Dach. Dann kann die zu temperierende Luft in der Nähe des Bodens des Kofferaufbaus über die wenigstens eine Einströmöffnung in den wenigstens einen zentralen Luftrückführkanal einströmen und nach oben, also bedarfsweise in Richtung des Dachs, zu der wenigstens einen Absaugöffnung der Transportkältemaschine geleitet werden. Dies begünstigt die angestrebte Luftzirkulation im Laderaum und führt letztlich zu einer effizienteren und kostengünstigeren Kühlung des Kofferaufbaus.

Insbesondere damit eine ausreichende Menge der zu temperierenden Luft im Bereich des Bodens in den wenigstens einen zentralen Luftrückführkanal einströmen kann, kann es vorteilhaft sein, wenn der Abstand zwischen dem unteren Rand der Zirkulationswand und dem Boden des Kofferaufbaus wenigstens 5 cm beträgt. Aus demselben Grund ist es besonders bevorzugt, wenn der entsprechende Abstand wenigstens 15 cm, insbesondere wenigstens 20 cm, beträgt. Um dabei jedoch zu vermeiden, dass temperierte Luft bei niedriger Ladung unterhalb der Zirkulationswand über die Anfahrebene in den wenigstens einen zentralen Luftrückführkanal eintritt, kann es sich alternativ oder zusätzlich auch anbieten, wenn der Abstand zwischen dem unteren Rand der Zirkulationswand und dem Boden höchstens 100 cm, vorzugsweise höchstens 75 cm, insbesondere höchstens 50 cm, beträgt. So trägt auch die Zirkulationswand zur Vermeidung eines Kurzschlusses der temperierten Luft und somit zu einer effizienteren und kostengünstigeren Kühlung des Laderaums bei.

Vor diesem Hintergrund kann es sich alternativ oder zusätzlich auch anbieten, wenn die Projektion der wenigstens einen Absaugöffnung der Transportkältemaschine in Längsrichtung des Kofferaufbaus auf die Anfahrebene wenigstens teilweise, insbesondere wenigstens im Wesentlichen, auf der Zirkulationswand angeordnet ist. Dabei kann dies, sofern die Transportkältemaschine mehrere Absaugöffnungen aufweist, für jede Absaugöffnung gelten.

Die wenigstens eine Kurzschlusssperre kann kostengünstig hergestellt werden und dennoch robust sein, wenn sie als Profil ausgebildet ist. Dann kann die wenigstens eine Kurzschlusssperre im Gegensatz zu einer plattenförmigen Ausbildung einen dreidimensionalen Querschnitt aufweisen und/oder dreidimensional umgeformt sein. Unabhängig davon ist eine besonders kostengünstige Herstellung möglich, wenn die wenigstens eine Kurzschlusssperre einteilig ausgebildet ist. Als Material der wenigstens einen Kurzschlusssperre kommt insbesondere Metall in Frage. So wird eine besonders robuste Ausgestaltung ermöglicht. Alternativ oder zusätzlich kann die wenigstens eine Kurzschlusssperre aber auch aus Kunststoff gebildet sein. Dies ermöglicht eine besonders kostengünstige Herstellung der wenigstens einen Kurzschlusssperre. Schließlich kann die wenigstens eine Kurzschlusssperre auch aus einem Gummi gebildet sein. Unabhängig von dem Material der wenigstens einen Kurzschlusssperre bietet es sich an, wenn diese einen trapezförmigen und/oder hutförmigen und/oder omegaförmigen Querschnitt aufweist. So kann eine hohe Stabilität bei geringem Gewicht der wenigstens einen Kurzschlusssperre erreicht werden. Dies gilt insbesondere wenn die wenigstens eine Kurzschlusssperre über wenigstens im Wesentlichen ihre gesamte Längserstreckung einen entsprechenden Querschnitt aufweist.

Hinsichtlich der Anordnung der wenigstens einen Kurzschlusssperre kann es vorteilhaft sein, wenn diese sich wenigstens im Wesentlichen in Querrichtung des Kofferaufbaus erstreckt. Dabei ist mit der Querrichtung des Kofferaufbaus die Querrichtung parallel zum Boden bzw. zum Dach einerseits und parallel zur Stirnwand andererseits gemeint. Dann kann also die Längsachse der wenigstens einen Kurzschlusssperre wenigstens im Wesentlichen parallel zum Boden bzw. zum Dach und/oder zur Stirnwand angeordnet sein. Alternativ oder zusätzlich kann es bevorzugt sein, wenn wenigstens eine in den Laderaum, also in Richtung der Rückwand, weisende Stirnfläche der wenigstens einen Kurzschlusssperre wenigstens im Wesentlichen in der Anfahrebene angeordnet ist. So kann nicht nur die Ladung an der Stirnfläche anliegen, was ein besonders effektives Verschließen des Querschnitts des wenigstens einen seitlichen Luftrückführkanals ermöglicht, sondern auch ein Anfahrschutz geschaffen werden.

Alternativ zu einer einteiligen Ausgestaltung der Kurzschlusssperre kann es auch vorteilhaft sein, wenn die wenigstens eine Kurzschlusssperre mehrteilig ausgebildet ist. Dann kann ein Verstellen der wenigstens zwei Bauteile relativ zueinander eine Vergrößerung und/oder Verkleinerung der durch die wenigstens eine Kurzschlusssperre verschlossenen Querschnittsfläche des wenigstens einen seitlichen Luftrückführkanals ermöglichen, sodass die wenigstens eine Kurzschlusssperre an unterschiedlich ausgebildete seitliche Luftrückführkanäle angepasst und somit flexibel eingesetzt werden kann. Dabei ist es hinsichtlich einer günstigen Herstellung und zweckmäßigen Verstellung besonders bevorzugt, wenn die wenigstens eine Kurzschlusssperre wenigstens aus zwei wenigstens im Wesentlichen in Querrichtung des Kofferaufbaus relativ zueinander verschiebbaren, insbesondere teleskopierbaren, Bauteilen gebildet ist. Unter der Querrichtung des Kofferaufbaus wird auch in diesem Zusammenhang die Querrichtung verstanden, die parallel zum Dach bzw. zum Boden des Kofferaufbaus einerseits und parallel zur Stirnwand andererseits angeordnet ist.

Um zu verhindern, dass es von oben zu einer Kurzschlussströmung der temperierten Luft in den wenigstens einen zentralen Luftrückführkanal kommt, kann der wenigstens eine zentrale Luftrückführkanal nach oben, also bedarfsweise in Richtung des Dachs, durch wenigstens eine Dichtlippe wenigstens überwiegend verschlossen sein. So kann der Energieverbrauch der Transportkältemaschine weiter gesenkt werden, was zu einer weiteren Effizienzsteigerung und Kostenreduzierung bei der Kühlung des Kofferaufbaus beiträgt. Dies gilt insbesondere, wenn die Dichtlippe den wenigstens einen zentralen Luftrückführkanal wenigstens im Wesentlichen nach oben verschließt. Unabhängig davon bietet sich insbesondere eine flexible Ausgestaltung der Dichtlippe an, sodass es bei einer Relativbewegung zwischen der Zirkulationswand und der Stirnwand bzw. der Transportkältemaschine, etwa hervorgerufen durch eine unbeabsichtigte Stapleranfahrt oder einen unbeabsichtigten Zusammenstoß mit Ladung beim Be- und/oder Entladen des Kofferaufbaus, nicht zu einer Beschädigung der Stirnwand, der Zirkulationswand und/oder der Dichtlippe kommt. Dabei bietet sich als Material der wenigstens einen Dichtlippe insbesondere Gummi und/oder Kunststoff an.

Alternativ oder zusätzlich kann es hinsichtlich einer einfachen Montage der wenigstens einen Dichtlippe bevorzugt sein, wenn diese an der Zirkulationswand und/oder der Transportkältemaschine gehalten ist. Aus demselben Grund kann es besonders vorteilhaft sein, wenn die wenigstens eine Dichtlippe formschlüssig an der entsprechenden Wand gehalten ist. Unabhängig davon kann ein einfaches und effektives Verschließen des wenigstens einen zentralen Luftrückführkanals erfolgen, wenn das freie Ende der wenigstens einen Dichtlippe an der Transportkältemaschine und/oder der Zirkulationswand anliegt. Dann kann also das freie Ende der wenigstens einen Dichtlippe an einer der beiden Wände anliegen und das gegenüberliegende Ende an der anderen der beiden Wände gehalten sein. Unabhängig davon kann es sich hinsichtlich einer effektiven Vermeidung einer Kurzschlussströmung durch die Dichtlippe auch anbieten, wenn sich die wenigstens eine Dichtlippe wenigstens im Wesentlichen über die gesamte Breite des wenigstens einen zentralen Luftrückführkanals, insbesondere an dessen oberen Ende, erstreckt.

Hinsichtlich einer stabilen Befestigung der Zirkulationswand im Laderaum kann vorgesehen sein, dass die Zirkulationswand an wenigstens einem sich von der Stirnwand in Richtung des Laderaums, also in Richtung der Rückwand, und wenigstens überwiegend, insbesondere wenigstens im Wesentlichen, in vertikaler Richtung erstreckenden Abstandshalter gehalten ist. Dabei ist unter einer vertikalen Richtung eine Richtung senkrecht zu dem Boden bzw. dem Dach des Kofferaufbaus zu verstehen. Zudem kann vorgesehen sein, dass die wenigstens eine Begrenzung als Abstandshalter ausgebildet ist. Dann kann die wenigstens eine Begrenzung also zum einen den wenigstens einen seitlichen Luftrückführkanal begrenzen, insbesondere von dem wenigstens einen zentralen Luftrückführkanal abgrenzen, und zum anderen als Abstandshalter zwischen der Stirnwand und der Zirkulationswand fungieren. Es können auch mehrere, insbesondere in Querrichtung des Kofferaufbaus verteilt angeordnete, Abstandshalter vorgesehen sein, wobei wenigstens ein Abstandshalter eine Begrenzung sein bzw. bereitstellen kann und/oder wenigstens ein anderer Abstandshalter nicht.

Unabhängig davon, ob der wenigstens eine Abstandshalter eine Begrenzung darstellt oder nicht, kann es sich hinsichtlich einer stabilen und dennoch kostengünstigen Ausgestaltung anbieten, wenn der wenigstens eine Abstandshalter als Profil ausgebildet ist. Ebenso kann es zur Stabilität und Robustheit des wenigstens einen Abstandhalters beitragen, wenn dieser aus Metall, insbesondere Stahl, gebildet ist. Nicht nur stabil und robust, sondern auch verhältnismäßig leicht kann der wenigstens eine Abstandshalter zudem sein, wenn dieser, insbesondere über wenigstens im Wesentlichen seine gesamte Längserstreckung, einen trapezförmigen und/oder hutförmigen und/oder omegaförmigen Querschnitt aufweist.

Um sicherstellen zu können, dass eine ausreichende Menge der zu temperierenden Luft über den wenigstens einen zentralen Luftrückführkanal zu der wenigstens einen Absaugöffnung der Transportkältemaschine gelangt, kann die Zirkulationswand wenigstens 1 cm, vorzugsweise wenigstens 3 cm, insbesondere wenigstens 4 cm, von der Stirnwand beabstandet sein. Um jedoch zu gewährleisten, dass die Zirkulationswand den zur Verfügung stehenden Laderaum nicht zu stark einschränkt, kann alternativ oder zusätzlich vorgesehen sein, dass der Abstand zwischen der Zirkulationswand und der Stirnwand höchstens 30 cm, vorzugsweise höchstens 15 cm, insbesondere höchstens 10 cm, beträgt. Aus demselben Grund kann es vorteilhaft sein, wenn die Zirkulationswand wenigstens im Wesentlichen parallel zu der Stirnwand angeordnet ist. Unabhängig davon kann die Zirkulationswand vorzugsweise aus Metall, insbesondere Stahl, und/oder Holz gebildet sein. So wird eine stabile und widerstandsfähige Ausgestaltung der Zirkulationswand ermöglicht.

Auf die Luftzirkulation im Laderaum kann es sich auch positiv auswirken, wenn nicht nur im Bereich einer Seitenwand des Kofferaufbaus ein seitlicher Luftrückführkanal ausgebildet ist, sondern im Bereich beider Seitenwände jeweils ein seitlicher Luftrückführkanal ausgebildet ist. Dann ist zwischen der Stirnwand und der Anfahrebene einerseits sowie zwischen einer weiteren Seitenwand und wenigstens einer weiteren sich wenigstens überwiegend in vertikaler Richtung erstreckenden Begrenzung andererseits wenigstens ein weiterer sich wenigstens überwiegend in vertikaler Richtung erstreckender seitlicher Luftrückführkanal ausgebildet. Dann ist es hinsichtlich der Vermeidung einer Kurzschlussströmung bevorzugt, wenn der Querschnitt des wenigstens einen weiteren seitlichen Luftrückführkanals wenigstens überwiegend durch wenigstens eine weitere Kurzschlusssperre verschlossen ist.

Die Luftzirkulation der über die Luftleitkanäle eingebrachten Luftströme durch den Kofferaufbau kann dadurch optimiert werden, dass ausgehend von einem ersten Luftleitkanal, dessen Austrittsöffnung den größten Abstand zur Ausblasöffnung der Transportkältemaschine hat, bei jedem in Richtung einer ersten der Längsseitenwände zu einem der Luftleitkanäle benachbart angeordneten Luftleitkanal die Austrittsöffnung jeweils in einem kürzeren Abstand zur Ausblasöffnung der Transportkältemaschine angeordnet ist als die Austrittsöffnung des in Richtung der zweiten Längsseitenwand zu ihm benachbarten Luftleitkanals.

Bei einem derart gestalteten erfindungsgemäßen Kofferaufbau sind also die Abstände der Austrittsöffnungen der Luftleitkanäle ausgehend von dem Luftleitkanal mit dem größten Abstand zwischen seiner Austrittsöffnung und der Ausblasöffnung der Transportkältemaschine in Richtung der Ausblasöffnung der Transportkältemaschine derart abgestuft, dass bei Draufsicht auf die Unterseite des Dachs des Kofferaufbaus die Anordnung der Luftleitkanäle der Anordnung der tonerzeugenden Röhren einer Panflöte gleicht, deren Länge ausgehend von dem am einen seitlichen Rand der Flöte angeordneten Rohr, mit welchem der tiefste Ton erzeugt wird, in Richtung des anderen seitlichen Rands der Flöte stufenweise bis zum kürzesten Rohr abnimmt, mit welchem der höchste Ton erzeugt wird.

Durch die erfindungsgemäß abgestufte Länge leitet der zur einen Längsseitenwand des Kofferaufbaus nächstbenachbart angeordnete erste Luftleitkanal temperierte Luft in den von der Ausblasöffnung am weitesten entfernten Bereich des Laderaums, der zu ihm in Richtung der anderen Längsseitenwand nächstbenachbarte zweite Luftleitkanal temperierte Luft in einen Bereich des Laderaums, der einen kürzeren Abstand zur Ausblasöffnung der Transportkältemaschine hat, der zu diesem zweiten Luftleitkanal in Richtung der zweiten Längsseitenwand nächstbenachbarte dritte Luftleitkanal temperierte Luft in einen Bereich des Laderaums, der einen noch kürzeren Abstand zur Ausblasöffnung der Transportkältemaschine hat, und so fort. Die in die unterschiedlich zur Ausblasöffnung der Transportkältemaschine entfernten Bereiche des Laderaums eingeblasenen Luftströme bilden jeweils eine Luftwalze, die zurück in Richtung der Transportkältemaschine gerichtet ist. Dabei unterstützt die rückströmende Luftbewegung des aus dem zur ersten Längsseitenwand benachbart angeordneten Luftleitkanal mit dem größten Abstand zwischen der Ausblasöffnung der Transportkältemaschine und seiner Austrittsöffnung austretenden Luftstroms die Rückströmbewegung des aus dem zu ihm in Richtung der zweiten Längsseitenwand nächstbenachbart angeordneten Luftleitkanal ausströmenden Luftstroms, durch dessen Rückströmbewegung wiederum die Rückströmbewegung des Luftstroms unterstützt wird, der aus der zu ihm in Richtung der zweiten Längsseitenwand nächstbenachbarten Luftleitkanal austritt, und so fort. Im Ergebnis wird durch die erfindungsgemäße Ausgestaltung und Anordnung der Luftleitkanäle im Laderaum eine kontrollierte Luftströmung erzeugt, die für eine intensive Durchmischung der im Laderaum herrschenden Atmosphäre mit der neu zugeführten temperierten Luft sorgt und auf diese Weise die Gefahr der Entstehung von Totzonen, in denen kein Luftaustausch stattfindet, auf ein Minimum reduziert.

Eine besonders wirksame Luftverteilung stellt sich dabei ein, wenn der Luftleitkanal mit dem größten Abstand seiner Austrittsöffnung zur Ausblasöffnung der Transportkältemaschine nächstbenachbart zu einer der Längsseitenwände angeordnet ist.

Besonders vorteilhaft erweist sich dabei die durch die erfindungsgemäße Gestaltung eines Kofferaufbaus erzielte Luftführung dann, wenn die an einem erfindungsgemäßen Kofferaufbau vorgesehene Transportkältemaschine nicht nur temperierte Luft in den Laderaum einbläst, sondern sie auch aus dem Laderaum absaugt, wobei die zum Absaugen und Einblasen erforderlichen Öffnungen der Transportkältemaschine in an sich bekannter Weise in enger Nachbarschaft zueinander beispielsweise an einer der Wandflächen des Kofferaufbaus angeordnet sind. Insbesondere dann, wenn dabei die Ausblasöffnung in einem geringeren Abstand zum Dach des Kofferaufbaus angeordnet ist als die Absaugöffnung, ergibt sich bei der erfindungsgemäßen Gestaltung in dem Kofferaufbau eine Luftströmung, die das gesamte Volumen des Laderaums über dessen Länge, Breite und Höhe erfasst.

Üblicherweise ist die Ausblasöffnung und die gegebenenfalls zusätzlich vorhandene Absaugöffnung der Transportkältemaschine in eine der ebenen Wandflächen des Kofferaufbaus eingebracht, während die Transportkältemaschine selbst außerhalb des Kofferaufbaus an einer von dessen Außenflächen, insbesondere an der Außenfläche der Stirnwand, befestigt ist. Insbesondere bei einer solchen Anordnung der Ausblasöffnung der Transportkältemaschine ergeben sich optimale Luftströmungen in den Luftleitkanälen, wenn der Abstand der Eintrittsöffnungen der Luftleitkanäle zur Ausblasöffnung der Transportkältemaschine für alle Luftleitkanäle gleich ist. Dabei kann zwischen der Ausblasöffnung und den Eintrittsöffnungen der Luftleitkanäle eine nach Art einer Lufthutze oder desgleichen ausgebildete Luftführungseinrichtung vorgesehen sein, um eine gezielte, insbesondere gleichmäßige, Aufteilung des von der Transportkältemaschine ausgeblasenen Gesamtvolumenstroms an temperierter Luft auf die Luftleitkanäle zu gewährleisten.

Ebenso kann es zur Vergleichmäßigung der Strömungsverhältnisse im Laderaum des erfindungsgemäßen Kofferaufbaus beitragen, wenn der Abstand der Austrittsöffnungen der Luftleitkanäle von der Ausblasöffnung der Transportkältemaschine in einer gleichmäßigen Stufung abnimmt. Auf diese Weise lässt sich eine gleichmäßige Verteilung der in den Laderaum eingeblasenen Teil-Luftströme bewirken. Jedoch kann es abhängig von der Gestalt des Transportguts und des durch dessen Gestalt bedingten Strömungshindernisses auch zweckmäßig sein, die Position des Austritts des jeweiligen Luftleitkanals so zu wählen, dass das Transportgut sicher von einer ausreichenden Luftmenge umströmt wird. Entscheidend bleibt dabei jedoch die durch die erfindungsgemäße Abstufung der Abstände zwischen den Austrittsöffnungen der Luftleitkanäle und der Ausblasöffnung der Transportkältemaschine erzwungene walzenartig zur Ausblasöffnung zurückgerichtete Luftströmung.

Für die Praxis besonders relevant ist eine Ausgestaltung der Erfindung, bei dem in einem erfindungsgemäßen Kofferaufbau mindestens drei Luftleitkanäle vorgesehen sind, von denen der erste Luftleitkanal den größten Abstand zwischen seiner Austrittsöffnung und der Ausblasöffnung der Transportkältemaschine, der nächstbenachbart zur zweiten Längsseitenwand angeordnete zweite Luftleitkanal den kürzesten Abstand zwischen seiner Austrittsöffnung und der Ausblasöffnung der Transportkältemaschine und der zwischen dem ersten Luftleitkanal und dem zweiten Luftleitkanal angeordnete dritte Luftleitkanal einen Abstand zwischen seiner Austrittsöffnung und der Ausblasöffnung der Transportkältemaschine aufweist, der kürzer ist als der Abstand zwischen der Austrittsöffnung des ersten Luftleitkanals und der Ausblasöffnung der Transportkältemaschine, jedoch größer als der Abstand zwischen der Austrittsöffnung des zweiten Luftleitkanals und der Ausblasöffnung der Transportkältemaschine.

Um die Entstehung der erfindungsgemäß beabsichtigten Luftwalze im Laderaum eines erfindungsgemäßen Kofferaufbaus zu unterstützen, kann an der Austrittsöffnung mindestens eines der Luftleitkanäle eine Luftführungseinrichtung angeordnet sein, die den aus dem jeweiligen Luftleitkanal austretenden Luftstrom in Richtung der Längsseitenwand leitet, der der Luftleitkanal mit dem kürzesten Abstand zwischen seiner Austrittsöffnung und der Ausblasöffnung der Transportkältemaschine zugeordnet ist.

Besonders zweckmäßig erweist sich die Erfindung dann, wenn die Transportkältemaschine mit ihrer Ausblasöffnung und ihrer optional vorhandenen Absaugöffnung an der Stirnseite des Kofferaufbaus angeordnet ist und sich die Luftleitkanäle in Richtung der Rückwand des Kofferaufbaus längs von dessen Dach erstrecken.

Grundsätzlich können die Luftleitkanäle bei einem erfindungsgemäßen Kofferaufbau jeden beliebigen Verlauf aufweisen, solange die erfindungsgemäßen Maßgaben in Bezug auf die Anordnung ihrer Austrittsöffnungen eingehalten werden. Eine besonders einfach herzustellende und gleichzeitig zweckmäßige Ausgestaltung ergibt sich dabei dann, wenn die Luftleitkanäle parallel zueinander und zu den Längsseitenwänden des Kofferaufbaus verlaufen.

Insbesondere dann, wenn die Ausblasöffnung der Transportkältemaschine an der Stirn- oder der Rückwand des Kofferaufbaus angeordnet ist, kann es im Hinblick auf eine gleichmäßige Durchmischung der Atmosphäre im Laderaum eines erfindungsgemäßen Kofferaufbaus zudem zweckmäßig sein, die Luftleitkanäle bzw. deren Austrittsöffnungen nur in einem bestimmten, enger zu einer der Längsseiten benachbarten Bereich des Dachs anzuordnen, so dass die aus den Luftleitkanälen ausströmende Luft zunächst in Richtung der anderen Längsseite und dann an dieser zurück in Richtung der Ausblasöffnung umgelenkt wird.

Nachfolgend wird die Erfindung anhand einer ein Ausführungsbeispiel darstellenden Zeichnung näher erläutert. Es zeigen jeweils schematisch:
- Fig. 1: ein Nutzfahrzeug in einer perspektivischen Ansicht von hinten;
- Fig. 2: das Nutzfahrzeug in einer Ansicht von oben;
- Fig. 3: ein Detail des Kofferaufbaus aus Fig. 1 im Bereich der Stirnwand und des Dachs in einer perspektivischen Ansicht;
- Fig. 4: das Nutzfahrzeug aus Fig. 1 im Bereich der Stirnwand in einer Ansicht von oben;
- Fig. 5: ein Detail des Kofferaufbaus aus Fig 1 im Bereich der Stirnwand in einer Querschnittsansicht;
- Fig. 6: eine Luftführungseinrichtung des Kofferaufbaus aus Fig. 1 in einer perspektivischen Ansicht;
- Fig. 7: die Luftführungseinrichtung aus Fig. 6 in einem Längsschnitt;
- Fig. 8: Luftführungseinrichtungen in einer alternativen Ausgestaltung in einer perspektivischen Ansicht;
- Fig. 9: den Kofferaufbau aus Fig. 1 mit darin eingezeichnetem Strömungsverlauf der eingeblasenen temperierten Luft;
- Fig. 10: den Kofferaufbau aus Fig. 1 im Bereich der Stirnwand in einer perspektivischen Ansicht;
- Fig. 11: den Kofferaufbau aus Fig. 1 im Bereich der Stirnwand in einem Längsschnitt;
- Fig. 12: ein Detail des Kofferaufbaus aus Fig. 1 im Bereich der Stirnwand in einem Längsschnitt;
- Fig. 13: eine alternative Ausgestaltung eines Kofferaufbaus im Bereich der Stirnwand in einer perspektivischen Ansicht.
- Fig. 14A-B: ein Detail des Kofferaufbaus aus Fig. 1 im Bereich des Dachs und eines Luftleitkanals in einer Schnittansicht entlang einer vertikalen und sich parallel zur Längserstreckung des Kofferaufbaus erstreckenden Schnittebene und entlang einer vertikalen und sich senkrecht zur Längserstreckung des Kofferaufbaus erstreckenden Schnittebene;
- Fig. 15A-C: den Kofferaufbau aus Fig. 1 im Bereich des vorderen, mit einer Kammer der Luftführungseinrichtung verbundenen Endes, im Bereich einer mittleren Aufhängung des Luftleitkanals und im Bereich des hinteren Endes des Luftleitkanals jeweils in einer perspektivischen Schnittansicht;
- Fig. 16: den Kofferaufbau aus der Fig. 1 im Bereich des hinteren Endes des Luftleitkanals entlang einer vertikalen und sich senkrecht zur Längserstreckung des Kofferaufbaus erstreckenden Schnittebene;
- Fig. 17A-B: Details eines zweiten erfindungsgemäßen Kofferaufbaus im Bereich des Dachs und eines Luftleitkanals in einer perspektivischen Schnittansicht und in einem Längsschnitt.

Bei dem in den Figuren dargestellten Nutzfahrzeug 1 handelt es sich um einen Sattelauflieger, der im Gebrauch von einer Zugmaschine 2 gezogen wird. Das Nutzfahrzeug 1 umfasst ein Chassis 3 konventioneller Bauart, an dem in üblicher Weise die Achsen mit den Rädern des Nutzfahrzeugs 1 gelagert sind und das einen Boden 4 trägt, auf dem ein Kofferaufbau 5 errichtet ist.

Der quaderförmige Kofferaufbau 5 umfasst zwei in üblicher Weise als feste Wandpaneele ausgebildete Längsseitenwände 6,7, die sich über die Länge des Nutzfahrzeugs 1 erstrecken und von denen jeweils eine an einer der Längsseiten LS1,LS2 des Nutzfahrzeugs 1 angeordnet ist, eine Stirnwand 8, die die Längsseitenwände 6,7 an der dem Zugfahrzeug 2 zugeordneten, bei normaler Vorwärtsfahrt vorne angeordneten Stirnseite des Nutzfahrzeugs 1 miteinander verbindet, eine Rückwand 9, die an der zur Stirnwand 8 gegenüberliegenden Seite die Längsseitenwände 6,7 miteinander verbindet und eine Türanlage 10, über die der vom Kofferaufbau 5 umgrenzte Laderaum 11 beladen werden kann, und ein Dach 12, das von den Längsseitenwänden 6,7, der Stirnwand 8 und der Rückwand 9 getragen ist.

An der Außenseite 13 der Stirnwand 8 ist in ebenso bekannter Weise eine konventionelle Transportkältemaschine 14 angeordnet, die über drei in einen oberen Abschnitt der Stirnwand 8 eingeformte, in enger Nachbarschaft zu dem Laderaum 11 zugeordneten Unterseite 15 des Dachs 12 und in einer Reihe angeordnete Ausblasöffnungen 16 temperierte Luft in den Laderaum 11 bläst.

In Richtung des Bodens 4 versetzt unterhalb der Ausblasöffnungen 16 ist in der Stirnwand 8 eine Absaugöffnung 17 angeordnet, über die die Transportkältemaschine 14 aus dem Laderaum 11 Luft absaugt.

An der Unterseite 15 des Dachs 12 sind drei Luftleitkanäle 18,19,20 angeordnet. Die aus unter das Dach 12 gespannten textilem Bahnmaterial gebildeten Luftleitkanäle 18,19,20 erstrecken sich jeweils parallel zueinander und parallel zur Längsachse X des Nutzfahrzeugs 1. Dabei sind ihre der Ausblasöffnungen 16 der Transportkältemaschine 14 zugeordneten Eintrittsöffnungen 21,22,23 in einem für alle Luftleitkanäle 18,19,20 gleichen Abstand A zu den Ausblasöffnungen 16 angeordnet.

Für die Zuteilung des aus den Ausblasöffnungen 16 der Transportkältemaschine 14 austretenden Gesamtluftstroms LG sind weiter unten näher erläuterte Luftführungseinrichtungen 24 vorgesehen, die an der Stirnwand 8 sitzen und mit ihrer Eingangsöffnung die Ausblasöffnungen 16 der Transportkältemaschine 14 abdeckt. Durch nach Art von Kanälen ausgebildeten Luftführungseinrichtungen 24 wird der von der Transportkältemaschine 14 ausgebrachte Gesamtluftstrom LG an temperierter Luft in drei Luftströme L1,L2,L3 geteilt, von denen jeweils einer in einen der Luftleitkanäle 18,19,20 geleitet wird.

Der erste Luftleitkanal 18 ist dabei eng benachbart zur ersten Längsseitenwand 6 des Kofferaufbaus 5 angeordnet. Der zweite Luftleitkanal 19 ist dagegen in Richtung der zweiten Längsseitenwand 7 versetzt zu dem ersten Luftleitkanal 18 nächstbenachbart zur zweiten Längsseitenwand 7 angeordnet, wobei der Abstand zwischen dem zweiten Luftleitkanal 19 und der Längsseitenwand 7 größer ist als der Abstand zwischen dem ersten Luftleitkanal 18 und der zu ihm nächstbenachbarten Längsseitenwand 6. Mittig zwischen den Luftleitkanälen 18,19 sitzt der dritte Luftleitkanal 20.

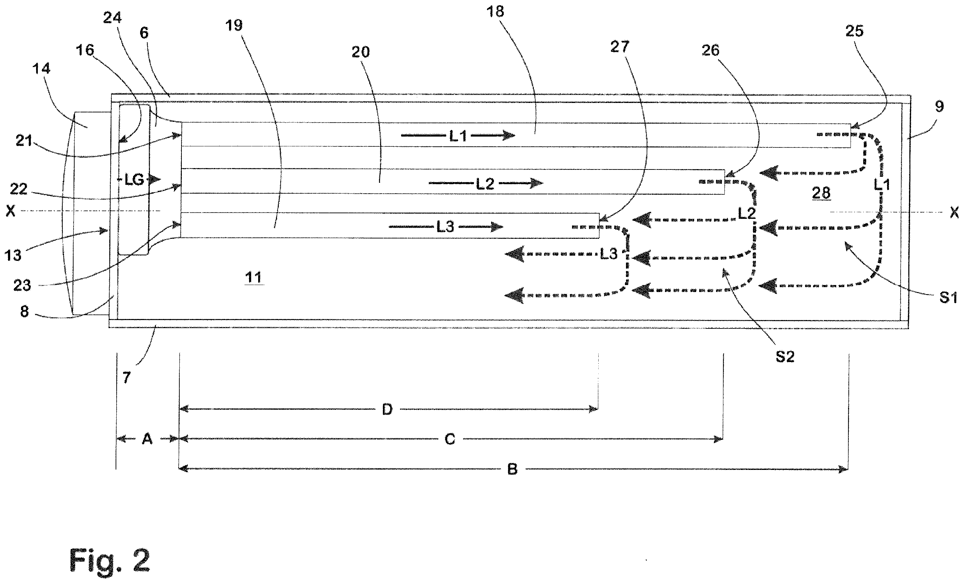

Der Abstand B zwischen der Eintrittsöffnung 21 und der der Rückwand 9 des Kofferaufbaus 5 zugeordneten Austrittsöffnung 25 des zur ersten Längsseitenwand 6 nächstbenachbart angeordneten Luftleitkanals 18 ist größer als der Abstand C der Eintrittsöffnung 22 und der der Rückwand 9 des Kofferaufbaus 5 zugeordneten Austrittsöffnung 26 des in Richtung auf die zweite Längsseitenwand 7 zum Luftleitkanal 18 nächstbenachbart angeordneten Luftleitkanals 20. Der Abstand C zwischen der Eintrittsöffnung 22 und der Austrittsöffnung 26 des Luftleitkanals 20 ist wiederum größer als der Abstand D der Eintrittsöffnung 23 und der ebenfalls der Rückwand 9 des Kofferaufbaus 5 zugeordneten Austrittsöffnung 27 des in Richtung auf die zweite Längsseitenwand 7 zum Luftleitkanal 20 nächstbenachbart angeordneten Luftleitkanals 19. Die Differenz zwischen dem Abstand B und dem Abstand C ist dabei gleich der Differenz zwischen dem Abstand D und dem Abstand C, so dass sich bei Draufsicht auf die Luftleitkanäle 18,19,20 (Fig. 2) eine gleichmäßige Abstufung der Längen der Luftleitkanäle 18,19,20 ergibt.

Im Betrieb tritt der dem längsten Luftleitkanal 18 zugeteilte Luftstrom L1 aus der Austrittsöffnung 25 des Luftleitkanals aus und wird im Zwickel zwischen der Rückwand 9 und der ersten Längsseitenwand 6 in Richtung der zweiten Längsseitenwand 7 umgelenkt, so dass sich im an die Rückwand 9 angrenzenden hinteren Bereich 28 des Laderaums 11 bereits eine in Richtung der Stirnwand 8 gerichtete Strömungswalze S1 ergibt. Der aus der Austrittsöffnung 26 des mittleren Luftleitkanals 20 mit größerem Abstand zur Rückwand 9 austretende Luftstrom L2 trifft auf die Strömungswalze S1 und wird von ihr ebenfalls in Richtung der zweiten Längsseitenwand 7 und der Stirnwand 8 umgelenkt. Genauso ergeht es dem aus der Austrittsöffnung 27 des kürzesten Luftleitkanals 19 mit noch größerem Abstand zur Rückwand 9 austretendem Luftstrom L3, der von der aus dem Luftstrom L1 und dem Luftstrom L2 gebildeten Strömungswalze S2 in Richtung der zweiten Längswand 7 und der Stirnwand 8 gezwungen wird.

Im Ergebnis wird auf diese Weise eine kräftige in Richtung der Stirnwand 8 gerichtete Rückströmung erzeugt, durch die sichergestellt ist, dass der Laderaum 11 auch dann, wenn in ihm Transportgut dicht gestapelt ist, von der von der Transportkältemaschine 14 eingeblasenen temperierten Luft intensiv durchströmt wird.

Die voranstehend beschriebene Umlenkung der aus den Luftleitkanälen 18,19,20 austretenden Luftströme L1,L2,L3 kann zusätzlich durch nahe der Austrittsöffnungen 25,26,27 angeordnete, hier der Übersichtlichkeit halber nicht gezeigte Luftleitelemente unterstützt werden, die die austretenden Luftströme L1,L2,L3 jeweils in Richtung der zweiten Längsseitenwand 7 lenken.

Die zu der Stirnwand 8 gelangende Luftströmung wird über die Absaugöffnung 17 von der Transportkältemaschine 14 abgesaugt, temperiert und über die Ausblasöffnungen 16 erneut in den Laderaum 11 geblasen.

Wie oben schon erwähnt, strömt die aus den Ausblasöffnungen 16 austretende temperierte Luft in drei innerhalb des Laderaums 11 angeordnete, kanalartige Luftführungseinrichtungen 24, die sie in den jeweils zugeordneten Luftleitkanal 18,19,20 führen. Über die Luftleitkanäle 18,19,20 wird die temperierte Luft zu hinteren Bereichen des Laderaums 11 transportiert, wo die temperierte Luft über an den hinteren Längsenden der Luftleitkanäle 18,19,20 angeordnete Luftkanalöffnungen aus den Luftleitkanälen 18,19,20 in den Laderaum 11 strömt.

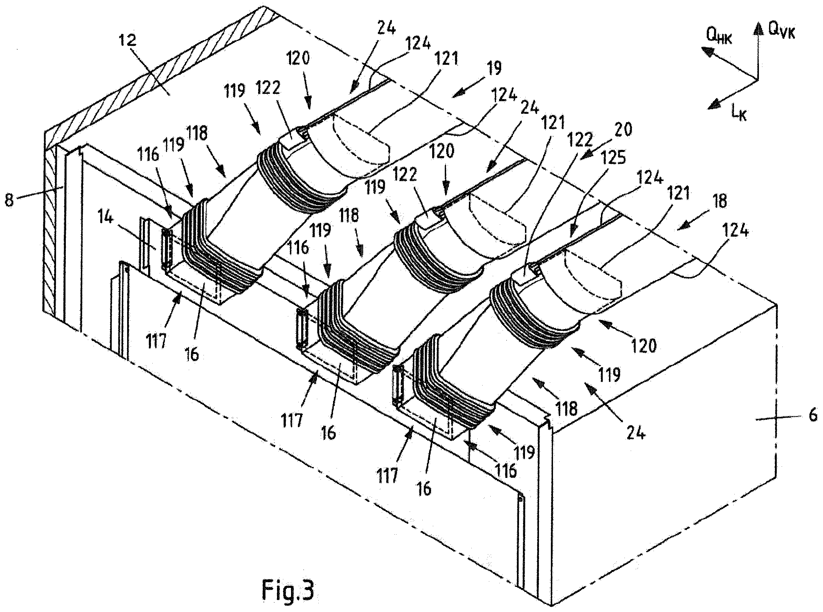

In der Fig. 3 ist der Kofferaufbau 5 im Bereich der Stirnwand 8 und des Dachs 12 dargestellt. Die gleichartig ausgebildeten Luftführungseinrichtungen 24 weisen jeweils in Strömungsrichtung der Luftströme L1,L2,L3 nacheinander angeordnet einen Einlassabschnitt 116 mit einer Einlassöffnung 117, zwei durch einen mittleren Abschnitt 118 voneinander beabstandete flexibel ausgebildete Verstellabschnitte 119 sowie einen Auslassabschnitt 120 mit einem hinteren Ende 121 auf. Dabei sind die Luftführungseinrichtungen 24 jeweils über eine Verbindung mit der Transportkältemaschine 14 und eine Verbindung mit dem Dach 12 in dem Laderaum 11 montiert. So sind zum einen die Auslassabschnitte 120 jeweils über zwei auf gegenüberliegenden Seiten des entsprechenden Auslassabschnitts 120 angeordneten Führungen in Form von Schienen 122 am Dach 12 des Kofferaufbaus 5 gehalten. Zum anderen sind die Einlassabschnitte 116 derart an der Transportkältemaschine 14 befestigt, dass die Einlassöffnungen 117 spaltfrei mit der jeweils zugeordneten Ausblasöffnung 16 verbunden sind. Dabei sind zudem die Einlassöffnungen 117 und die Ausblasöffnungen 16 derart relativ zueinander angeordnet, dass die Projektionen der Ausblasöffnungen 16 in Längsrichtung L_{K} des Kofferaufbaus 5 in eine Ebene quer zum Kofferaufbau 5 in Gänze innerhalb der entsprechenden Projektionen der Einlassöffnungen 117 in Längsrichtung L_{K} des Kofferaufbaus 5 angeordnet sind und die Projektionen der Einlassöffnungen 117 zu etwa 90 % innerhalb der Projektionen der Ausblasöffnungen 16 in Längsrichtung L_{K} des Kofferaufbaus 5 in einer Ebene quer zum Kofferaufbau 5 angeordnet sind.

Bei dem Kofferaufbau 5 sind die Luftleitkanäle 18,19,20 jeweils durch das Dach 12 und ein Hüllelement 123 in Form einer Plane gebildet. Dabei ist das Hüllelement 123 an seinen beiden Längsrändern 124 in der weiter unten erläuterten Weise am Dach 12 des Kofferaufbaus 5 derart befestigt, dass das Hüllelement 123 in der Mitte durchhängt und die Längsränder 124 des Hüllelements 123 vom Dach 12 beabstandet angeordnet sind. Dies führt dazu, dass der Luftleitkanal 18,19,20 zwischen dem Dach 12 und den Längsrändern 124 seitliche Luftleitkanalöffnungen 125 aufweist, die sich im Wesentlichen über die gesamte Länge des Luftleitkanals 18,19,20 erstrecken und über die temperierte Luft seitlich aus dem Luftleitkanal 18,19,20 in den Laderaum 11 strömen kann.

Die hinteren Enden 121 der Auslassabschnitte 120 sind in der Fig. 3 jeweils in einer Grundstellung abgebildet, in der sich die Auslassabschnitte 120 teilweise in die Luftleitkanäle 18,19,20 hinein erstrecken, so dass die hinteren Enden 121 in den Luftleitkanälen angeordnet sind. Von dieser Grundstellung können die hinteren Enden 121, etwa wenn es zu einer Stapleranfahrt der mittleren Abschnitte 118 der Luftführungseinrichtungen 24 kommt, über die Schienen 122 entlang der Längsrichtung des Kofferaufbaus L_{K} in eine Ausweichstellung verschoben werden. Dabei werden die Auslassabschnitte 120 jeweils teilweise aus dem zugehörigen Luftleitkanal 18,19,20 herausgezogen und die Verstellabschnitte 119 gestaucht und gebogen, so dass sich der Abstand zwischen den hinteren Enden 121 und den Einlassöffnungen 117 in Längsrichtung des Kofferaufbaus L_{K} verringert. Zudem sind die dargestellten und insoweit bevorzugten Luftführungseinrichtungen 24 aus einem elastomeren Material, beispielsweise Polyethylen (PE), hergestellt, so dass sich die Luftführungseinrichtungen 24 bei einer Stapleranfahrt elastisch verformen können.

Wenn entweder die Verbindungen der Luftführungseinrichtungen 24 zu der Transportkältemaschine 14 oder die Verbindungen zu dem Dach 12 des Kofferaufbaus 5 und den Luftleitkanälen getrennt sind, befinden sich die Luftführungseinrichtungen 24 nicht, wie in Fig. 3 dargestellt, in einem montierten Zustand, sondern in einem teilmontierten Zustand. Dann können die hinteren Enden 121 jeweils von der der in der Fig. 3 dargestellten Grundstellung entsprechenden Leitstellung relativ zu der zugehörigen Einlassöffnung 117 nicht nur in Längsrichtung des Kofferaufbaus L_{K} verschoben werden, sondern in drei zueinander senkrechten Raumrichtungen, nämlich der Längsrichtung des Kofferaufbaus L_{K}, der horizontalen Querrichtung des Kofferaufbaus Q_{HK} und der vertikalen Querrichtung (= Höhenrichtung) des Kofferaufbaus Q_{VK}, in unterschiedliche Leitstellungen und zurück verstellt werden.

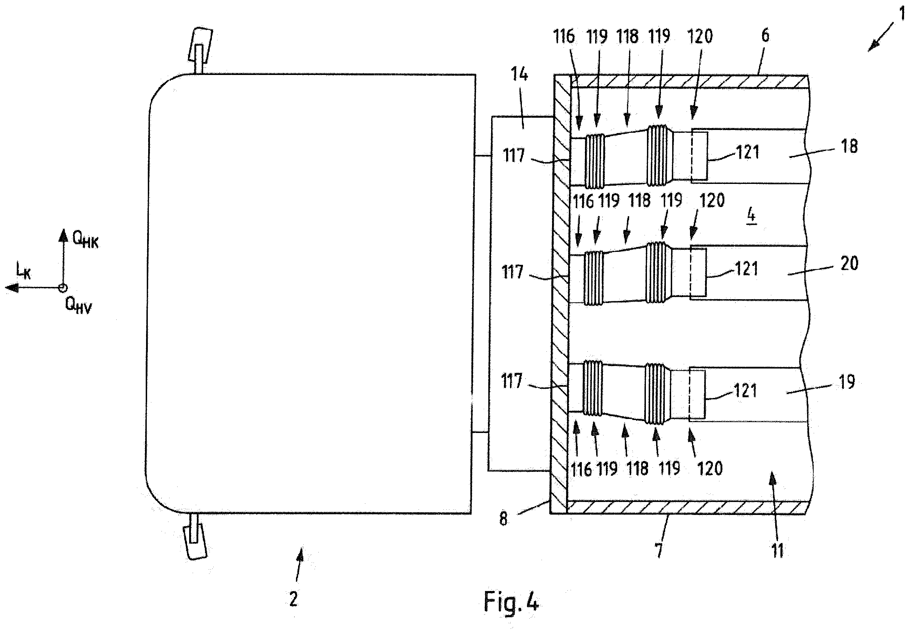

In der Fig. 4 ist das Nutzfahrzeug 1 in einem vorderen Bereich in einer Ansicht von oben dargestellt, wobei der Kofferaufbau 5 entlang einer horizontalen Schnittebene geschnitten dargestellt ist. Dabei sind die Luftführungseinrichtungen 24 so in dem Laderaum 11 montiert, dass die hinteren Enden 121 der beiden in Fahrtrichtung rechts angeordneten Luftführungseinrichtungen 24 relativ zu den zugehörigen Einlassöffnungen 117 jeweils eine andere Leitstellung einnehmen als das hintere Ende 121 der in Fahrtrichtung links angeordneten Luftführungseinrichtung 24. Zudem ragen die Auslassabschnitte 120 teilweise in die sich in Längsrichtung des Kofferaufbaus L_{K} erstreckenden Luftleitkanäle 18,19,20 hinein, so dass die hinteren Enden 121 in den Luftleitkanälen 18,19,20 angeordnet sind.

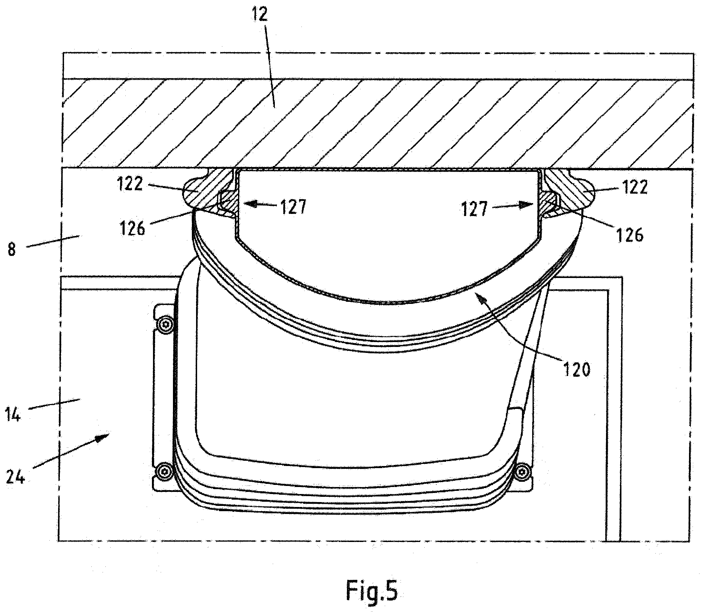

In der Fig. 5 ist der Kofferaufbau 5 im Bereich des Dachs 12 des Kofferaufbaus 5 und der in Fahrtrichtung rechts angeordneten Luftführungseinrichtung 24 in einem Querschnitt dargestellt. Vorliegend weist die Luftführungseinrichtung 24 im Bereich des Auslassabschnitts 120 zwei auf gegenüberliegenden Seiten des Auslassabschnittes 120 angeordnete Halterippen 126 auf, die sich entlang des Auslassabschnittes 120 erstrecken. Dabei greifen die Halterippen 126 in Aufnahmen 127 der an dem Dach 12 befestigten Schienen 122 ein, so dass der Auslassabschnitt 120 in Längsrichtung des Kofferaufbaus L_{K} verschiebbar an den Schienen 122 gehalten ist. Der durch die Luftführungseinrichtung 24 im Bereich des Auslassabschnitts 120 definierte Strömungsquerschnitt weist bei der dargestellten und insoweit bevorzugten Luftführungseinrichtung 24 in einem oberen Teil eine rechteckige Form und in einem unteren Teil die Form eines Kreissegments auf. Der durch die Luftführungseinrichtung 24 im Bereich des Auslassabschnitts 120 definierte Strömungsquerschnitt kann aber auch jede andere Form annehmen und kann insbesondere an die Form des der Luftführungseinrichtung 24 nachgeordneten Luftleitkanals 18,19,20 angepasst sein.

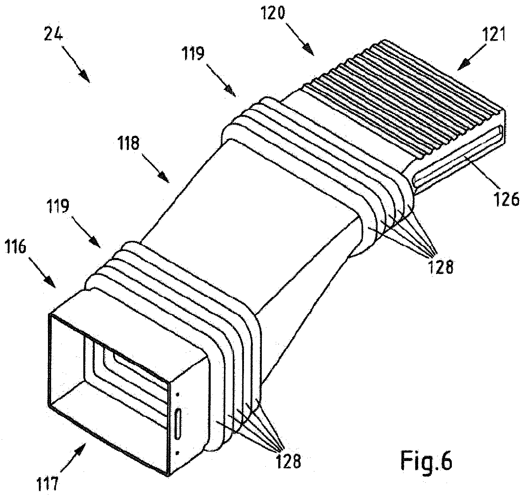

In der Fig. 6 ist eine der Luftführungseinrichtungen 24 in einer perspektivischen Ansicht dargestellt. Die Luftführungseinrichtung 24 ist über die gesamte Länge als umlaufend geschlossener Kanal ausgebildet, so dass die gesamte in die Einlassöffnung 117 einströmende temperierte Luft entlang der Luftführungseinrichtung 24 zu dem hinteren Ende 121 geleitet wird und dort aus der Luftführungseinrichtung 24 ausströmt. Die beiden Verstellabschnitte 119 sind vorliegend aus jeweils fünf flexiblen Rippen 128 gebildet, die entlang des entsprechenden Verstellabschnitts 119 hintereinander angeordnet sind. Die Rippen 128 sind dabei, ebenso wie die Luftführungseinrichtung 24 selbst, umlaufend ausgebildet.

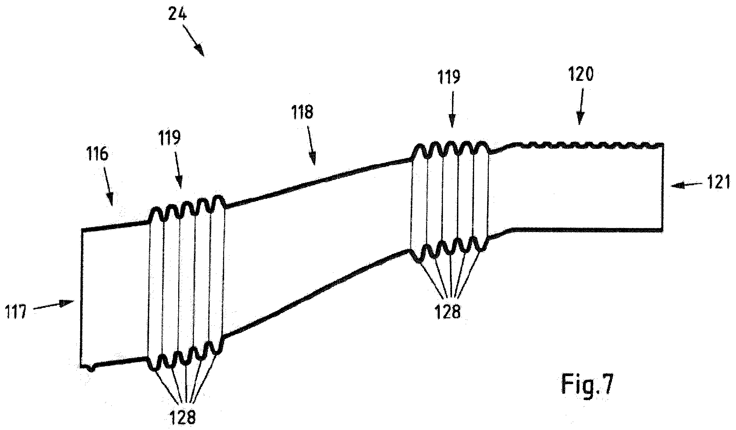

In der Fig. 7 ist die Luftführungseinrichtung 24 in einem Längsschnitt dargestellt. Bei der Luftführungseinrichtung 24 sind die Rippen 128 jeweils als lokale Querschnittserweiterungen der Luftführungseinrichtung 24 ausgebildet. Es könnte jedoch ebenso vorgesehen sein, dass einzelne oder alle Rippen 128 jeweils als lokale Querschnittsverengung der Luftführungseinrichtung 24 ausgebildet sind. Der durch die Luftführungseinrichtung 24 definierte Strömungsquerschnitt ändert sich entlang eines Großteils, nämlich entlang des Einlassabschnitts 116, des mittleren Abschnitts 118 und des Auslassabschnitts 120, der Luftführungseinrichtung 24, wenn überhaupt, ausschließlich kontinuierlich. Lediglich im Bereich der Verstellabschnitte 119 ändert sich der durch die Luftführungseinrichtung 24 definierte Strömungsquerschnitt aufgrund der Ausbildung der Rippen 128 als lokale Querschnittserweiterungen sprunghaft.

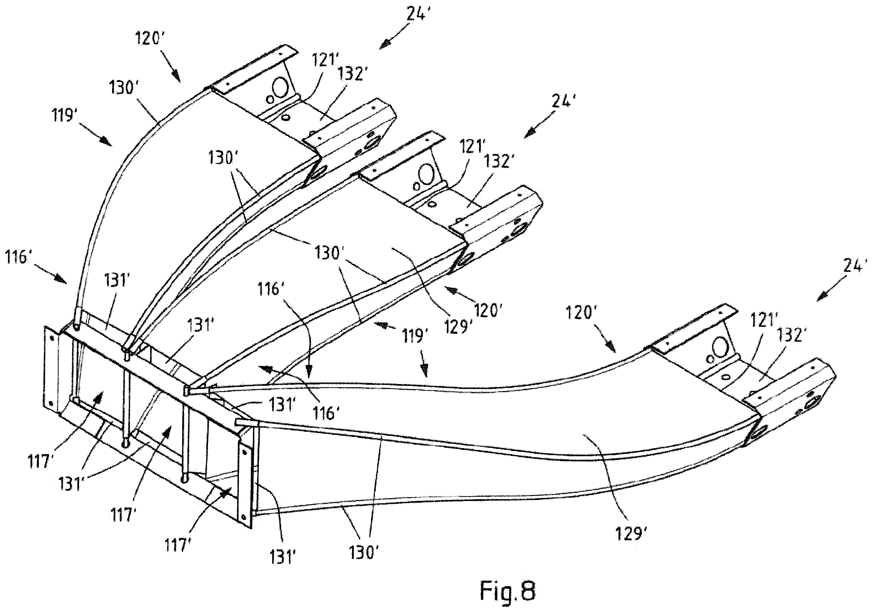

In der Fig. 8 sind Luftführungseinrichtungen 24' und eine Ausblasöffnung 16' jeweils in einer alternativen Ausgestaltung dargestellt. Die Luftführungseinrichtungen 24' weisen im Gegensatz zu den Luftführungseinrichtungen 24 gemäß Fig. 3 bis 7 jeweils lediglich einen flexiblen Verstellabschnitt 119' auf, der sich allerdings über die gesamte Länge der entsprechenden Luftführungseinrichtung 24' erstreckt. Dementsprechend können die Einlassabschnitte 116' und die Auslassabschnitte 120' als Teil der entsprechenden Verstellabschnitte 119' angesehen werden. Zwingend ist dies jedoch nicht. Zudem weisen die Verstellabschnitte 119' nicht mehrere flexible Rippen, sondern jeweils eine Plane 129' und vier stabförmige, aber flexible Verstärkungselemente 130' auf, über die die Plane gehalten ist. Dabei können die Planen 129' beispielsweise nicht dargestellte Schlaufen aufweisen, durch die die Verstärkungselemente 130' geführt sind, und so an den Verstärkungselementen 130' gehalten sein. Im Gegensatz zu den Einlassöffnungen 117 und den Ausblasöffnungen 16 gemäß Fig. 3 sind die Einlassöffnungen 117' und die Ausblasöffnung 16' nicht spaltfrei miteinander verbunden, sondern die Einlassöffnungen 117' sind beabstandet zu der Ausblasöffnung 16' angeordnet, so dass sich Spalte 131' zwischen den Einlassöffnungen 117' und der Ausblasöffnung 16' bilden. Zwingend ist dies jedoch nicht, so könnten die Einlassöffnungen 117' und die Ausblasöffnung 16' alternativ auch spaltfrei miteinander verbunden sein. Dies kann beispielsweise den Vorteil haben, dass auch in den in unmittelbarer Nähe zur Ausblasöffnung 16' angeordneten Bereich temperierte Luft geleitet wird. Schließlich weisen die Luftführungseinrichtungen 24' anstatt der Halterippen 126 gemäß Fig. 5 und 6 jeweils ein sich an das hintere Ende 121' anschließende Halteelemente 132' zum Umgreifen einer Schiene 122 auf.

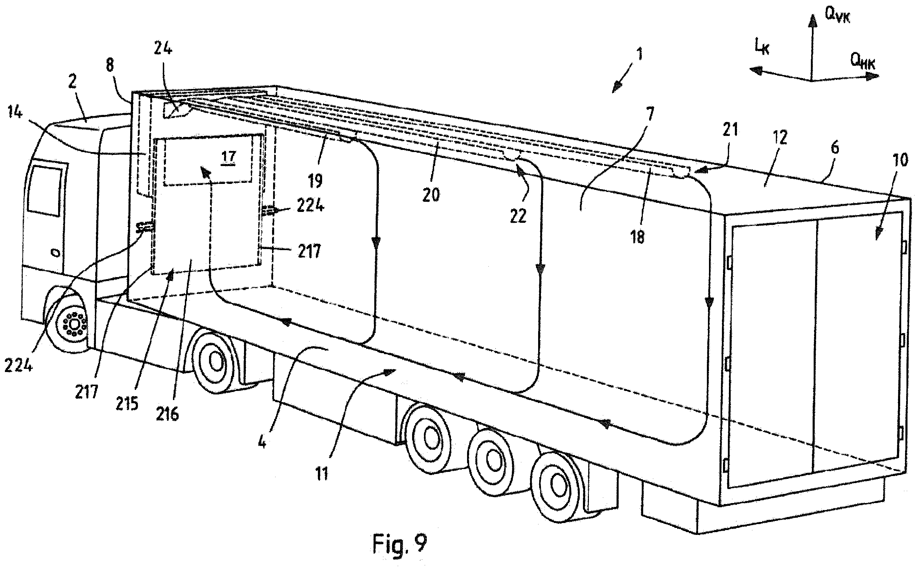

Wie oben schon anhand von Fig. 2 erläutert, strömt die temperierte Luft nach dem Austritt aus den Austrittsöffnungen 25,26,27 der Luftführungskanäle 18,19,20 und fällt dann, wie in Fig. 9 gezeigt, unter Abgabe oder Aufnahme von Wärme an die im Laderaum 11 aufgenommene Ladung in Richtung des Bodens 4 ab, bis sie wenigstens tendenziell in einem Bereich nahe des Bodens 4 zurück in Richtung der Stirnwand 8 des Kofferaufbaus 5 strömt. Dort wird die Luft dann über mehrere zentrale Luftrückführungskanäle 215, die vorliegend zwischen der Stirnwand 8 und einer Zirkulationswand 216 sowie zwischen zwei Begrenzungen 217 ausgebildet sind, aus dem Laderaum 11 zu der Absaugöffnung 17 der Transportkältemaschine 14 geleitet. Es bildet sich so ein geschlossener Luftkreislauf.

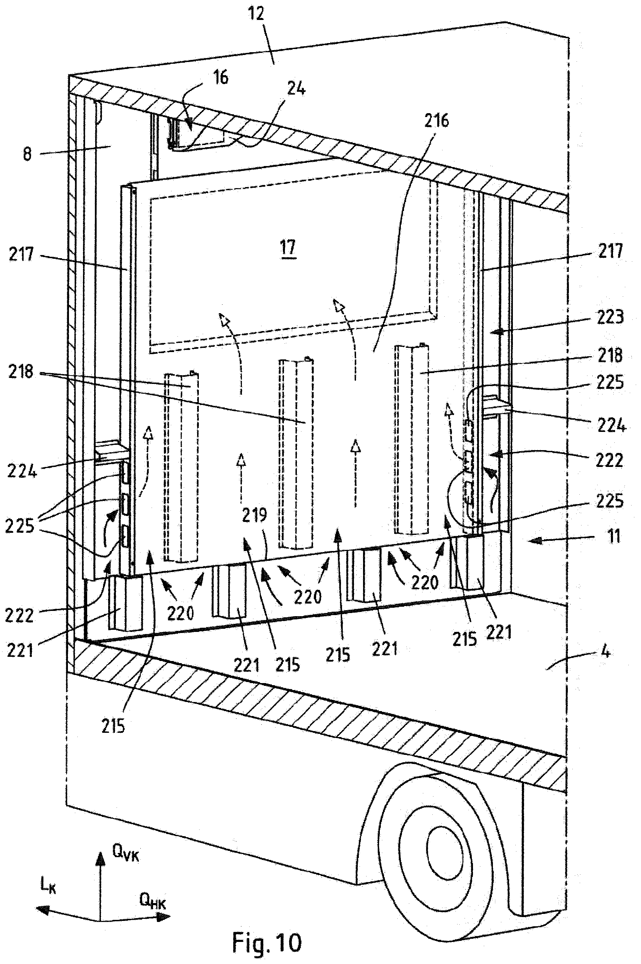

In der Fig. 10 ist der Kofferaufbau 5 im Bereich der Stirnwand 8 in einer perspektivischen Ansicht dargestellt. Beim dargestellten und insoweit bevorzugten Kofferaufbau 5 ist die Zirkulationswand 216 über drei sich in vertikaler Richtung Q_{VK}, also senkrecht zum Boden 4 bzw. Dach 12, erstreckende Abstandshalter 218 an der Stirnwand 8 gehalten, die jeweils als Profil mit hutförmigem Querschnitt ausgebildet und aus einem Stahlblech hergestellt sind. Dabei erstreckt sich die Zirkulationswand 216 zwischen den zwei sich ebenfalls in vertikaler Richtung Q_{VK} erstreckenden Begrenzungen 217, die bedarfsweise ebenfalls als Abstandshalter angesehen werden können. Dementsprechend erstrecken sich auch die zentralen Luftrückführungskanäle 215, die zwischen den Begrenzungen 217 und den Abstandshaltern 218 oder zwischen den Abstandshaltern untereinander ausgebildet sind, in vertikaler Richtung Q_{VK}. Zwischen dem unteren Rand 219 der Zirkulationswand 216 und der Stirnwand 8 weisen die zentralen Luftrückführungskanäle 215 untere Einströmöffnungen 220 auf, über die die zu kühlende Luft im Bereich des Bodens 4 in vertikaler Richtung Q_{VK} in die zentralen Luftrückführungskanäle 215 einströmen kann. Vorliegend sind zwischen der Zirkulationswand 216 und dem Boden 4 zudem Distanzelemente 221 an der Stirnwand 8 befestigt, die ebenso wie die Abstandshalter 218 als Stahlblechprofile mit hutförmigem Querschnitt ausgebildet sind und ein Versperren der unteren Einströmöffnungen 220, etwa durch fehlerhafte Beladung des Laderaums 11, verhindern. Alternativ zu den dargestellten und als Hutprofil ausgebildeten Abstandshaltern 218 kann auch wenigstens ein Abstandshalter vorgesehen sein, der wenigstens einen Durchbruch bzw. wenigstens eine Öffnung aufweist, durch den bzw. durch die die Luft quer zur Längserstreckung des Abstandshalters von einem Luftleitkanal 215 zu einem angrenzenden Luftleitkanal 215 strömen kann. Eine entsprechende, insbesondere horizontale Luftströmung parallel zur Stirnwand 8, kann für eine gleichmäßige Luftverteilung sorgen und/oder aus fluiddynamischen Gründen zweckmäßig sein.

Zu beiden Seiten der Zirkulationswand 216 sind zwischen der jeweiligen Begrenzung 217 und der entsprechenden Seitenwand 6,7 des Kofferaufbaus 5 einerseits sowie zwischen der Stirnwand 8 und der durch die dem Laderaum 11 zugewandte Fläche der Zirkulationswand 216 definierte Anfahrebene andererseits seitliche Luftrückführkanäle 222,223 ausgebildet, die sich ebenfalls in vertikaler Richtung Q_{VK} erstrecken. Dabei sind die Querschnitte der seitlichen Luftrückführkanäle 222,223 bedarfsweise etwa gleich ausgebildet und jeweils wenigstens im Wesentlichen durch eine Kurzschlusssperre 224 verschlossen. Die Kurzschlusssperren 224 begrenzen jeweils einen unteren seitlichen Luftrückführkanal 222 nach oben und einen oberen seitlichen Luftrückführkanal 223 nach unten. Somit werden die oberen seitlichen Luftrückführkanäle 223 von den unteren seitlichen Luftrückführkanälen 222 durch die Kurzschlusssperren 224 abgegrenzt.

Neben den zwischen dem unteren Rand 219 der Zirkulationswand 216 und der Stirnwand 8 angeordneten unteren Einströmöffnungen 220 weisen die zwei zu den seitlichen Luftrückführkanälen 222,223 benachbarten zentralen Luftrückführungskanäle 215 jeweils drei in der entsprechenden Begrenzung 217 angeordnete seitliche Einströmöffnungen 225 auf. Über diese seitlichen Einströmöffnungen 225 kann die zu kühlende Luft aus den unteren seitlichen Luftrückführkanälen 222 etwa in Querrichtung des Kofferaufbaus Q_{HK} in die entsprechenden zentralen Luftrückführungskanäle 215 einströmen. Dabei weisen die in den Begrenzungen 217 angeordneten seitlichen Einströmöffnungen 225 jeweils einen länglichen Öffnungsquerschnitt auf, der sich in Längsrichtung der zugehörigen Begrenzung 217, die vorliegend der vertikalen Richtung Q_{VK} entspricht, erstreckt.

Im beladenen Zustand des Kofferaufbaus 1, wenn also die Ladung angrenzend zu der Zirkulationswand 216 angeordnet ist und somit die seitlichen Luftrückführkanäle 222,223 in Richtung des Laderaums 11 bzw. in Längsrichtung des Kofferaufbaus L_{K} verschließt, verhindern die Kurzschlusssperren 224, dass temperierte Luft kurz nach dem Ausströmen aus den Auslassöffnungen 120,120' der Transportkältemaschine 14 über die seitlichen Luftrückführkanäle 222,223 zu der Absaugöffnung 17 der Transportkältemaschine 14 gelangt. Vor diesem Hintergrund verschließen bei dem dargestellten und insoweit bevorzugten Kofferaufbau 5 die Kurzschlusssperren 224 die seitlichen Luftrückführkanäle 222,223 unterhalb der Auslassöffnungen 120,120' und der Absaugöffnung 17 der Transportkältemaschine 14 und oberhalb der seitlichen Einströmöffnungen 225.

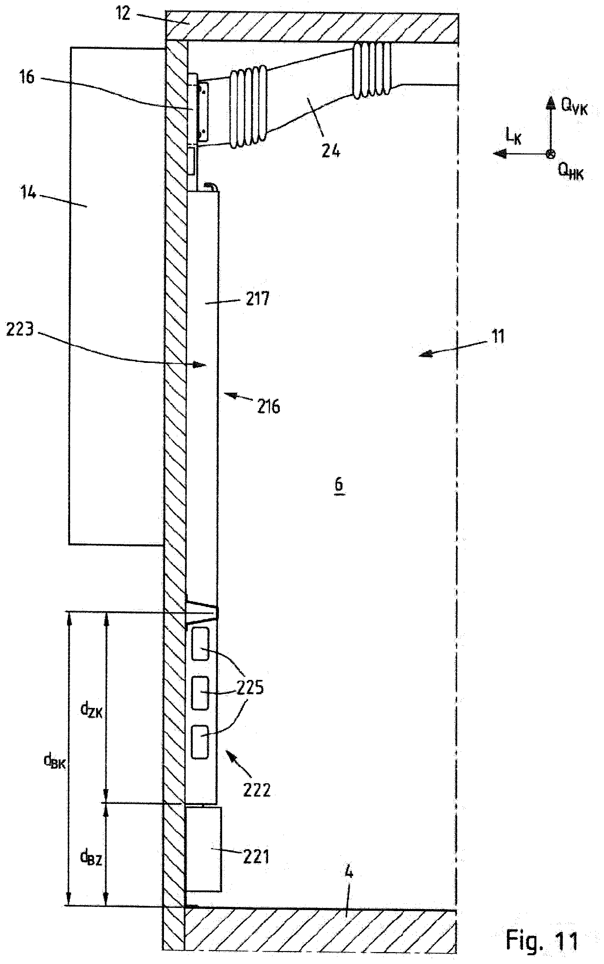

In der Fig. 11 ist der Kofferaufbau 5 im Bereich der Stirnwand 8 in einer seitlichen Ansicht dargestellt. Bei dem dargestellten und insoweit bevorzugten Ausführungsbeispiel verschließen die Kurzschlusssperren 224 die seitlichen Luftrückführkanäle 222,223 in einem Abstand d_{BK} zum Boden 4 des Kofferaufbaus 5 von etwa 100 cm und in einem Abstand d_{ZK} zum unteren Rand 219 der Zirkulationswand 216 von etwa ca. 65 cm. Dementsprechend beträgt der Abstand d_{BZ} zwischen dem Boden 4 und dem unteren Rand 219 der Zirkulationswand 216 etwa 35 cm. Die Kurzschlusssperren 224 sind als Profile ausgebildet, die jeweils einen hutförmigen Querschnitt aufweisen und aus einem Stahlblech gebildet sind. Zudem erstrecken sich die Kurzschlusssperren 224 in Querrichtung des Kofferaufbaus Q_{HK} und sind einteilig ausgebildet. Eine mehrteilige, insbesondere zweiteilige Ausgestaltung der Kurzschlusssperren 224 ist jedoch ebenso denkbar.

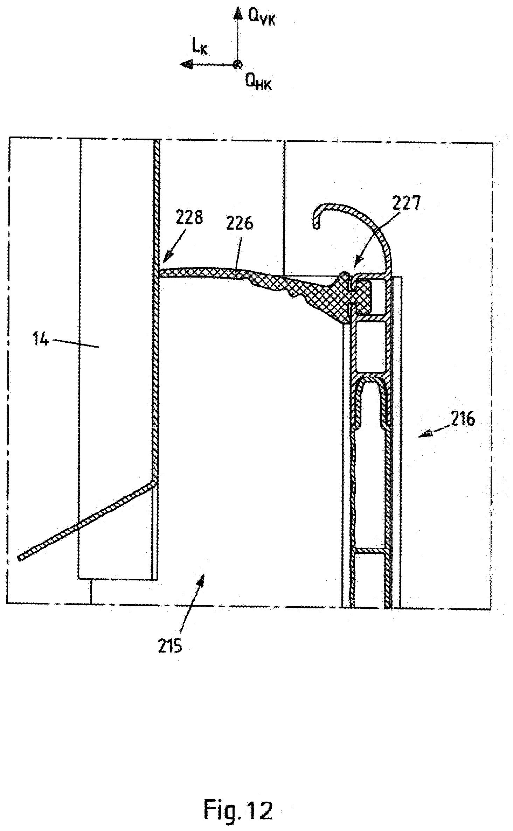

In der Fig. 12 ist ein oberes Ende der Zirkulationswand 216 und eines zentralen Luftleitkanals 215 in einem Längsschnitt dargestellt. Der zentrale Luftleitkanal 215 ist nach oben, also in vertikaler Richtung Q_{VK} zum Dach 12 hin, durch eine sich in Querrichtung des Kofferaufbaus Q_{HK} erstreckende flexible Dichtlippe 226 verschlossen. Dabei erstreckt sich die Dichtlippe 226 wenigstens im Wesentlichen über die gesamte Breite der Zirkulationswand 216 in Querrichtung des Kofferaufbaus Q_{HK}. So wird verhindert, dass temperierte Luft in nennenswertem Umfang von oben ungewollt in die zentralen Luftrückführungskanäle 215 einströmt. Bei dem dargestellten und insoweit bevorzugten Kofferaufbau 5 ist die Dichtlippe 226 mit einem Halteabschnitt 227 formschlüssig an der Zirkulationswand 216 gehalten und liegt mit einem dem Halteabschnitt 227 gegenüber angeordneten freien Ende 228 an der Transportkältemaschine 14 an. Grundsätzlich ist es jedoch auch möglich, dass der Halteabschnitt 227 an der Transportkältemaschine 14 gehalten ist und das freie Ende 228 der Dichtlippe 226 an der Zirkulationswand 216 anliegt. Bevorzugt ist dies jedoch nicht.

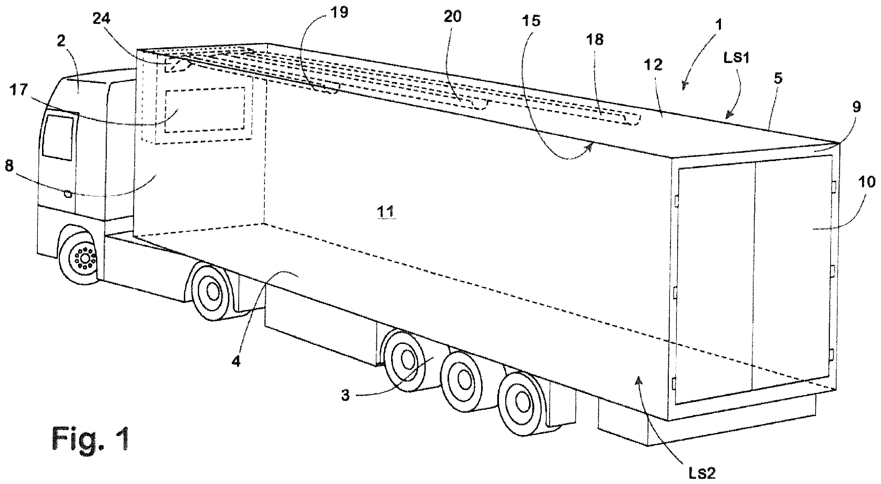

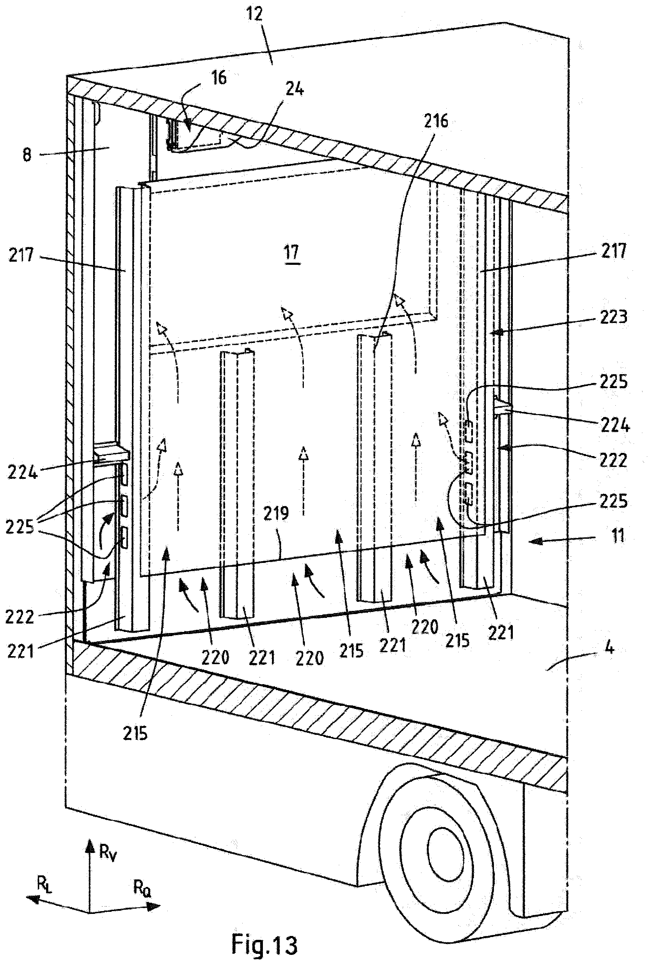

In der Fig. 13 ist eine alternative Ausgestaltung eines Kofferaufbaus 5 dargestellt, die sich von dem Kofferaufbau 5 gemäß Fig. 1 lediglich dadurch unterscheidet, dass die Begrenzungen 217 auch als die Zirkulationswand 216 haltende Abstandshalter 218 ausgebildet sind. Dementsprechend sind zwischen den Begrenzungen 217 anstatt drei lediglich zwei Abstandshalter 218 vorgesehen. Zudem erstrecken sich sowohl die Begrenzungen 217 als auch die Abstandshalter 218 über den unteren Rand 219 der Zirkulationswand 216 hinaus, was den Einsatz von Distanzelementen 221 in diesem Bereich überflüssig macht.

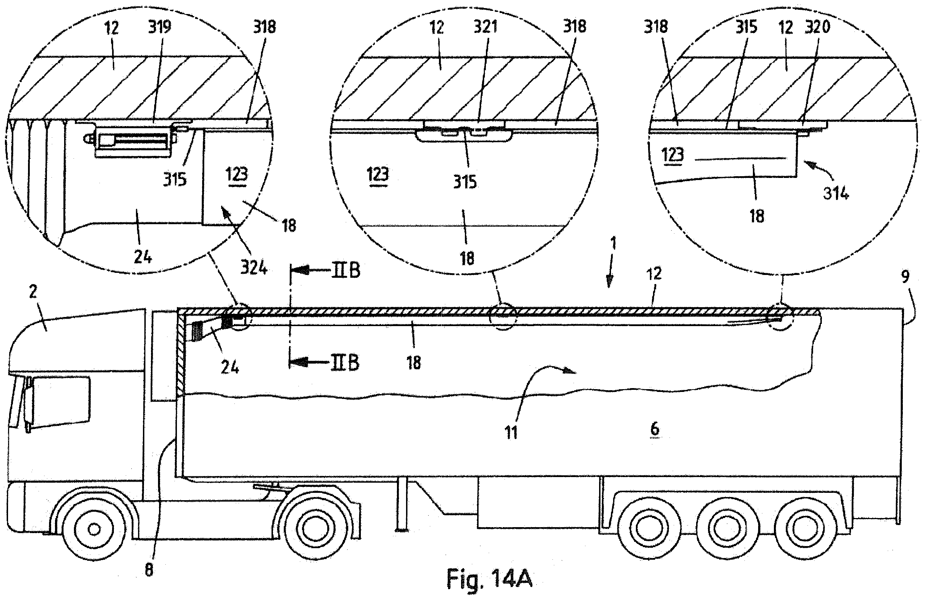

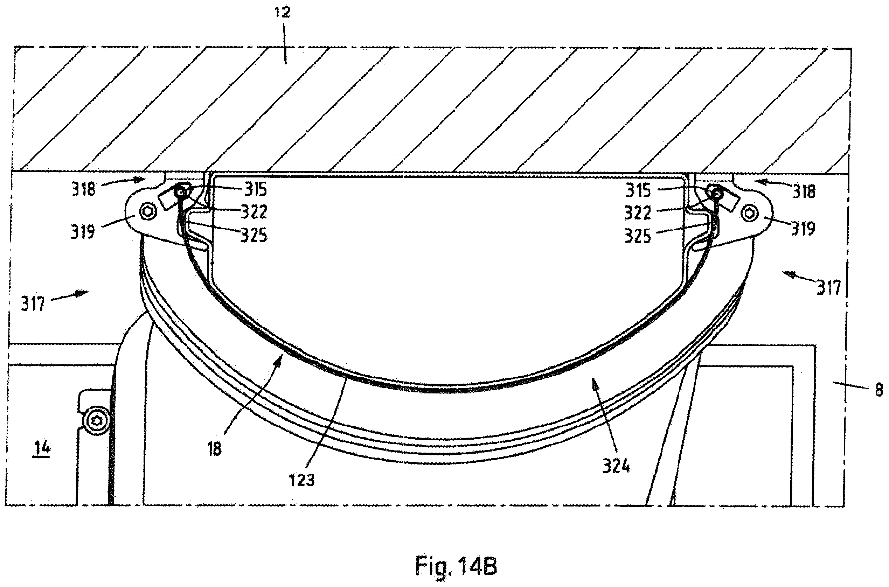

In den Fig. 14A-B ist der Kofferaufbau 5 im Bereich des Dachs 12 und der Luftleitkanal 18, in seiner seitlichen Schnittansicht und einer Querschnittsansicht dargestellt, wobei der besseren Anschaulichkeit halber Details des Luftleitkanals 18 in der seitlichen Schnittansicht vergrößert hervorgehoben dargestellt sind. Der Luftleitkanal 18 ist im Querschnitt etwa U-förmig ausgebildet. An zwei sich seitlich entlang des Luftleitkanals 18 ersteckenden Abspannelementen 315 ist ein Hüllelement 123 in Form einer Plane aufgehängt. Zwischen den Abspannelementen 315 hängt das Hüllelement 123 lose nach unten durch, so dass sich der im Querschnitt U-förmige Querschnitt des Luftleitkanals 18 bildet. Der Luftleitkanal 18 ist nach unten durch das Hüllelement 123 und nach oben durch das Dach 2 abgeschlossen. Dabei weisen die seitlichen Abspannelemente 315 einen geringfügigen vertikalen Abstand zum Dach 2 auf. Da zudem das Hüllelement 123 sich nicht nennenswert bis über die Abspannelemente 315 nach oben hinaus erstreckt, verbleibt zu beiden Längsseiten 317 des Luftleitkanals 18 jeweils ein vertikaler Spalt 318 zwischen dem Hüllelement 123 und dem Dach 2. Durch diese Spalte 318 kann Kühlluft zu beiden Längsseiten 317 des Luftleitkanals 18 aus dem Luftleitkanal 18 austreten. Es wird also nicht nur nach hinten Kühlluft aus dem Luftleitkanal 18 ausgeblasen, sondern auch zur Seite. Bei dem Luftleitkanal 18 ist die Breite, mithin die Höhe, des Spalts 318 zwischen dem Hüllelement 123 und dem Dach 2 entlang des Luftleitkanals 18 wenigstens im Wesentlichen durchgängig konstant. So kann wenigstens im Wesentlichen entlang der gesamten Länge des Luftleitkanals 18 die Kühlluft zu beiden Längsseiten 317 austreten. Außerdem hängen die Abspannelemente 315 zu beiden Längsseiten 317 des Luftleitkanals 18 über ihre Längserstreckung nur sehr geringfügig nach unten durch, so dass die Kühlluft über die Längserstreckung des Luftleitkanals 18 relativ gleichmäßig zur Seite ausströmt. Der Abstand zwischen den Abspannelementen 315 und dem Dach 12 beträgt dabei jeweils zwischen 1 cm und 2 cm.

Die Abspannelemente 315 sind zum Zwecke einer lediglich geringen Dehnung jeweils aus einem Stahlseil gebildet. Dabei ist jedes der dargestellten Abspannelemente 315 zwischen einem vorderen Montageelement 319 und einem hinteren Montageelement 320 so abgespannt, dass das Abspannelement 315 geringfügig gedehnt, also gelängt, ist. Diese Dehnung sorgt für eine Rückstellkraft, welche das Abspannelement 315 stramm und ohne größeres Durchhängen zwischen dem vorderen Montageelement 319 und dem hinteren Montageelement 320 hält. Die Rückstellkraft ist dabei so groß, dass an dem Abspannelement 315 auch noch das Hüllelement 123 aufgehängt werden kann, ohne dass das Abspannelement 315 deutlich nach unten durchhängen würde. Der dargestellte und insoweit bevorzugte Luftleitkanal 18 ist recht lang, so dass zwischen dem jeweils vorderen Montageelement 319 und dem jeweils hinteren Montageelement 320 noch ein mittleres Montageelement 321 vorgesehen ist. Dieses mittlere Montageelement 321 dient dabei nicht dem Abspannen des Abspannelements 315. Das mittlere Montageelement 321 soll das Abspannelement 315 lediglich zwischen dem vorderen Montageelement 319 und dem hinteren Montageelement 320 am Dach 12 abstützen, und zwar in einem bestimmten vertikalen Abstand zum Dach 12. Außerdem ist das jeweilige Abspannelement 315 so am mittleren Montageelement 321 gehalten, dass das Abspannelement 315 und das mittlere Montageelement 321 nicht versehentlich außer Eingriff gelangen.

Die Abspannelemente 315 sind in seitlich an dem Luftleitkanal 18 vorgesehenen Taschen 322 aufgenommen, in denen die Abspannelemente 315 vorzugsweise in ihrer Längsrichtung frei beweglich angeordnet sind. So werden in der Längsrichtung nur geringfügige Kräfte von den Abspannelementen 315 auf das Hüllelement 123 und/oder umgekehrt übertragen. Auf das Hüllelement 123 in dieser Richtung einwirkende Kräfte führen daher nicht zu einer Beschädigung der Abspannelemente 315 und umgekehrt. Zudem ist es in diesem Zusammenhang besonders zweckmäßig, wenn die Querschnitte der Taschen 322 deutlich größer sind als die Querschnitte der zugehörigen Abspannelemente 315.

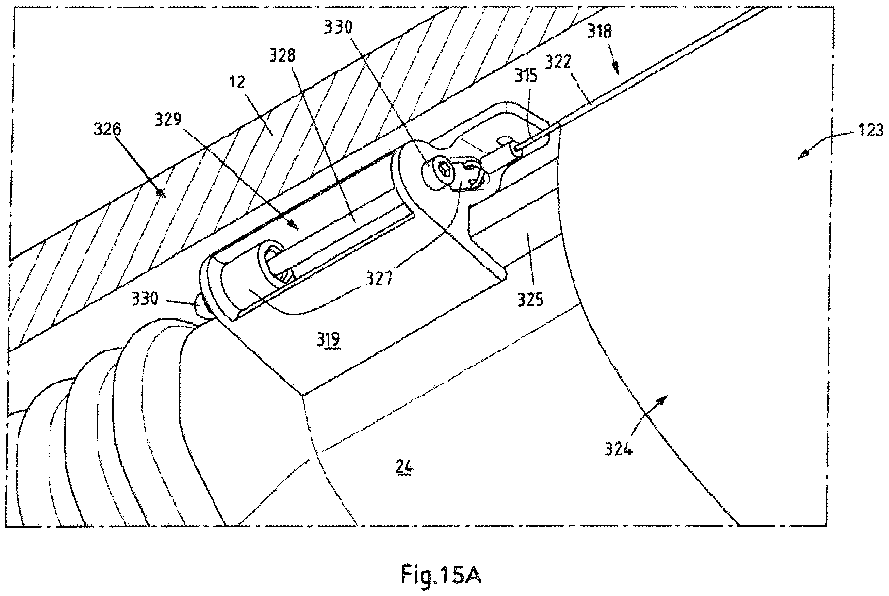

In der Fig. 15A ist das vordere Ende 324 des Luftleitkanals 18 dargestellt, das mehr oder weniger luftdicht mit der Luftführungseinrichtung 24 verbunden ist. Bei dem Kofferaufbau 5 ist das hintere Ende der Kammer 314 bzw. der Luftführungseinrichtung 24 in das vordere Ende 314 des Luftleitkanals 18 eingesteckt. Eine andere Verbindung von dem Luftführungseinrichtung 24 und dem Luftleitkanal 18 ist aber denkbar. Bei dem Kofferaufbau 5 ist zudem eine Seite des hinteren Endes der Kammer 314 bzw. das hintere Ende der Luftführungseinrichtung 24 und das vordere Ende eines Abspannelements 315 mit dem gemeinsamen vorderen Montageelement 319 an dem Dach 12 festgelegt. Da das vordere Montageelement 319 vorne am Luftleitkanal 18 vorgesehen ist, wird dieses Montageelement 319 vorliegend als vorderes Montageelement 319 bezeichnet. An der gegenüberliegenden Längsseite 317 des vorderen Endes 324 des Luftleitkanals 18 ist ein gleichartiges vorderes Montageelement 319 zum Festlegen der anderen Längsseite 317 des Luftleitkanals 18 und des hinteren Endes der Kammer 314 bzw. der Luftführungseinrichtung 24 vorgesehen. Die beiden vorderen Montageelemente 319 umgreifen abschnittsweise jeweils eine äußere Rippe 325 der Luftführungseinrichtung 24. Auf diese Weise wird ein Formschluss zwischen der Luftführungseinrichtung 24 und den vorderen Montageelementen 319 in vertikaler Richtung und in horizontaler Richtung senkrecht zur Längserstreckung des Luftleitkanals 18 bzw. des Kofferaufbaus 5 bereitgestellt. In der Längserstreckung des Luftleitkanals 18 bzw. des Kofferaufbaus 5 ist die Luftführungseinrichtung 24 jedoch lediglich kraftschlüssig gehalten. Dadurch kann die Luftführungseinrichtung 24 in der Längsrichtung des Luftleitkanals 18 bzw. des Kofferaufbaus 5 gegenüber dem vorderen Montageelement 319 verschoben werden, und zwar entweder zum Toleranzausgleich oder wenn die Luftführungseinrichtung 24 von einem Fahrzeug oder Ladung in der entsprechenden Richtung angefahren wird. Die Luftführungseinrichtung 24 kann also im Bereich des vorderen Montageelements 319 in dieser Richtung nachgeben, um eine mögliche Beschädigung der Luftführungseinrichtung 24 zu vermeiden.

Das dargestellte und insoweit bevorzugte vordere Montageelement 319 weist eine Spanneinrichtung 326 auf, um das Abspannelement 315 abzuspannen und wieder zu entspannen. Hierzu ist das Abspannelement 315 mit einem Spannschlitten 327 verbunden, der entlang der Längserstreckung des Abspannelements 315 am vorderen Montageelement 319 verschiebbar gehalten ist. Je nachdem, in welche Richtung der Spannschlitten 327 entlang der Längserstreckung des Abspannelements 315 verschoben wird, wird das Abspannelement 315 gespannt oder entspannt. Das Verschieben des Spannschlittens 327 wird über eine Spannschraube 328 bewirkt, die mit dem Spannschlitten 327 kämmt und die abschnittsweise den Spannschlitten durchgreift. Dabei ist die Verschieberichtung des Spannschlittens abhängig 327 von der Drehrichtung der Spannschraube 328, die bei dem vorderen Montageelement 319 ortsfest vorgesehen ist, und zwar auch, wenn die Spannschraube 328 gedreht wird.

Über eine Aussparung 329 ist die Stellung des Spannschlittens 327, insbesondere des von der Spannschraube durchgriffenen Abschnitts des Spannschlittens 327, längs des vorderen Montageelements 319 für den Fahrer erkennbar, was die Handhabung der Spanneinrichtung 326 erleichtert. Ein Schraubenkopf 330 der Spannschraube 328 kann mit einem gebräuchlichen Werkzeug gedreht werden. Zudem kann das dargestellte vordere Montageelement 319 auch als hinteres Montageelement 320 eingesetzt werden. Dann können die vorderen Montageelemente 319 und die hinteren Montageelemente 320 einander entsprechend oder auch nur eines der Montageelemente 319, 320 mit einer Spanneinrichtung 326 ausgestattet sein. Bevorzugt werden auf den einander gegenüberliegenden Längsseiten 317 des Luftleitkanals 18 jeweils gleichartige Montageelemente 319, 320, 321 vorgesehen.

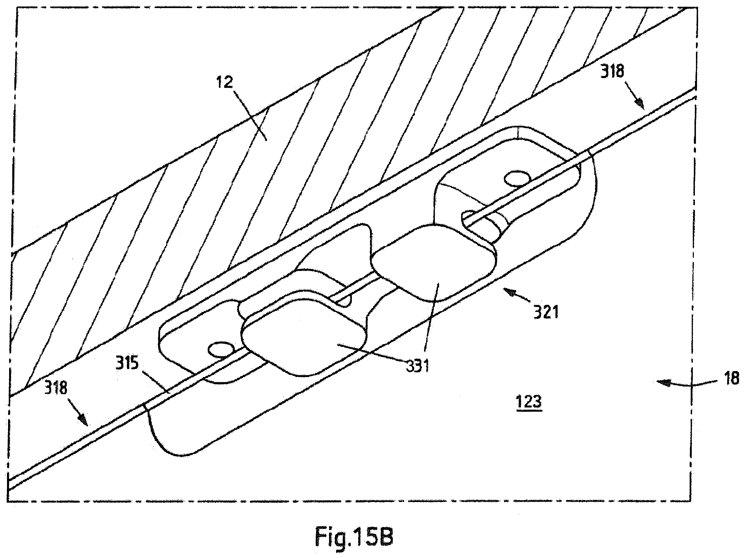

In der Fig. 15B ist ein mittlerer Bereich des Luftleitkanals 18 dargestellt, in dem das Abspannelement 315 und damit der Luftleitkanal 18 am Dach 12 des Kofferaufbaus 5 abgehängt und auf diese Weise gehalten ist. Dargestellt ist lediglich eine Längsseite 317 des Luftleitkanals 18. Die gegenüberliegende Längsseite 317 des Luftleitkanals 18 ist aber vorzugsweise gleichartig am Dach 12 abgestützt. Zur Abstützung dient dabei das mittlere Montageelement 321, das zwei Hakenelemente 331 umfasst, die zu gegenüberliegenden Seiten etwa senkrecht zur Längserstreckung des Abspannelements 315 und etwa senkrecht zur Vertikalen geöffnet sind. Die Abspannelemente 315 sind jeweils von gegenüberliegenden Seiten in die Hakenelemente 331 der mittleren Montageelemente 321 eingehängt. In der Längserstreckung der Abspannelemente 315 sind die Abspannelemente 315 in den mittleren Montageelementen 321 frei beweglich gehalten. Die mittleren Montageelemente 321 sind am Dach 12 festgelegt.

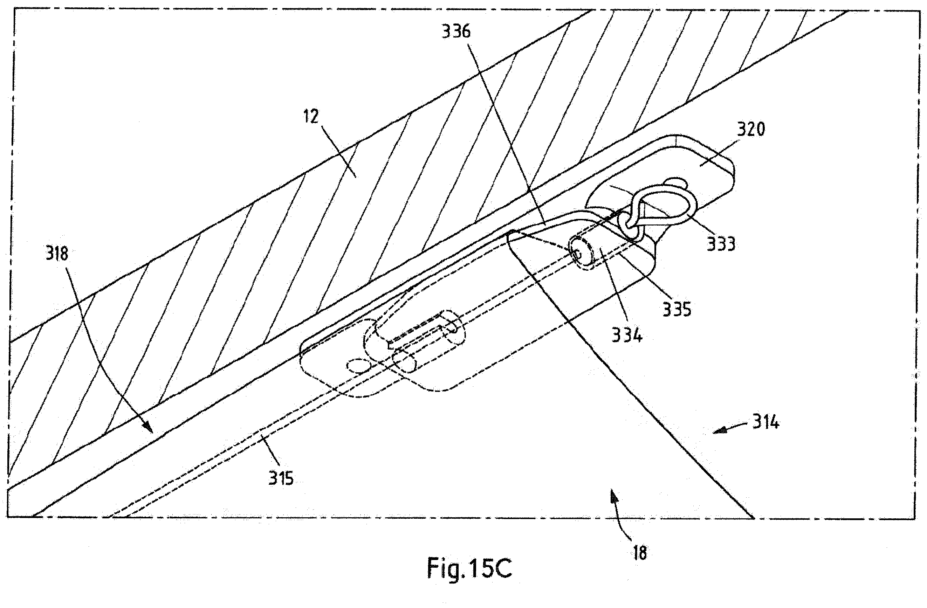

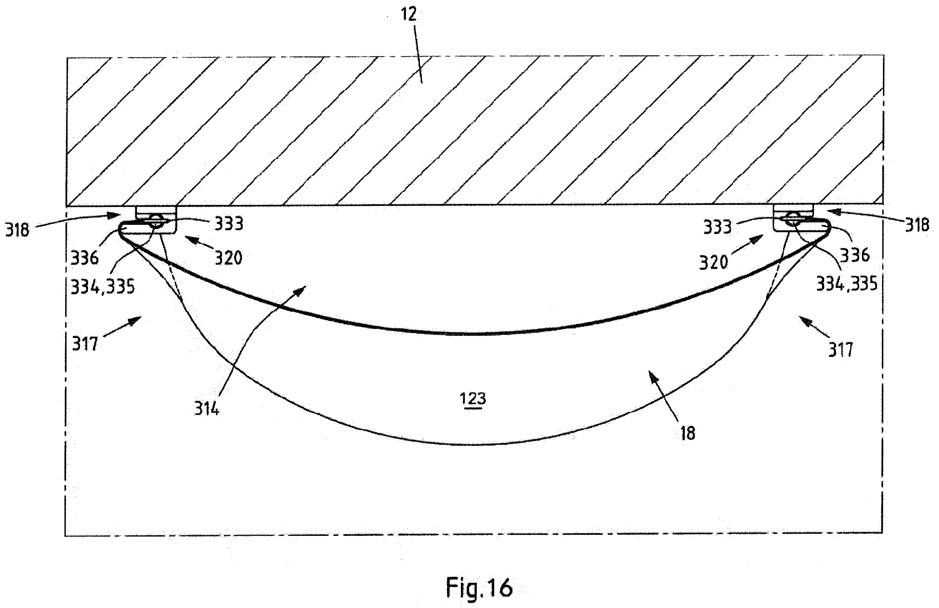

In der Fig. 15C ist ein hinterer Bereich des Luftleitkanals 18 in einer perspektivischen Ansicht dargestellt, in dem sich der Strömungsquerschnitt des Luftleitkanals 18 verjüngt. In der Fig. 16 ist das hintere Ende 314 des Luftleitkanals 18 in einer Ansicht von hinten dargestellt. Das hintere Ende 314 des Luftleitkanals 18 ist zu beiden gegenüberliegenden Längsseiten 317 über jeweils ein hinteres Montageelement 320 am Dach 12 festgelegt. Jedes der hinteren Montageelemente 320 hält dabei das zugeordnete Abspannelement 315, das dann wiederum das Hüllelement 123 hält. Die Abspannelemente 315 sind in den hinteren Montageelementen 320 formschlüssig gehalten und zwar wenigstens in Richtung des jeweils vorderen Montageelements 319. So können die Abspannelemente 315 jeweils zwischen dem vorderen Montageelement 319 und dem hinteren Montageelement 320 zuverlässig abgespannt werden. Zudem ist aber das hintere Montageelement 320 so ausgebildet, dass das entsprechende Abspannelement 315 auch in vertikaler Richtung und in horizontaler Richtung formschlüssig gehalten ist. An dem hinteren Ende des Abspannelements 315 ist eine Öse 333 vorgesehen. Diese Öse 333 erleichtert das Einhängen des Abspannelements 315 in das hintere Montageelement 320, bevor das Abspannelement 315 über die Spanneinrichtung 326 abgespannt wird. Damit auf einfache und zugleich zuverlässige Weise ein Formschluss zwischen dem Abspannelement 315 und dem hinteren Montageelement 320 beim Einhängen des Abspannelements 315 in das hintere Montageelement 320 bereitgestellt werden kann, ist an dem hinteren Ende des Abspannelements 315 eine Hülse 334 auf dem Stahlseil des Abspannelements 315 angebracht, die in einer korrespondierenden Aufnahme 335 des hinteren Montageelements 320 aufgenommen wird.

Die hinteren Montageelemente 320 weisen ferner jeweils einen Abstandshalter 336 auf, um den das Hüllelement 123 jeweils außen herumgeführt ist. Im Beriech der Abspannelemente 315 ist der Luftleitkanal 18 mithin schmaler als im Bereich der Abstandshalter 336. Das für das Herumführen des Hüllelements 123 um die Abstandshalter 336 benötigte Material wird von dem unterhalb der Abstandshalter 336 vorgesehenen Abschnitt des hinteren Endes 314 des Luftleitkanals 18 bereitgestellt. Dies hat zur Folge, dass das untere Ende des Hüllelements 123 im Bereich der Abstandshalter 336 näher am Dach 12 gehalten wird als das untere Ende des Hüllelements 123 in einem weiter vorne vorgesehenen Bereich. So wird nicht nur der Strömungsquerschnitt senkrecht zur Längserstreckung des Luftleitkanals 18 verkleinert, sondern auch der untere Rand des Hüllelements 123 angehoben. Es ist mithin unwahrscheinlicher, dass versehentlich mit einem Fahrzeug oder mit einer Ladung gegen das hintere Ende 314 des Luftleitkanals 18 gefahren wird, was zu einer nachhaltigen Beschädigung des Luftleitkanals 18 führen könnte.

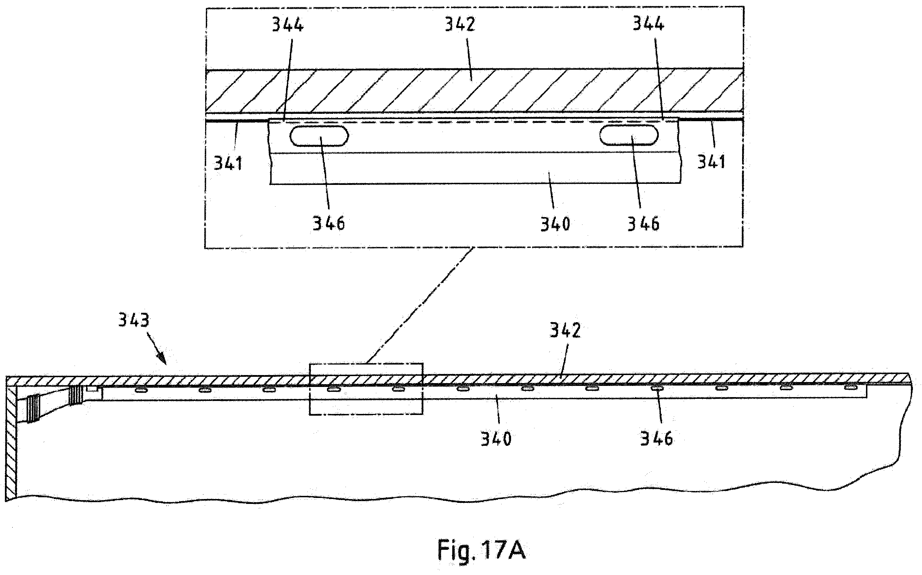

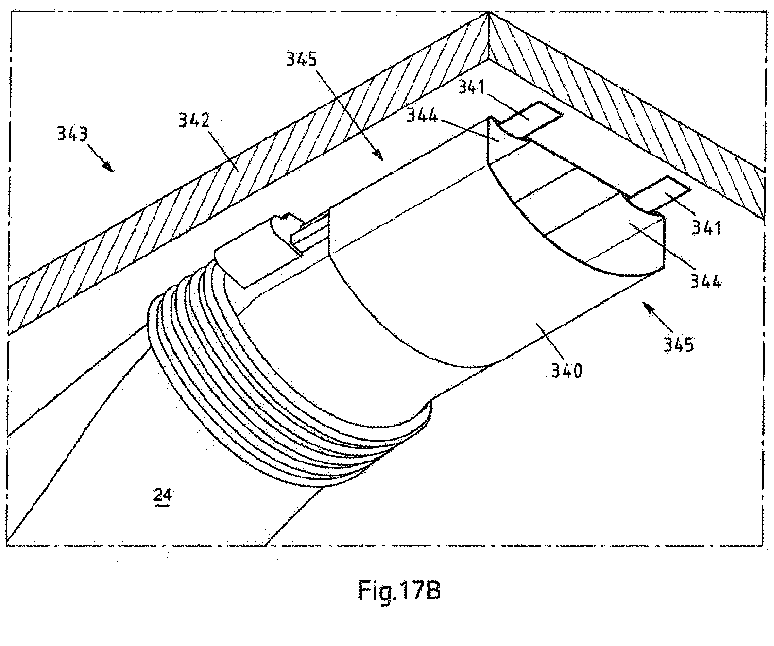

In den Fig. 17A-B ist ein alternativer Luftleitkanal 340 in einer perspektivischen Schnittansicht und in einer Seitenansicht dargestellt. Der dargestellte und insoweit bevorzugte Luftleitkanal 340 ist über Abspannelemente 341 in Form von flachen Bändern gehalten, die über nicht im Einzelnen dargestellte Montageelemente, die denen des zuvor beschriebenen Ausführungsbeispiels ähneln, unterhalb des Dachs 342 des Kofferaufbaus 343 abgespannt sind. Die Abspannelemente 341 erstrecken sich abschnittsweise durch seitliche und in Längsrichtung des Luftleitkanals 340 verlaufende Taschen 344. Die Abspannelemente 341 sind etwa 1 cm bis 2 cm unterhalb des Dachs 342 abgespannt. Der Luftleitkanal 340 ist jedoch nach oben in Richtung des Dachs 342 durch entsprechende Abschnitte des Hüllelements 123 geschlossen. Dennoch sind an beiden Längsseiten 345 noch Öffnungen 346 vorgesehen, die entlang der Längsrichtung des Luftleitkanals 340 verteilt angeordnet sind. Über diese Öffnungen 346 kann seitlich Kühlluft ausströmen, und zwar ähnlich zu dem Spalt 318 zwischen dem Dach 12 und dem Hüllelement 123 bei dem zuvor beschriebenen Ausführungsbeispiel.

### BEZUGSZEICHEN

- 1: Nutzfahrzeug (Sattelauflieger)
- 2: Zugmaschine
- 3: Chassis des Nutzfahrzeugs 1
- 4: Boden des Nutzfahrzeugs 1
- 5: Kofferaufbau des Nutzfahrzeugs 1
- 6,7: Längsseitenwände des Kofferaufbaus 5
- 8: Stirnwand des Kofferaufbaus 5
- 9: Rückwand des Kofferaufbaus 5
- 10: Türanlage des Kofferaufbaus 5
- 11: Laderaum des Nutzfahrzeugs 1
- 12: Dach des Kofferaufbaus 5
- 13: Außenseite der Stirnwand 8
- 14: Transportkältemaschine
- 15: Unterseite des Dachs 12
- 16,16': Ausblasöffnungen der Transportkältemaschine 14
- 17: Absaugöffnung der Transportkältemaschine 14
- 18,19,20: Luftleitkanäle
- 21,22,23: Eintrittsöffnungen der Luftleitkanäle 18,19,20
- 24,24': Luftführungseinrichtung
- 25,26,27: Austrittsöffnungen der Luftleitkanäle 18,19,20
- 28: hinterer Bereich des Laderaums 11
- 116, 116': Einlassabschnitt der Luftführungseinrichtung 24,24'
- 117, 117': Einlassöffnung der Luftführungseinrichtung 24,24'
- 118: mittlerer Abschnitt der Luftführungseinrichtung 24,24'
- 119, 119': Verstellabschnitt der Luftführungseinrichtung 24,24'
- 120, 120': Auslassabschnitt der Luftführungseinrichtung 24,24'
- 121, 121': hinteres Ende der Luftführungseinrichtung 24,24'
- 122: Schiene
- 123: Hüllelement
- 124: Längsrand der Luftleitkanäle 18,19,20
- 125: seitliche Luftkanalöffnung der Luftleitkanäle 18,19,20
- 126: Halterippe der Luftführungseinrichtung 24,24'
- 127: Aufnahme der Halterippen 26
- 128: Rippen der Luftführungseinrichtung 24,24'
- 129': Plane
- 130': Verstärkungselement
- 131': Spalte
- 132': Halteelement
- 215: zentraler Luftrückführkanal
- 216: Zirkulationswand
- 217: Begrenzung
- 218: Abstandshalter
- 219: unterer Rand
- 220: untere Einströmöffnung

### BEZUGSZEICHEN

- 221: Distanzelement
- 222,223: seitliche Luftrückführkanäle
- 224: Kurzschlusssperre
- 225: seitliche Einströmöffnung
- 226: Dichtlippe
- 227: Halteabschnitt
- 228: freies Ende
- 314: hinteres Ende
- 315: Abspannelement
- 317: Längsseite
- 318: Spalt
- 319: vorderes Montageelement
- 320: hinteres Montageelement
- 321: mittleres Montageelement
- 322: Tasche
- 324: vorderes Ende
- 325: Rippe
- 326: Spanneinrichtung
- 327: Spannschlitten
- 328: Spannschraube
- 329: Aussparung
- 330: Schraubenkopf
- 331: Hakenelement
- 333: Öse
- 334: Hülse
- 335: Aufnahme
- 336: Abstandshalter
- 340: Luftleitkanal
- 341: Abspannelemente
- 342: Dach
- 343: Kofferaufbau
- 344: Tasche
- 345: Längsseite
- 346: Öffnung

- A: Abstand zwischen der Ausblasöffnung 16 der Transportkältemaschine 14 und der Eintrittsöffnungen 21,22,23 der Luftleitkanäle 18,19,20
- B: Abstand zwischen der Eintrittsöffnung 21 und der Austrittsöffnung 25 des Luftleitkanals 18
- C: Abstand der Eintrittsöffnung 22 und der Austrittsöffnung 26 des Luftleitkanals 20
- D: Abstand der Eintrittsöffnung 23 und der Austrittsöffnung 27 des Luftleitkanals 19
- d_{BK}: Abstand zwischen dem Boden und der Kurzschlusssperre

### BEZUGSZEICHEN

- d_{BZ}: Abstand zwischen dem Boden und der Zirkulationswand
- d_{ZK}: vertikaler Abstand zwischen dem unteren Rand der Zirkulationswand und der Kurzschlusssperre
- LG: Gesamtluftstrom
- L_{K}: Längsrichtung des Kofferaufbaus
- LS1,LS2: Längsseiten des Nutzfahrzeugs 1
- L1,L2,L3: Luftströme
- S1,S2: Luft-Strömungswalzen
- Q_{HK}: horizontale Querrichtung des Kofferaufbaus
- Q_{VK}: vertikale Querrichtung des Kofferaufbaus
- X: Längsachse des Nutzfahrzeugs 1

## Patentansprüche

1. Kofferaufbau eines Nutzfahrzeugs (1),
- wobei der Kofferaufbau (5) mit einem Dach (12), mit zwei das Dach (12) tragenden, sich in Längsrichtung des Kofferaufbaus (5) erstreckenden Längsseitenwänden (6,7), mit einer die Längsseitenwände (6,7) in einem Stirnseitenbereich des Kofferaufbaus (5) verbindenden Stirnwand (8) und mit einer die Längsseitenwände (6,7) an einem Rückseitenbereich des Kofferaufbaus (5) verbindende Rückwand (9) einen Laderaum (11) umgrenzt,
- wobei an dem Kofferaufbau (5) eine Transportkältemaschine (14) vorgesehen ist, die über mindestens eine Ausblasöffnung (16) temperierte Luft in den Laderaum (11) bläst,
- wobei an der dem Laderaum (11) zugeordneten Unterseite (15) des Dachs (12)mindestens ein Luftleitkanal (18,19,20) vorgesehen ist, der sich längs des Dachs (12) erstreckt und durch ein Hüllelement (123) gebildet ist, das an dem Dach(12) gehalten ist und eine der Ausblasöffnung (16) der Transportkältemaschine (14) zugeordnete Eintrittsöffnung (21,22,23) sowie eine am anderen Ende des jeweiligen Luftleitkanals (18,19,20) ausgebildete Austrittsöffnung (25,26,27) besitzt,
und
- wobei zwischen der Ausblasöffnung (16) und den Eintrittsöffnungen (21,22,23) der Luftleitkanäle (18,19,20) eine Luftführungseinrichtung (24) vorgesehen ist, die den von der Transportkältemaschine (14) durch die Ausblasöffnung (16) ausgeblasenen temperierten Luftstrom (LG) zu einem der Luftleitkanäle (18,19,20) leitet, indem sie einen Einlassabschnitt (116,116'), der an der Ausblasöffnung (16) der Transportkältemaschine (14) sitzt und über den der aus der Ausblasöffnung (16) ausgeblasene temperierte Luftstrom (LG) in die Luftführungseinrichtung (24) eintritt, und einen Verstellabschnitt (119,119') umfasst, an dessen vom Einlassabschnitt (116,116') abgewandten Ende ein Auslassabschnitt (120,120') mit einer Auslassöffnung ausgebildet ist, an die die Eintrittsöffnung (21,22,23) des jeweiligen Luftleitkanals (18,19,20) angeschlossen ist, wobei der Verstellabschnitt (119,119') zum Ausgleich eines Versatzes zwischen der Position der Eintrittsöffnung (21,22,23) des jeweiligen Luftleitkanals (18,19,20) und der Position der Ausblasöffnung (16) der Transportkältemaschine (14) flexibel, gelenkig und/oder teleskopierbar ausgebildet ist, so dass nach der Befestigung des Einlassabschnitts (116,116') der Luftführungseinrichtung (24) an der Ausblasöffnung (16) der Transportkältemaschine (14) der Auslassabschnitt (120,120') mit seiner Auslassöffnung an die Eintrittsöffnung (21,22,23) des zugeordneten Luftleitkanals (18,19,20) heranführbar ist.

2. Kofferaufbau nach Anspruch 1, **dadurch gekennzeichnet, dass** mindestens zwei voneinander separierte, sich längs des Dachs (12) erstreckende Luftleitkanäle (18,19,20) vorgesehen sind, die jeweils durch ein Hüllelement (123) gebildet sind.

3. Kofferaufbau nach einem der voranstehenden Ansprüche, **dadurch gekennzeichnet, dass** das den jeweiligen Luftleitkanal (18,19,20) bildende Hüllelement (123) unter dem Dach (12) des Kofferaufbaus (1) verspannt ist.

4. Kofferaufbau nach einem der voranstehenden Ansprüche, **dadurch gekennzeichnet, dass** jedem Luftleitkanal (18,19,20) eine Luftführungseinrichtung (24) zugeordnet ist, deren Einlassabschnitt (116,116') an der Ausblasöffnung (16) der Transportkältemaschine (14) angeordnet ist und deren Verstellabschnitt (119,119') zum Ausgleich eines Versatzes zwischen der Position der Eintrittsöffnung (21,22,23) des Luftleitkanals (18,19,20) und der Position der Ausblasöffnung (16) der Transportkältemaschine (14) flexibel, gelenkig und/oder teleskopierbar ausgebildet ist, so dass er nach der Befestigung des Einlassabschnitts (116,116') der Luftführungseinrichtung (24) an der Ausblasöffnung (16) der Transportkältemaschine (14) mit seiner Auslassöffnung an die Eintrittsöffnung (21,22,23) des zugeordneten Luftleitkanals (18,19,20) heranführbar ist.

5. Kofferaufbau nach Anspruch 4, **dadurch gekennzeichnet, dass** die Luftführungseinrichtungen (24) einen gemeinsamen Einlassabschnitt aufweisen, der an die Ausblasöffnung (16) der Transportkältemaschine (14) angeschlossen ist und von dem die zu den Luftleitkanälen (18,19,20) führenden Verstellabschnitte (119,119') abgehen.

6. Kofferaufbau nach einem der voranstehenden Ansprüche, **dadurch gekennzeichnet, dass** der Verstellabschnitt (119,119') der Luftführungseinrichtung (24) in Längsrichtung (L_{K}) und/oder Querrichtung (Q_{HK}) und/oder Höhenrichtung (Q_{VK}) der Luftführungseinrichtung (24) flexibel, gelenkig und/oder teleskopierbar verstellbar ist.

7. Kofferaufbau nach einem der voranstehenden Ansprüche, **dadurch gekennzeichnet, dass** die Luftleitkanäle (18,19,20) aus einem unter das Dach (12) des Kofferaufbaus (5) gespannten Planenmaterial gebildet sind.

8. Kofferaufbau nach einem der voranstehenden Ansprüche, **dadurch gekennzeichnet, dass** ausgehend von einem ersten Luftleitkanal (18), dessen Austrittsöffnung (25) den größten Abstand (B) zur Ausblasöffnung (16) der Transportkältemaschine (14) hat, bei jedem in Richtung einer ersten der Längsseitenwände (6,7) zu einem der Luftleitkanäle (18,19,20) benachbart angeordneten Luftleitkanal (19,20) die Austrittsöffnung (26,27) jeweils in einem kürzeren Abstand (C,D) zur Ausblasöffnung (16) der Transportkältemaschine (14) angeordnet ist als die Austrittsöffnung (25,26) des in Richtung der zweiten Längsseitenwand (6) zu ihm benachbarten Luftleitkanals (18,19).

9. Kofferaufbau nach Anspruch 8, **dadurch gekennzeichnet, dass** mindestens drei Luftleitkanäle (18,19,20) vorgesehen sind, von denen der erste Luftleitkanal (18) den größten Abstand (B) zwischen seiner Austrittsöffnung (25) und der Ausblasöffnung (16) der Transportkältemaschine (14), der nächstbenachbart zur zweiten Längsseitenwand (7) angeordnete zweite Luftleitkanal (19) den kürzesten Abstand (D) zwischen seiner Austrittsöffnung (27) und der Ausblasöffnung (16) der Transportkältemaschine (14) und der zwischen dem ersten Luftleitkanal (18) und dem zweiten Luftleitkanal (19) angeordnete dritte Luftleitkanal (20) einen Abstand (C) zwischen seiner Austrittsöffnung (26) und der Ausblasöffnung (16) der Transportkältemaschine (14) aufweist, der kürzer ist als der Abstand (C) zwischen der Austrittsöffnung (25) des ersten Luftleitkanals (18) und der Ausblasöffnung (16) der Transportkältemaschine (14), jedoch größer als der Abstand (D) zwischen der Austrittsöffnung (27) des zweiten Luftleitkanals (19) und der Ausblasöffnung (16) der Transportkältemaschine (14).

10. Kofferaufbau nach einem der voranstehenden Ansprüche, **dadurch gekennzeichnet, dass** die Transportkältemaschine (14) mit ihrer Ausblasöffnung an der Stirnseite des Kofferaufbaus (5) angeordnet ist und **dass** sich die Luftleitkanäle (18,19,20) in Richtung der Rückwand (9) des Kofferaufbaus (5) längs von dessen Dach (12) erstrecken.

11. Kofferaufbau nach Anspruch 10, **dadurch gekennzeichnet,**
- **dass** die Transportkältemaschine (14) wenigstens eine in die Stirnwand eingeformte Absaugöffnung für aus dem Laderaum abzusaugende zu temperierende Luft aufweist,
- **dass** eine von der Stirnwand (8) in Richtung des Laderaums (11) beabstandete, eine Anfahrebene definierende Zirkulationswand (216) vorgesehen ist und zwischen der Stirnwand (8) und der Anfahrebene ein sich in vertikaler Richtung erstreckender zentraler Luftrückführkanal (215) zum Leiten der zu temperierenden Luft aus dem Laderaum (11) zu der Absaugöffnung ausgebildet ist,
- **dass** zwischen der Stirnwand (8) und der Anfahrebene einerseits und mindestens einer der Längsseitenwände (6,7) andererseits und einer sich in vertikaler Richtung erstreckenden Begrenzung (217) ein seitlicher Luftrückführkanal (222,223) ausgebildet ist,
und
- **dass** der Querschnitt des seitlichen Luftrückführkanals (222,223) durch eine Kurzschlusssperre (224) eingeschränkt oder verschlossen ist.

12. Kofferaufbau nach Anspruch 11, **dadurch gekennzeichnet, dass** die Kurzschlusssperre (224) den Querschnitt des wenigstens einen seitlichen Luftrückführkanals (222,223) unterhalb der Ausblasöffnung (16) und/oder unterhalb der Absaugöffnung (17) einschränkt oder verschließt.

13. Kofferaufbau nach einem der Ansprüche 11 oder 12, **dadurch gekennzeichnet, dass** der Querschnitt des zentralen Luftrückführkanals (215) nach oben durch eine Dichtlippe (226) eingeschränkt oder verschlossen ist.

14. Kofferaufbau nach einem der voranstehenden Ansprüche, **dadurch gekennzeichnet, dass** die die Luftleitkanäle (18,19,20) bildenden Hüllelemente (123) jeweils wenigstens zwei in Längsrichtung voneinander beabstandete Montageelemente (319,320,321) zum Montieren der Luftleitkanäle (18,19,20) am Dach (12) und wenigstens ein Abspannelement (315,341) zum Halten an den wenigstens zwei Montageelementen (319,320,321) umfasst.

15. Kofferaufbau nach einem der voranstehenden Ansprüche, **dadurch gekennzeichnet, dass** das wenigstens eine Abspannelement (315,341) in Längsrichtung des Abspannelements (315,341) zwischen den wenigstens zwei Montageelementen (319,320,321) abgespannt gehalten ist und dass das wenigstens eine Hüllelement (123) zwischen den wenigstens zwei Montageelementen (319,320,321) von dem wenigstens einen Abspannelement (315,341) entgegen der Schwerkraft gehalten ist.

16. Kofferaufbau nach Anspruch 14 oder 15, **dadurch gekennzeichnet, dass** das wenigstens eine Abspannelement (315,341) ein Seil, insbesondere Stahlseil und/oder ein, insbesondere Drähte oder Drahtseile aufweisendes Band und/oder Gurt ist.

17. Kofferaufbau nach einem der voranstehenden Ansprüche, **dadurch gekennzeichnet, dass** das Hüllelement (123) aus einem textilen Material gebildet ist.

## Claims

1. Box body of a commercial vehicle (1),
- wherein the box body (5) having a roof (12), having two longitudinal side walls (6, 7) supporting the roof (12) and extending in the longitudinal direction of the box body (5), having an end wall (8) connecting the longitudinal side walls (6, 7) in an end face region of the box body (5) and having a rear wall (9) connecting the longitudinal side walls (6, 7) on a rear side region of the box body (5) defines a loading space (11),
- wherein a transport cooling unit (14) is provided on the box body (5) which blows tempered air into the loading space (11) via at least one discharge opening (16),
- wherein, on the underside (15) of the roof (12) assigned to the loading space (11) is provided at least one air duct (18, 19, 20), which extends along the roof (12) and is formed by a sleeve element (123), which is held on the roof (12) and has an entry opening (21, 22, 23) assigned to the discharge opening (16) of the transport cooling unit (14) as well as an exit opening (25, 26, 27) formed on the other end of the respective air duct (18, 19, 20),
and
- wherein between the discharge opening (16) and the entry openings (21, 22, 23) of the air ducts (18, 19, 20) is provided an air supply device (24), which guides the tempered air flow (LG) discharged by the transport cooling unit (14) through the discharge opening (16) to one of the air ducts (18, 19, 20), by it comprising an inlet section (116, 116'), which sits on the discharge opening (16) of the transport cooling unit (14) and via which the tempered air flow (LG) discharged from the discharge opening (16) enters into the air supply device (24), and comprising an adjusting section (119, 119'), on whose end facing away from the inlet section (116, 116') is formed an outlet section (120, 120') with a discharge opening, to which the entry opening (21, 22, 23) of the respective air duct (18, 19, 20) is connected, wherein the adjusting section (119, 119') is formed flexibly, articulatedly and/or telescopically in order to equalise an offset between the position of the entry opening (21, 22, 23) of the respective air duct (18, 19, 20) and the position of the discharge opening (16) of the transport cooling unit (14) such that after fastening the inlet section (116, 116') of the air supply device (24) to the discharge opening (16) of the transport cooling unit (14), the outlet section (120, 120') with its outlet opening can be guided to the entry opening (21, 22, 23) of the assigned air duct (18, 19, 20).

2. Box body according to claim 1, **characterised in that** at least two air ducts (18, 19, 20) separated from one another and extending along the roof (12) are provided and are each formed by a sleeve element (123).

3. Box body according to any one of the preceding claims, **characterised in that** the sleeve element (123) forming the respective air duct (18, 19, 20) is tensioned under the roof (12) of the box body (1).

4. Box body according to any one of the preceding claims, **characterised in that** each air duct (18, 19, 20) is assigned an air supply device (24), whose inlet section (116, 116') is arranged on the discharge opening (16) of the transport cooling unit (14) and whose adjusting section (119, 119') is formed flexibly, articulatedly and/or telescopically in order to equalise an offset between the position of the entry opening (21, 22, 23) of the air duct (18, 19, 20) and the position of the discharge opening (16) of the transport cooling unit (14) such that after fastening the inlet section (116, 116') of the air supply device (24) to the discharge opening (16) of the transport cooling unit (14), said adjusting section with its outlet opening can be guided to the entry opening (21, 22, 23) of the assigned air duct (18, 19, 20).

5. Box body according to claim 4, **characterised in that** the air supply devices (24) have a common inlet section, which is connected to the discharge opening (16) of the transport cooling unit (14) and from which depart the adjusting sections (119, 119') leading to the air ducts (18, 19, 20).

6. Box body according to any one of the preceding claims, **characterised in that** the adjusting section (119, 119') of the air supply device (24) is adjustable flexibly, articulatedly and/or telescopically in the longitudinal direction (L_{K}) and/or transverse direction (Q_{HK}) and/or vertical direction (Q_{VK}) of the air supply device (24).

7. Box body according to any one of the preceding claims, **characterised in that** the air ducts (18, 19, 20) are formed from a tarpaulin material stretched under the roof (12) of the box body (5).

8. Box body according to any one of the preceding claims, **characterised in that**, proceeding from a first air duct (18), whose exit opening (25) has the greatest distance (B) from the discharge opening (16) of the transport cooling unit (14), in the case of each air duct (19, 20) arranged adjacent to one of the air ducts (18, 19, 20) in the direction of a first of the longitudinal side walls (6, 7), the exit opening (26, 27) is in each case arranged at a shorter distance (C, D) from the discharge opening (16) of the transport cooling unit (14) than the exit opening (25, 26) of the air duct (18, 19) adjacent thereto in the direction of the second longitudinal side wall (6).

9. Box body according to claim 8, **characterised in that** at least three air ducts (18, 19, 20) are provided, of which the first air duct (18) has the greatest distance (B) between its exit opening (25) and the discharge opening (16) of the transport cooling unit (14), the second air duct (19) arranged next-adjacent to the second longitudinal side wall (7) has the shortest distance (D) between its exit opening (27) and the discharge opening (16) of the transport cooling unit (14) and the third air duct (20) arranged between the first air duct (18) and the second air duct (19) has a distance (C) between its exit opening (26) and the discharge opening (16) of the transport cooling unit (14), which is shorter than the distance (C) between the exit opening (25) of the first air duct (18) and the discharge opening (16) of the transport cooling unit (14), but greater than the distance (D) between the exit opening (27) of the second air duct (19) and the discharge opening (16) of the transport cooling unit (14).

10. Box body according to any one of the preceding claims, **characterised in that** the transport cooling unit (14) is arranged with its discharge opening on the end face of the box body (5) and **in that** the air ducts (18, 19, 20) extend in the direction of the rear wall (9) of the box body (5) along its roof (12).

11. Box body according to claim 10, **characterised in**
- **that** the transport cooling unit (14) has at least one suction opening formed into the end wall for air to be suctioned from the loading space to be tempered,
- **that** a circulation wall (216) is provided spaced apart from the end wall (8) in the direction of the loading space (11) and defining an approach plane and between the end wall (8) and the approach plane is formed a central air return duct (215) extending in the vertical direction for guiding the air to be tempered from the loading space (11) to the suction opening,
- **that** between the end wall (8) and the approach plane, on the one hand, and at least one of the longitudinal side walls (6, 7), on the other hand, and a boundary (217) extending in the vertical direction is formed a lateral air return duct (222, 223), and
- **that** the cross-section of the lateral air return duct (222, 223) is restricted or sealed by a short-circuit locking device (224).

12. Box body according to claim 11, **characterised in that** the short-circuit locking device (224) restricts or seals the cross-section of the at least one lateral air return duct (222, 223) below the discharge opening (16) and/or below the suction opening (17).

13. Box body according to any one of claims 11 or 12, **characterised in that** the cross-section of the central air return duct (215) is restricted or sealed at the top by a sealing lip (226).

14. Box body according to any one of the preceding claims, **characterised in that** the sleeve elements (123) forming the air ducts (18, 19, 20) each comprise at least two mounting elements (319, 320, 321) spaced apart from one another in the longitudinal direction for mounting the air ducts (18, 19, 20) on the roof (12) and at least one tensioning element (315, 341) for holding at the at least two mounting elements (319, 320,321).

15. Box body according to any one of the preceding claims, **characterised in that** the at least one tensioning element (315, 341) is held tensioned between the at least two mounting elements (319, 320, 321) in the longitudinal direction of the tensioning element (315, 341) and **in that** the at least one sleeve element (123) is held counter to the force of gravity between the at least two mounting elements (319, 320, 321) by the at least one tensioning element (315, 341).

16. Box body according to claim 14 or 15, **characterised in that** the at least one tensioning element (315, 341) is a rope, in particular a steel rope and/or a strap and/or belt having in particular wires or wire ropes.

17. Box body according to any one of the preceding claims, **characterised in that** the sleeve element (123) is formed from a textile material.

## Revendications

1. Structure de coffre pour un véhicule utilitaire (1),
- la structure de coffre (5) avec un toit (12), avec deux parois latérales longitudinales (6, 7) supportant le toit (12), s'étendant en direction longitudinale de la structure de coffre (5), avec paroi frontale (8) reliant les parois latérales longitudinales (6, 7) dans une zone de face frontale de la structure de coffre (5) et avec une paroi arrière (9) reliant les parois latérales longitudinales (6, 7) à une zone de face arrière de la structure de coffre (5) définissant l'espace de chargement (11),
- une machine frigorifique de transport (14) étant prévue sur la structure de coffre (5), laquelle souffle de l'air tempéré dans l'espace de chargement (11) par au moins une ouverture d'évacuation (16),
- au moins un conduit de guidage d'air (18, 19, 20) étant prévu sur la face inférieure (15) du toit (12) associée à l'espace de chargement (11), lequel s'étend le long du toit (12) et est formé par un élément formant gaine (123) qui est maintenu sur le toit (12) et qui possède une ouverture d'entrée (21, 22, 23) associée à l'ouverture d'évacuation (16) de la machine frigorifique de transport (14) ainsi qu'une ouverture de sortie (25, 26, 27) formée à l'autre extrémité du conduit de guidage d'air (18, 19, 20) respectif,
et
- un dispositif de guidage d'air (24) étant prévu entre l'ouverture d'évacuation (16) et les ouvertures d'entrée (21, 22, 23) des conduits de guidage d'air (18, 19, 20), lequel guide le flux d'air tempéré (LG) soufflé par la machine frigorifique de transport (14) à travers l'ouverture d'évacuation (16) vers l'un des conduits de guidage d'air (18, 19, 20), **caractérisé en ce qu'**il comprend une section d'admission (116, 116'), qui est logée sur l'ouverture d'évacuation (16) de la machine frigorifique de transport (14) et par laquelle le flux d'air tempéré (LG) soufflé par l'ouverture d'évacuation (16) pénètre dans le dispositif de guidage d'air (24), et une section de réglage (119, 119'), à l'extrémité de laquelle, cette extrémité étant opposée à la section d'admission (116, 116'), est formée une section d'évacuation (120, 120') avec une ouverture d'évacuation à laquelle est raccordée l'ouverture d'entrée (21, 22, 23) du conduit de guidage d'air (18, 19, 20) respectif, la section de réglage (119, 119') étant conçue de manière flexible, articulée et/ou télescopique pour compenser un décalage entre la position de l'ouverture d'entrée (21, 22, 23) du conduit de guidage d'air (18, 19, 20) respectif et la position de l'ouverture d'évacuation (16) de la machine frigorifique de transport (14), de sorte qu'après la fixation de la section d'admission (116, 116') du dispositif de guidage d'air (24) sur l'ouverture d'évacuation (16) de la machine frigorifique de transport (14), la section d'évacuation (120, 120') peut être amenée, avec son ouverture d'évacuation, sur l'ouverture d'entrée (21, 22, 23) du conduit de guidage d'air (18, 19, 20) associé.

2. Structure de coffre selon la revendication 1, **caractérisée en ce que** l'on prévoit au moins deux conduits de guidage d'air (18, 19, 20) séparés entre eux, s'étendant le long du toit (12), qui sont formés chacun par un élément formant gaine (123).

3. Structure de coffre selon l'une des revendications précédentes, **caractérisée en ce que** l'élément formant gaine (123) formant le conduit de guidage d'air respectif (18, 19, 20) est tendu sous le toit (12) de la structure de coffre (1).

4. Structure de coffre selon l'une des revendications précédentes, **caractérisée en ce qu'**un dispositif de guidage d'air (24) est associé à chaque conduit de guidage d'air (18, 19, 20) dont la section d'admission (116, 116') est agencée sur l'ouverture d'évacuation (16) de la machine frigorifique de transport (14) et dont la section de réglage (119, 119'), pour compenser un décalage entre la position de l'ouverture d'entrée (21, 22, 23) du conduit de guidage d'air (18, 19, 20) et la position de l'ouverture d'évacuation (16) de la machine frigorifique de transport (14) est flexible, articulée et/ou télescopique, de sorte qu'après la fixation de la section d'admission (116, 116') du dispositif de guidage d'air (24) sur l'ouverture d'évacuation (16) de la machine frigorifique de transport (14) elle est susceptible d'être amenée, avec son ouverture d'évacuation, sur l'ouverture d'entrée (21, 22, 23) du conduit de guidage d'air (18, 19, 20) associé.

5. Structure de coffre selon la revendication 4, **caractérisée en ce que** les dispositifs de guidage d'air (24) présentent une section d'admission commune qui est raccordée à l'ouverture d'évacuation (16) de la machine frigorifique de transport (14) et de laquelle partent les sections de réglage (119, 119') conduisant aux conduits de guidage d'air (18, 19, 20).

6. Structure de coffre selon l'une des revendications précédentes, **caractérisée en ce que** la section de réglage (119, 119') du dispositif de guidage d'air (24) est réglable de manière flexible, articulée et/ou télescopique dans la direction longitudinale (L_{K} ) et/ou la direction transversale (Q_{HK} ) et/ou la direction de hauteur (Q_{VK} ) du dispositif de guidage d'air (24).

7. Structure de coffre selon l'une des revendications précédentes, **caractérisée en ce que** les conduits de guidage d'air (18, 19, 20) sont formés en un matériau de bâche tendu sous le toit (12) de la structure de coffre (5).

8. Structure de coffre selon l'une des revendications précédentes, **caractérisée en ce que**, en partant d'un premier conduit de guidage d'air (18), dont l'ouverture de sortie (25) est située à la distance maximale (B) par rapport à l'ouverture d'évacuation (16) de la machine frigorifique de transport (14), pour chaque conduit de guidage d'air (19, 20) agencé adjacent à l'un des conduits de guidage d'air (18, 19, 20) en direction d'une première paroi latérale longitudinale (6, 7), l'ouverture de sortie (26, 27) est agencée respectivement à une distance plus courte (C, D) par rapport à l'ouverture d'évacuation (16) de la machine frigorifique de transport (14) que l'ouverture de sortie (25, 26) du conduit de guidage d'air (18, 19) adjacent à celui-ci en direction de la deuxième paroi latérale longitudinale (6).

9. Structure de coffre selon la revendication 8, **caractérisée en ce que** l'on prévoit au moins trois conduits de guidage d'air (18, 19, 20), parmi lesquels le premier conduit de guidage d'air (18) présente la distance maximale (B) entre son ouverture de sortie (25) et l'ouverture d'évacuation (16) de la machine frigorifique de transport (14), le deuxième conduit de guidage d'air (19), agencé le plus près de la deuxième paroi latérale longitudinale (7), présente la distance la plus courte (D) entre son ouverture de sortie (27) et l'ouverture d'évacuation (16) de la machine frigorifique de transport (14) et le troisième conduit de guidage d'air (20), agencé entre le premier conduit de guidage d'air (18) et le deuxième conduit de guidage d'air (19), présente une distance (C) entre son ouverture de sortie (26) et l'ouverture d'évacuation (16) de la machine frigorifique de transport (14) qui est plus courte par rapport à la distance (C) entre l'ouverture de sortie (25) du premier conduit de guidage d'air (18) et l'ouverture d'évacuation (16) de la machine frigorifique de transport (14), mais plus grande par rapport à la distance (D) entre l'ouverture de sortie (27) du deuxième conduit de guidage d'air (19) et l'ouverture d'évacuation (16) de la machine frigorifique de transport (14).

10. Structure de coffre selon l'une des revendications précédentes, **caractérisée en ce que** la machine frigorifique de transport (14) est agencée avec son ouverture d'évacuation sur la face frontale de la structure de coffre (5) et **en ce que** les conduits de guidage d'air (18, 19, 20) s'étendent en direction de la paroi arrière (9) de la structure de coffre (5) le long de leur toit (12).

11. Structure de coffre selon la revendication 10, **caractérisée en ce que**
- la machine frigorifique de transport (14) présente au moins une ouverture d'aspiration intégrée dans la paroi frontale pour l'air à tempérer devant être aspiré hors de l'espace de chargement,
- l'on prévoit une paroi de circulation (216) espacée de la paroi frontale (8) en direction de l'espace de chargement (11) et définissant un plan de déplacement, et **en ce qu'**un conduit central de retour d'air (215), s'étendant en direction verticale pour conduire l'air à tempérer de l'espace de chargement (11) vers l'ouverture d'aspiration, est formé entre la paroi frontale (8) et le plan de déplacement,
- un conduit latéral de retour d'air (222, 223) est formé entre la paroi frontale (8) et le plan de déplacement d'une part et au moins l'une des parois latérales longitudinales (6, 7) d'autre part et une délimitation (217) s'étendant dans la direction verticale
et
- **en ce que** la section transversale du conduit latéral de retour d'air (222, 223) est limitée ou fermée par un verrouillage en court-circuit (224).

12. Structure de coffre selon la revendication 11, **caractérisée en ce que** le verrouillage en court-circuit (224) limite ou ferme la section transversale dudit au moins un conduit latéral de retour d'air (222, 223) en dessous de l'ouverture d'évacuation (16) et/ou en dessous de l'ouverture d'aspiration (17).

13. Structure de coffre selon l'une des revendications 11 ou 12, **caractérisée en ce que** la section transversale du conduit central de retour d'air (215) est limitée ou fermée vers le haut par une lèvre d'étanchéité (226).

14. Structure de coffre selon l'une des revendications précédentes, **caractérisée en ce que** les éléments formant gaine (123) formant les conduits de guidage d'air (18, 19, 20) comprennent chacun au moins deux éléments de montage (319, 320, 321) espacés entre eux dans la direction longitudinale pour le montage des conduits de guidage d'air (18, 19, 20) sur le toit (12) et au moins un élément de serrage (315, 341) pour le maintien sur lesdits au moins deux éléments de montage (319, 320, 321).

15. Structure de coffre selon l'une des revendications précédentes, **caractérisée en ce que** ledit au moins un élément de serrage (315, 341) est maintenu tendu dans la direction longitudinale de l'élément de serrage (315, 341) entre lesdits au moins deux éléments de montage (319, 320, 321) et **en ce que** ledit au moins un élément formant gaine (123) est maintenu entre lesdits au moins deux éléments de montage (319, 320, 321) par le au moins un élément de serrage (315, 341) contre la force de gravité.

16. Structure de coffre selon la revendication 14 ou 15, **caractérisée en ce que** ledit au moins un élément de serrage (315, 341) est un câble, en particulier un câble en acier et/ou une bande et/ou une sangle présentant en particulier des fils ou des câbles métalliques.

17. Structure de coffre selon l'une des revendications précédentes, **caractérisée en ce que** l'élément formant gaine (123) est formé d'un matériau textile.
